(19) Europäisches Patentamt / European Patent Office / Office européen des brevets

(11) **EP 3 831 153 B1**

(12) **EUROPEAN PATENT SPECIFICATION**

(45) Date of publication and mention
of the grant of the patent:
**20.03.2024  Bulletin 2024/12**

(21) Application number: **19864722.4**

(22) Date of filing: **23.09.2019**

(51) International Patent Classification (IPC):
$H04L\ 1/1829$ (2023.01)   $H04L\ 1/1867$ (2023.01)
$H04L\ 27/00$ (2006.01)   $H04L\ 5/00$ (2006.01)
$H04W\ 74/00$ (2009.01)   $H04W\ 74/08$ (2024.01)

(52) Cooperative Patent Classification (CPC):
**H04W 74/008; H04L 1/1854; H04L 1/1887;
H04L 5/0044; H04L 5/0078; H04L 27/0006;**
H04W 74/0808

(86) International application number:
**PCT/KR2019/012335**

(87) International publication number:
**WO 2020/067687 (02.04.2020 Gazette 2020/14)**

(54) **METHOD AND APPARATUS FOR CONTENTION WINDOW SIZE ADAPTATION OF NR UNLICENSED**

VERFAHREN UND VORRICHTUNG ZUR ANPASSUNG DER GRÖSSE EINES
KONKURRENZFENSTERS VON UNLIZENZIERTEM NEUFUNK

PROCÉDÉ ET APPAREIL D'ADAPTATION DE TAILLE DE FENÊTRE DE CONTENTION POUR
TECHNOLOGIE 5G NR SANS LICENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:
| 24.09.2018 | US 201862735460 P |
| 05.10.2018 | US 201862741959 P |
| 25.10.2018 | US 201862750610 P |
| 28.11.2018 | US 201862772221 P |
| 12.12.2018 | US 201862778681 P |
| 16.01.2019 | US 201962793087 P |
| 06.06.2019 | US 201962858130 P |
| 08.08.2019 | US 201962884487 P |
| 13.09.2019 | US 201916570835 |

(43) Date of publication of application:
**09.06.2021  Bulletin 2021/23**

(73) Proprietor: **Samsung Electronics Co., Ltd.
Suwon-si 16677 (KR)**

(72) Inventors:
• **LI, Yingzhe
Gyeonggi-do 16677 (KR)**
• **SI, Hongbo
Gyeonggi-do 16677 (KR)**

(74) Representative: **Gulde & Partner
Patent- und Rechtsanwaltskanzlei mbB
Wallstraße 58/59
10179 Berlin (DE)**

(56) References cited:
| WO-A1-2017/030417 | WO-A1-2017/164647 |
| US-A1- 2017 086 225 | US-A1- 2018 139 779 |
| US-A1- 2018 160 447 | US-A1- 2018 160 447 |
| US-A1- 2018 242 360 | US-A1- 2018 254 858 |

**Description**

[Technical Field]

The present disclosure relates generally to contention window size adaptation. Specifically, the present disclosure relates to the HARQ-ACK feedback resource determination for NR-U CWS(Contention Window Size) adaptation, the NR-U CWS adaptation rule, and the NR-U CWS for wide-band operations of NR-U in an advanced wireless communication system.

[Background Art]

To meet the demand for wireless data traffic having increased since deployment of 4th generation (4G) communication systems, efforts have been made to develop an improved 5th generation (5G) or pre-5G communication system. The 5G or pre-5G communication system is also called a 'beyond 4G network' or a 'post long term evolution (LTE) system'. The 5G communication system is considered to be implemented in higher frequency (mmWave) bands, e.g., 60 GHz bands, so as to accomplish higher data rates. To decrease propagation loss of the radio waves and increase the transmission distance, beamforming, massive multiple-input multiple-output (MIMO), full dimensional MIMO (FD-MIMO), array antenna, analog beamforming, and large scale antenna techniques are discussed with respect to 5G communication systems. In addition, in 5G communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancellation and the like. In the 5G system, hybrid frequency shift keying (FSK) and Feher's quadrature amplitude modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through connection with a cloud server, has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply 5G communication systems to IoT networks. For example, technologies such as a sensor network, MTC, and M2M communication may be implemented by beamforming, MIMO, and array antennas. Application of a cloud RAN as the above-described big data processing technology may also be considered to be as an example of convergence between the 5G technology and the IoT technology.

As described above, various services can be provided according to the development of a wireless communication system, and thus a method for easily providing such services is required.

US 2018/160447 A1, US 2018/242360 A1, and WO 2017/164647 A1 are concerned with determining a contention window based on HARQ-ACK values of HARQ-ACK feedback corresponding to downlink channel transmissions in reference sub-frames among one or more adjacent subframes.

[Disclosure of Invention]

[Solution to Problem]

The invention is set out in the appended set of claims. Embodiments of the present invention are defined by the dependent claims and provide methods and apparatuses for contention window size Adaptation of NR unlicensed in an advanced wireless communication system. Where the following description uses the word "may" in conjunction with certain features of the independent claims, this shall not be interpreted as meaning that those features are optional. The broadest scope of the invention is defined by the independent claims.

[Brief Description of Drawings]

For a more complete understanding of the present disclosure and its advantages, reference is now made to the following description taken in conjunction with the accompanying drawings, in which like reference numerals represent like parts:

FIGURE 1 illustrates an example wireless network according to embodiments of the present disclosure.
FIGURE 2 illustrates an example gNB according to embodiments of the present disclosure.
FIGURE 3 illustrates an example UE according to embodiments of the present disclosure.
FIGURE 4A illustrates a high-level diagram of an orthogonal frequency division multiple access transmit path according to embodiments of the present disclosure.
FIGURE 4B illustrates a high-level diagram of an orthogonal frequency division multiple access receive path according to embodiments of the present disclosure.
FIGURE 5 illustrates a transmitter block diagram for a PDSCH in a subframe according to embodiments of the present disclosure.
FIGURE 6 illustrates a receiver block diagram for a PDSCH in a subframe according to embodiments of the present disclosure.
FIGURE 7 illustrates a transmitter block diagram for a PUSCH in a subframe according to embodiments of the present disclosure.
FIGURE 8 illustrates a receiver block diagram for a PUSCH in a subframe according to embodiments of the present disclosure.
FIGURE 9 illustrates an example multiplexing of two slices according to embodiments of the present disclosure.
FIGURE 10 illustrates an example set of slots/mini-slots/partial slots according to embodiments of the present disclosure.
FIGURE 11 illustrates another example set of slots/mini-slots/partial slots according to embodiments of the present disclosure.
FIGURE 12 illustrates yet another example set of slots/mini-slots/partial slots according to embodiments of the present disclosure.
FIGURE 13 illustrates yet another example set of slots/mini-slots/partial slots according to embodiments of the present disclosure.
FIGURE 14 illustrates yet another example set of slots/mini-slots/partial slots according to embodiments of the present disclosure.
FIGURE 15 illustrates yet another example set of slots/mini-slots/partial slots according to embodiments of the present disclosure.
FIGURE 16 illustrates yet another example set of slots/mini-slots/partial slots according to embodiments of the present disclosure.
FIGURE 17 illustrates yet another example set of slots/mini-slots/partial slots according to embodiments of the present disclosure.
FIGURE 18 illustrates yet another example set of slots/mini-slots/partial slots according to embodiments of the present disclosure.
FIGURE 19 illustrates yet another example set of slots/mini-slots/partial slots according to embodiments of the present disclosure.
FIGURE 20 illustrates yet another example set of slots/mini-slots/partial slots according to embodiments of the present disclosure.
FIGURE 21 illustrates yet another example set of slots/mini-slots/partial slots according to embodiments of the present disclosure.
FIGURE 22 illustrates yet another example set of slots/mini-slots/partial slots according to embodiments of the present disclosure.
FIGURE 23 illustrates yet another example set of slots/mini-slots/partial slots according to embodiments of the present disclosure.
FIGURE 24 illustrates an example CB mapping according to embodiments of the present disclosure.
FIGURE 25 illustrates a flowchart for listen-before-talk based channel access procedure in LAA.
FIGURE 26 illustrates a flowchart of a method for multi-beam operation according to embodiments of the present disclosure.
FIGURE 27 is a block diagram illustrating the structure of a gNB according to an embodiment of the present disclosure.
FIGURE 28 is a block diagram illustrating the structure of a user equipment (UE) according to an embodiment of the present disclosure.

[Best Mode for Carrying out the Invention]

In one embodiment, a base station (BS) in a wireless communication system is provided. The BS comprises a transceiver configured to receive, from at least one user equipment (UE) via an uplink channel, a set of hybrid automatic repeat request-acknowledge/negative acknowledge (HARQ-ACK/NACK) responses corresponding to downlink transmissions transmitted to the at least one UE. The BS further comprise a processor operably connected to the transceiver, the processor configured to: determine a set of time and frequency domain resources that contains unicast physical downlink shared channel (PDSCH) transmissions in a downlink transmission burst that is previously transmitted to the at least one UE; adjust a contention window size (CWS) based on a subset of the set of HARQ-ACK/NACK responses, the subset of HARQ-ACK/NACL responses corresponding to the unicast PDSCH transmissions on the determined set of time and frequency domain resources; and perform a listen-before-talk (LBT) operation with a configurable sensing duration based on the adjusted CWS. The BS comprises the transceiver that is further configured to transmit via a downlink channel, a downlink transmission based on the LBT operation.

In one embodiment, the set of time and frequency domain resources comprise, based on the downlink transmission burst, at least one of a set of slots, a set of mini-slots, or a set of partial slots and wherein: a slot of the set of slots is determined on a non-punctured PDSCH with a duration of 14 orthogonal frequency division multiplexing (OFDM) symbols; a mini-slot of the set of mini-slots is determined on a non-punctured PDSCH with a duration smaller than the duration of 14 OFDM symbols; and a partial slot of the set of partial slots is determined on a punctured PDSCH with a scheduled duration equal to or smaller than the duration of 14 OFDM symbols.

In one embodiment, the set of time and frequency domain resources is determined from a beginning of the downlink transmission burst that is previously transmitted until end of a set of first K >= 1 slots or mini-slots that includes at least one unicast PDSCH transmission of at least one scheduled UE in the downlink transmission burst that is previously transmitted.

In one embodiment, the set of time and frequency domain resources is determined from a beginning of the downlink transmission burst that is previously transmitted until end of a set of first K >= 1 mini-slots or partial slots of the downlink transmission burst that includes unicast PDSCH transmissions.

In one embodiment, the downlink transmission burst that is previously transmitted is a latest transmission burst when the BS performs a CWS(contention window size) adjust decision, and wherein the set of HARQ-ACK/NACK feedback resources corresponding to the determined set of time and frequency domain resources is expected to be available or have been received.

In one embodiment, the BS comprises the processor that is further configured to adjust the CWS based on: a fraction of NACK'ed transport block (TB), a TB with code block group (CBG) based HARQ-ACK being NACK'ed when a fraction of NACK'ed CBG exceeds a predetermined threshold; or a weighted average fraction of NACK bits, wherein: the CWS is increased to a next available value when the fraction of NACK'ed CBG exceeds the predetermined threshold; and the CWS is reset to a minimum value when the fraction of NACK'ed CBG is less than or equal to the predetermined threshold.

In one embodiment, the predetermined threshold is a non-decreasing threshold in accordance with a ratio between a number of expected HARQ-ACK values received up to a timing in which the BS performs a CWS adjust operation and a number of HARQ-ACK values corresponding to the set of HARQ-ACK/NACK feedback resources to adjust the CWS.

In one embodiment, each ACK/NACK feedback bit of the set of HARQ-ACK/NACK feedback resources is provided to adjust the CWS in at most onetime instance.

In one embodiment, the BS comprises the processor that is further configured to maintain the CWS without adjustment based on a predetermined maximum channel occupancy time (COT) when the set of HARQ-ACK/NACK feedback resources is not available, and wherein the set of HARQ-ACK/NACK feedback resources corresponds to the set of time and frequency domain resources of the downlink transmission burst that is previously transmitted.

In one embodiment, the BS comprises the processor that is further configured to receive, from the at least one UE, a radio resource measurement (RRM) report including at least one of a signal strength indicator, a channel occupancy report, or a measurement report associated with a new radio unlicensed (NR-U) wake-up signal. The BS comprises the processor that is further configured to adjust the CWS based on the RRM report and a threshold associated with a measurement quantity.

In another embodiment, a method of a base station (BS) in a wireless communication system is provided. The method comprises: receiving, from at least one user equipment (UE) via an uplink channel, a set of hybrid automatic repeat request-acknowledge/negative acknowledge (HARQ-ACK/NACK) responses corresponding to downlink transmissions transmitted to the at least one UE; determining a set of time and frequency domain resources that contains non-broadcast physical downlink shared channel (PDSCH) transmissions on a downlink transmission burst that is previously transmitted to the UE; adjusting a contention window size (CWS) based on a subset of the set of HARQ-ACK/NACK responses, the subset of HARQ-ACK/NACK response corresponding to the unicast PDSCH transmissions on the determined set of time and frequency domain resources; performing a listen before-talk (LBT) operation with a configurable sensing duration based on the adjusted CWS; and transmitting via a downlink channel a downlink transmission based on the LBT operation.

In yet another embodiment, a user equipment (UE) in a wireless communication system is provided. The UE comprises a transceiver configured to transmit, to a base station (BS) via an uplink channel, a set of hybrid automatic repeat request-acknowledge/negative acknowledge (HARQ-ACK/NACK) responses corresponding to downlink transmissions received from the BS, wherein a set of HARQ-ACK/NACK feedback resources corresponds to the downlink transmissions on a set of time and frequency domain resources based on a downlink transmission burst that is previously received from the BS; and receive, from the BS via a downlink channel, the downlink transmission based on an listen-before-talk (LBT) operation at the BS, wherein the LBT operation with a configurable sensing duration is determined based on a contention window size (CWS) that is adjusted based on the set of HARQ-ACK/NACK feedback resources.

[Mode for the Invention]

The following description with reference to accompanying drawings is provided to assist in a comprehensive understanding of various embodiments of the disclosure as defined by the claims and their equivalents. It includes various specific details to assist in that understanding but these are to be regarded as merely exemplary.

It is to be understood that the singular forms "a," "an," and "the" include plural referents unless the context clearly dictates otherwise. Thus, for example, reference to "a component surface" includes reference to one or more of such surfaces.

While describing the embodiments, technical content that is well known in the related fields and not directly related to the disclosure will not be provided. By omitting redundant descriptions, the essence of the disclosure will not be obscured and may be clearly explained.

For the same reasons, components may be exaggerated, omitted, or schematically illustrated in drawings for clarity. Also, the size of each component does not completely reflect the actual size. In the drawings, like reference numerals denote like elements.

As used herein, the term "and/or" includes any and all combinations of one or more of the associated listed items. Expressions such as "at least one of," when preceding a list of elements, modify the entire list of elements and do not modify the individual elements of the list. Throughout the disclosure, the expression "at least one of a, b or c" indicates only a, only b, only c, both a and b, both a and c, both b and c, all of a, b, and c, or variations thereof. Advantages and features of one or more embodiments of the disclosure and methods of accomplishing the same may be understood more readily by reference to the following detailed description of the embodiments and the accompanying drawings. In this regard, the present embodiments may have different forms and should not be construed as being limited to the descriptions set forth herein. Rather, these embodiments are provided so that this disclosure will be thorough and complete and will fully convey the concept of the present embodiments to one of ordinary skill in the art, and the disclosure will only be defined by the appended claims.

Here, it will be understood that combinations of blocks in flowcharts or process flow diagrams may be performed by computer program instructions. Since these computer program instructions may be loaded into a processor of a general purpose computer, a special purpose computer, or another programmable data processing apparatus, the instructions, which are performed by a processor of a computer or another programmable data processing apparatus, create units for performing functions described in the flowchart block(s). The computer program instructions may be stored in a computer-usable or computer-readable memory capable of directing a computer or another programmable data processing apparatus to implement a function in a particular manner, and thus the instructions stored in the computer-usable or computer-readable memory may also be capable of producing manufacturing items containing instruction units for performing the functions described in the flowchart block(s). The computer program instructions may also be loaded into a computer or another programmable data processing apparatus, and thus, instructions for operating the computer or the other programmable data processing apparatus by generating a computer-executed process when a series of operations are performed in the computer or the other programmable data processing apparatus may provide operations for performing the functions described in the flowchart block(s).

In addition, each block may represent a portion of a module, segment, or code that includes one or more executable instructions for executing specified logical function(s). It should also be noted that in some alternative implementations, functions mentioned in blocks may occur out of order. For example, two blocks illustrated consecutively may actually be executed substantially concurrently, or the blocks may sometimes be performed in a reverse order according to the corresponding function.

Here, the term "unit" in the embodiments of the disclosure means a software component or hardware component such as a field-programmable gate array (FPGA) or an application-specific integrated circuit (ASIC) and performs a specific function. However, the term "unit" is not limited to software or hardware. The "unit" may be formed so as to be in an addressable storage medium, or may be formed so as to operate one or more processors. Thus, for example, the term "unit" may refer to components such as software components, object-oriented software components, class components, and task components, and may include processes, functions, attributes, procedures, subroutines, segments of program code, drivers, firmware, micro codes, circuits, data, a database, data structures, tables, arrays, or variables. A function provided by the components and "units" may be associated with a smaller number of components and "units", or may be divided into additional components and "units". Furthermore, the components and "units" may be embodied to reproduce one or more central processing units (CPUs) in a device or security multimedia card. Also, in the embodiments, the "unit" may include at least one processor. In the disclosure, a controller may also be referred to as a processor.

The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as future uses of such defined words and phrases.

In a wireless communication network, a network access and a radio resource management (RRM) are enabled by physical layer synchronization signals and higher (MAC) layer procedures. In particular, a user equipment (UE) attempts to detect the presence of synchronization signals along with at least one cell identification (ID) for initial access. Once the UE is in the network and associated with a serving cell, the UE monitors several neighboring cells by attempting to detect their synchronization signals and/or measuring the associated cell-specific reference signals (RSs). For next generation cellular systems such as third generation partnership-new radio access or interface (3GPP-NR), efficient and unified radio resource acquisition or tracking mechanism which works for various use cases such as enhanced mobile broadband (eMBB), ultra-reliable low latency (URLLC), massive machine type communication (mMTC), each corresponding to a different coverage requirement and frequency bands with different propagation losses is desirable.

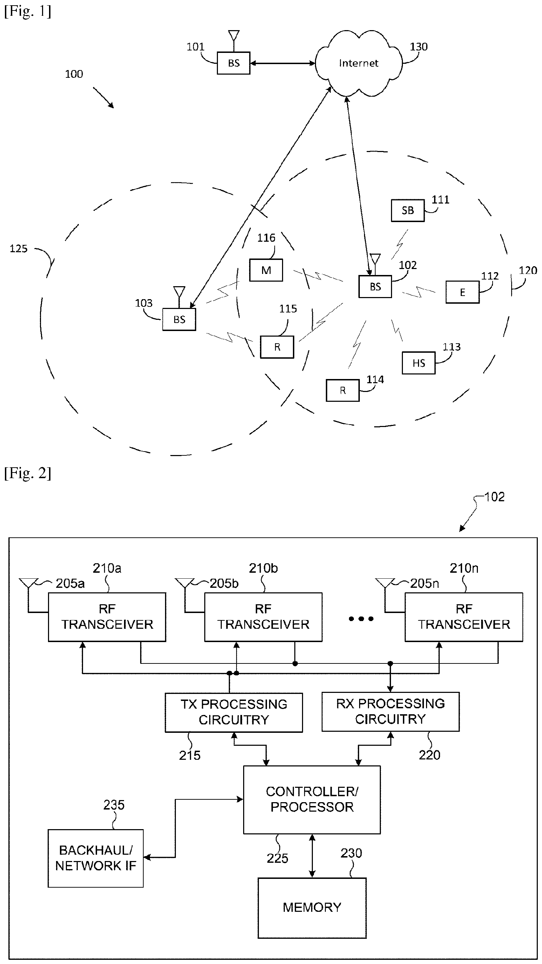

FIGURE 1 through FIGURE 26, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

The following documents and standards descriptions are hereby incorporated by reference into the present disclosure as if fully set forth herein: 3GPP TS 36.211 v13.2.0, "E-UTRA, Physical channels and modulation;" 3GPP TS 36.212 v13.2.0, "E-UTRA, Multiplexing and Channel coding;" 3GPP TS 36.213 v13.2.1, "E-UTRA, Physical Layer Procedures;" 3GPP TS 36.321 v13.2.0, "E-UTRA, Medium Access Control (MAC) protocol specification;" 3GPP TS 36.331 v13.2.0, "E-UTRA, Radio Resource Control (RRC) Protocol Specification;" ETSI EN 301 893 V2.1.1, "5 GHz RLAN; Harmonized Standard covering the essential requirements of article 3.2 of Directive 2014/53/EU," 2017; ETSI EN 302 567 V2.1.1, "Multiple-Gigabit/s radio equipment operating in the 60 GHz band; Harmonized Standard covering the essential requirements of article 3.2 of Directive 2014/53/EU," 2017; 3GPP TR 36.889 V13.0.0, "Study on Licensed-Assisted Access to Unlicensed Spectrum," 2015; 3GPP TS 36.213 V15.0.0., "Evolved Universal Terrestrial Radio Access (E-UTRA); Physical layer procedures (Release 15)," 2017; IEEE Std 802.11-2016, "Part 11: Wireless LAN Medium Access Control (MAC) and Physical Layer (PHY) Specifications," 2016; 3GPP TS 38.211 v15.2.0, "NR, Physical channels and modulation;" 3GPP TS 38.212 v15.2.0, "NR, Multiplexing and Channel coding;" 3GPP TS 38.213 v15.2.0, "NR, Physical Layer Procedures for Control;" 3GPP TS 38.214 v15.2.0, "NR, Physical Layer Procedures For Data;" 3GPP TS 38.321 v15.2.0, "NR, Medium Access Control (MAC) protocol specification;" and 3GPP TS 38.331 v15.2.0, "NR, Radio Resource Control (RRC) Protocol Specification."

In the following, for brevity, both FDD(Frequency Division Duplexing) and TDD(Time Division Duplexing) are considered as the duplex method for both DL and UL signaling.

Although exemplary descriptions and embodiments to follow assume orthogonal frequency division multiplexing (OFDM) or orthogonal frequency division multiple access (OFDMA), the present disclosure can be extended to other OFDM-based transmission waveforms or multiple access schemes such as filtered OFDM (F-OFDM).

The present disclosure covers several components which can be used in conjunction or in combination with one another, or can operate as standalone schemes.

To meet the demand for wireless data traffic having increased since deployment of 4G communication systems, efforts have been made to develop an improved 5G or pre-5G communication system. Therefore, the 5G or pre-5G communication system is also called a "beyond 4G network" or a "post LTE system."

The 5G communication system is considered to be implemented in higher frequency (mmWave) bands, e.g., 60GHz bands, so as to accomplish higher data rates. To decrease propagation loss of the radio waves and increase the transmission coverage, the beamforming, massive multiple-input multiple-output (MIMO), full dimensional MIMO (FD-MIMO), array antenna, an analog beam forming, large scale antenna techniques and the like are discussed in 5G communication systems.

In addition, in 5G communication systems, development for system network improvement is under way based on advanced small cells, cloud radio access networks (RANs), ultra-dense networks, device-to-device (D2D) communication, wireless backhaul communication, moving network, cooperative communication, coordinated multi-points (CoMP) transmission and reception, interference mitigation and cancellation and the like.

In the 5G system, hybrid frequency shift keying and quadrature amplitude modulation (FQAM) and sliding window superposition coding (SWSC) as an adaptive modulation and coding (AMC) technique, and filter bank multi carrier (FBMC), non-orthogonal multiple access (NOMA), and sparse code multiple access (SCMA) as an advanced access technology have been developed.

FIGURES 1-4B below describe various embodiments implemented in wireless communications systems and with the use of orthogonal frequency division multiplexing (OFDM) or orthogonal frequency division multiple access (OFDMA) communication techniques. The descriptions of FIGURES 1-3 are not meant to imply physical or architectural limitations to the manner in which different embodiments may be implemented. Different embodiments of the present disclosure may be implemented in any suitably-arranged communications system.

FIGURE 1 illustrates an example wireless network according to embodiments of the present disclosure. The embodiment of the wireless network shown in FIGURE 1 is for illustration only. Other embodiments of the wireless network 100 could be used without departing from the scope of the present disclosure.

As shown in FIGURE 1, the wireless network includes an gNB 101, an gNB 102, and an gNB 103. The gNB 101 communicates with the gNB 102 and the gNB 103. The gNB 101 also communicates with at least one network 130, such as the Internet, a proprietary Internet Protocol (IP) network, or other data network.

The gNB 102 provides wireless broadband access to the network 130 for a first plurality of user equipments (UEs) within a coverage area 120 of the gNB 102. The first plurality of UEs includes a UE 111, which may be located in a small business (SB); a UE 112, which may be located in an enterprise (E); a UE 113, which may be located in a WiFi hotspot (HS); a UE 114, which may be located in a first residence (R); a UE 115, which may be located in a second residence (R); and a UE 116, which may be a mobile device (M), such as a cell phone, a wireless laptop, a wireless PDA, or the like. The gNB 103 provides wireless broadband access to the network 130 for a second plurality of UEs within a coverage area 125 of the gNB 103. The second plurality of UEs includes the UE 115 and the UE 116. In some embodiments, one or more of the gNBs 101-103 may communicate with each other and with the UEs 111-116 using 5G, LTE, LTE-A, WiMAX, WiFi, or other wireless communication techniques.

Depending on the network type, the term "base station" or "BS" can refer to any component (or collection of components) configured to provide wireless access to a network, such as transmit point (TP), transmit-receive point (TRP), an enhanced base station (eNodeB or eNB), a 5G base station (gNB), a macrocell, a femtocell, a WiFi access point (AP), or other wirelessly enabled devices. Base stations may provide wireless access in accordance with one or more wireless communication protocols, e.g., 5G 3GPP new radio interface/access (NR), long term evolution (LTE), LTE advanced (LTE-A), high speed packet access (HSPA), Wi-Fi 802.11a/b/g/n/ac, etc. For the sake of convenience, the terms "BS" and "TRP" are used interchangeably in this patent document to refer to network infrastructure components that provide wireless access to remote terminals. Also, depending on the network type, the term "user equipment" or "UE" can refer to any component such as "mobile station," "subscriber station," "remote terminal," "wireless terminal," "receive point," or "user device." For the sake of convenience, the terms "user equipment" and "UE" are used in this patent document to refer to remote wireless equipment that wirelessly accesses a BS, whether the UE is a mobile device (such as a mobile telephone or smartphone) or is normally considered a stationary device (such as a desktop computer or vending machine).

Dotted lines show the approximate extents of the coverage areas 120 and 125, which are shown as approximately circular for the purposes of illustration and explanation only. It should be clearly understood that the coverage areas associated with gNBs, such as the coverage areas 120 and 125, may have other shapes, including irregular shapes, depending upon the configuration of the gNBs and variations in the radio environment associated with natural and man-made obstructions.

As described in more detail below, one or more of the UEs 111-116 include circuitry, programing, or a combination thereof, for efficient contention window size adaptation of NR unlicensed in an advanced wireless communication system. In certain embodiments, and one or more of the gNBs 101-103 includes circuitry, programing, or a combination thereof, for CSI acquisition based on space-frequency compression in an advanced wireless communication system.

Although FIGURE 1 illustrates one example of a wireless network, various changes may be made to FIGURE 1. For example, the wireless network could include any number of gNBs and any number of UEs in any suitable arrangement. Also, the gNB 101 could communicate directly with any number of UEs and provide those UEs with wireless broadband access to the network 130. Similarly, each gNB 102-103 could communicate directly with the network 130 and provide UEs with direct wireless broadband access to the network 130. Further, the gNBs 101, 102, and/or 103 could provide access to other or additional external networks, such as external telephone networks or other types of data networks.

FIGURE 2 illustrates an example gNB 102 according to embodiments of the present disclosure. The embodiment of the gNB 102 illustrated in FIGURE 2 is for illustration only, and the gNBs 101 and 103 of FIGURE 1 could have the same or similar configuration. However, gNBs come in a wide variety of configurations, and FIGURE 2 does not limit the scope of the present disclosure to any particular implementation of an gNB.

As shown in FIGURE 2, the gNB 102 includes multiple antennas 205a-205n, multiple RF transceivers 210a-210n, transmit (TX) processing circuitry 215, and receive (RX) processing circuitry 220. The gNB 102 also includes a controller/processor 225, a memory 230, and a backhaul or network interface 235.

The RF transceivers 210a-210n receive, from the antennas 205a-205n, incoming RF signals, such as signals transmitted by UEs in the network 100. The RF transceivers 210a-210n down-convert the incoming RF signals to generate IF or baseband signals. The IF or baseband signals are sent to the RX processing circuitry 220, which generates processed baseband signals by filtering, decoding, and/or digitizing the baseband or IF signals. The RX processing circuitry 220 transmits the processed baseband signals to the controller/processor 225 for further processing.

The TX processing circuitry 215 receives analog or digital data (such as voice data, web data, e-mail, or interactive video game data) from the controller/processor 225. The TX processing circuitry 215 encodes, multiplexes, and/or digitizes the outgoing baseband data to generate processed baseband or IF signals. The RF transceivers 210a-210n receive the outgoing processed baseband or IF signals from the TX processing circuitry 215 and up-converts the baseband or IF signals to RF signals that are transmitted via the antennas 205a-205n.

The controller/processor 225 can include one or more processors or other processing devices that control the overall operation of the gNB 102. For example, the controller/processor 225 could control the reception of forward channel signals and the transmission of reverse channel signals by the RF transceivers 210a-210n, the RX processing circuitry 220, and the TX processing circuitry 215 in accordance with well-known principles. The controller/processor 225 could support additional functions as well, such as more advanced wireless communication functions.

For instance, the controller/processor 225 could support beam forming or directional routing operations in which outgoing signals from multiple antennas 205a-205n are weighted differently to effectively steer the outgoing signals in a desired direction. Any of a wide variety of other functions could be supported in the gNB 102 by the controller/processor 225.

The controller/processor 225 is also capable of executing programs and other processes resident in the memory 230, such as an OS. The controller/processor 225 can move data into or out of the memory 230 as required by an executing process.

The controller/processor 225 is also coupled to the backhaul or network interface 235. The backhaul or network interface 235 allows the gNB 102 to communicate with other devices or systems over a backhaul connection or over a network. The interface 235 could support communications over any suitable wired or wireless connection(s). For example, when the gNB 102 is implemented as part of a cellular communication system (such as one supporting 5G, LTE, or LTE-A), the interface 235 could allow the gNB 102 to communicate with other gNBs over a wired or wireless backhaul connection. When the gNB 102 is implemented as an access point, the interface 235 could allow the gNB 102 to communicate over a wired or wireless local area network or over a wired or wireless connection to a larger network (such as the Internet). The interface 235 includes any suitable structure supporting communications over a wired or wireless connection, such as an Ethernet or RF transceiver.

The memory 230 is coupled to the controller/processor 225. Part of the memory 230 could include a RAM, and another part of the memory 230 could include a Flash memory or other ROM.

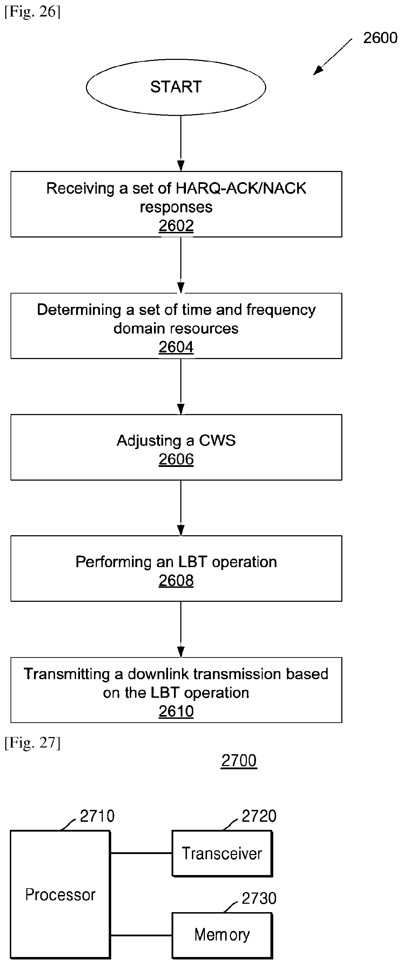

Although FIGURE 2 illustrates one example of gNB 102, various changes may be made to FIGURE 2. For example, the gNB 102 could include any number of each component shown in FIGURE 2. As a particular example, an access point could include a number of interfaces 235, and the controller/processor 225 could support routing functions to route data between different network addresses. As another particular example, while shown as including a single instance of TX processing circuitry 215 and a single instance of RX processing circuitry 220, the gNB 102 could include multiple instances of each (such as one per RF transceiver). Also, various components in FIGURE 2 could be combined, further subdivided, or omitted and additional components could be added according to particular needs. The gNB 102 illustrated in FIGURE 2 may correspond to the gNB 2700 illustrated in FIGURE 27. For example, the controller/processor 225 may correspond to the processor 2710.

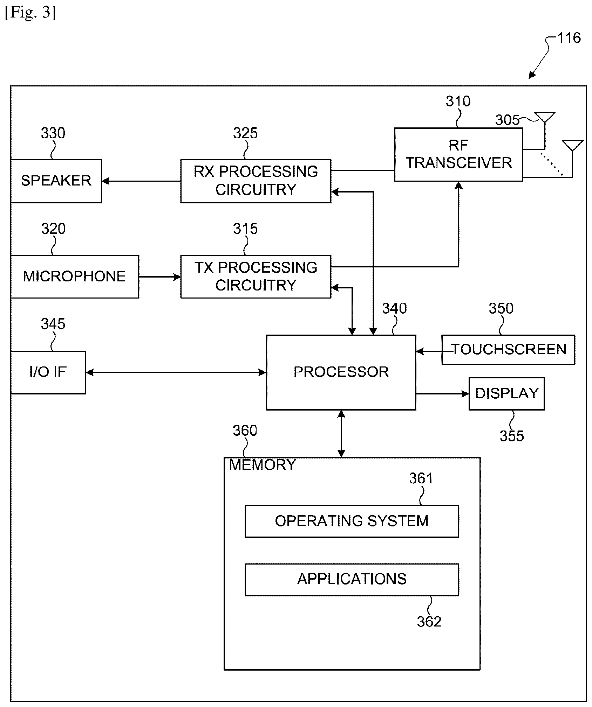

FIGURE 3 illustrates an example UE 116 according to embodiments of the present disclosure. The embodiment of the UE 116 illustrated in FIGURE 3 is for illustration only, and the UEs 111-115 of FIGURE 1 could have the same or similar configuration. However, UEs come in a wide variety of configurations, and FIGURE 3 does not limit the scope of the present disclosure to any particular implementation of a UE.

As shown in FIGURE 3, the UE 116 includes an antenna 305, a radio frequency (RF) transceiver 310, TX processing circuitry 315, a microphone 320, and receive (RX) processing circuitry 325. The UE 116 also includes a speaker 330, a processor 340, an input/output (I/O) interface (IF) 345, a touchscreen 350, a display 355, and a memory 360. The memory 360 includes an operating system (OS) 361 and one or more applications 362.

The RF transceiver 310 receives, from the antenna 305, an incoming RF signal transmitted by an gNB of the network 100. The RF transceiver 310 down-converts the incoming RF signal to generate an intermediate frequency (IF) or baseband signal. The IF or baseband signal is sent to the RX processing circuitry 325, which generates a processed baseband signal by filtering, decoding, and/or digitizing the baseband or IF signal. The RX processing circuitry 325 transmits the processed baseband signal to the speaker 330 (such as for voice data) or to the processor 340 for further processing (such as for web browsing data).

The TX processing circuitry 315 receives analog or digital voice data from the microphone 320 or other outgoing baseband data (such as web data, e-mail, or interactive video game data) from the processor 340. The TX processing circuitry 315 encodes, multiplexes, and/or digitizes the outgoing baseband data to generate a processed baseband or IF signal. The RF transceiver 310 receives the outgoing processed baseband or IF signal from the TX processing circuitry 315 and up-converts the baseband or IF signal to an RF signal that is transmitted via the antenna 305.

The processor 340 can include one or more processors or other processing devices and execute the OS 361 stored in the memory 360 in order to control the overall operation of the UE 116. For example, the processor 340 could control the reception of forward channel signals and the transmission of reverse channel signals by the RF transceiver 310, the RX processing circuitry 325, and the TX processing circuitry 315 in accordance with well-known principles. In some embodiments, the processor 340 includes at least one microprocessor or microcontroller.

The processor 340 is also capable of executing other processes and programs resident in the memory 360, such as processes for CSI reporting on uplink channel. The processor 340 can move data into or out of the memory 360 as required by an executing process. In some embodiments, the processor 340 is configured to execute the applications 362 based on the OS 361 or in response to signals received from gNBs or an operator. The processor 340 is also coupled to the I/O interface 345, which provides the UE 116 with the ability to connect to other devices, such as laptop computers and handheld computers. The I/O interface 345 is the communication path between these accessories and the processor 340.

The processor 340 is also coupled to the touchscreen 350 and the display 355. The operator of the UE 116 can use the touchscreen 350 to enter data into the UE 116. The display 355 may be a liquid crystal display, light emitting diode display, or other display capable of rendering text and/or at least limited graphics, such as from web sites.

The memory 360 is coupled to the processor 340. Part of the memory 360 could include a random access memory (RAM), and another part of the memory 360 could include a Flash memory or other read-only memory (ROM).

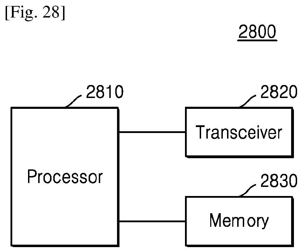

Although FIGURE 3 illustrates one example of UE 116, various changes may be made to FIGURE 3. For example, various components in FIGURE 3 could be combined, further subdivided, or omitted and additional components could be added according to particular needs. As a particular example, the processor 340 could be divided into multiple processors, such as one or more central processing units (CPUs) and one or more graphics processing units (GPUs). Also, while FIGURE 3 illustrates the UE 116 configured as a mobile telephone or smartphone, UEs could be configured to operate as other types of mobile or stationary devices. The UE 116 illustrated in FIGURE 3 may correspond to the UE 2800 illustrated in FIGURE 28. For example, the processor 340 may correspond to the processor 2810.

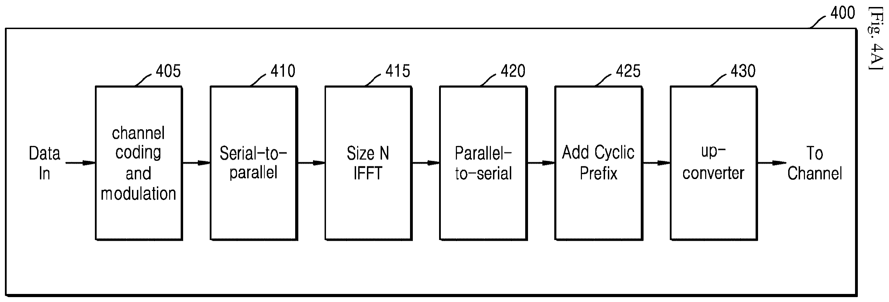

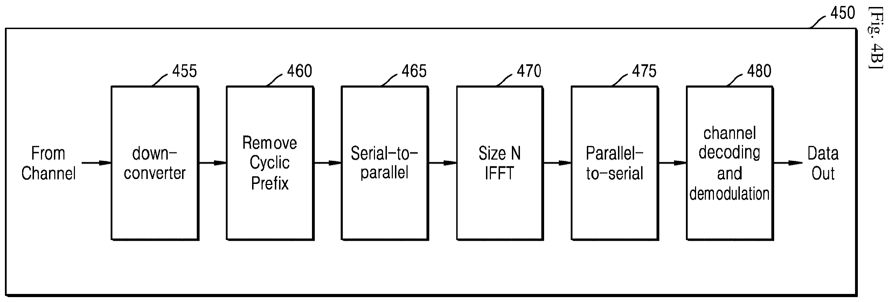

FIGURE 4A is a high-level diagram of transmit path circuitry. For example, the transmit path circuitry may be used for an orthogonal frequency division multiple access (OFDMA) communication. FIGURE 4B is a high-level diagram of receive path circuitry. For example, the receive path circuitry may be used for an orthogonal frequency division multiple access (OFDMA) communication. In FIGURES 4A and 4B, for downlink communication, the transmit path circuitry may be implemented in a base station (gNB) 102 or a relay station, and the receive path circuitry may be implemented in a user equipment (e.g., user equipment 116 of FIGURE 1). In other examples, for uplink communication, the receive path circuitry 450 may be implemented in a base station (e.g., gNB 102 of FIGURE 1) or a relay station, and the transmit path circuitry may be implemented in a user equipment (e.g., user equipment 116 of FIGURE 1).

Transmit path circuitry comprises channel coding and modulation block 405, serial-to-parallel (S-to-P) block 410, Size N Inverse Fast Fourier Transform (IFFT) block 415, parallel-to-serial (P-to-S) block 420, add cyclic prefix block 425, and up-converter (UC) 430. Receive path circuitry 450 comprises down-converter (DC) 455, remove cyclic prefix block 460, serial-to-parallel (S-to-P) block 465, Size N Fast Fourier Transform (FFT) block 470, parallel-to-serial (P-to-S) block 475, and channel decoding and demodulation block 480.

At least some of the components in FIGURES 4A 400 and 4B 450 may be implemented in software, while other components may be implemented by configurable hardware or a mixture of software and configurable hardware. In particular, it is noted that the FFT blocks and the IFFT blocks described in the present disclosure document may be implemented as configurable software algorithms, where the value of Size N may be modified according to the implementation.

Furthermore, although the present disclosure is directed to an embodiment that implements the Fast Fourier Transform and the Inverse Fast Fourier Transform, this is by way of illustration only and may not be construed to limit the scope of the disclosure. It may be appreciated that in an alternate embodiment of the present disclosure, the Fast Fourier Transform functions and the Inverse Fast Fourier Transform functions may easily be replaced by discrete Fourier transform (DFT) functions and inverse discrete Fourier transform (IDFT) functions, respectively. It may be appreciated that for DFT and IDFT functions, the value of the N variable may be any integer number (i.e., 1, 4, 3, 4, etc.), while for FFT and IFFT functions, the value of the N variable may be any integer number that is a power of two (i.e., 1, 2, 4, 8, 16, etc.).

In transmit path circuitry 400, channel coding and modulation block 405 receives a set of information bits, applies coding (e.g., LDPC coding) and modulates (e.g., quadrature phase shift keying (QPSK) or quadrature amplitude modulation (QAM)) the input bits to produce a sequence of frequency-domain modulation symbols. Serial-to-parallel block 410 converts (i.e., demultiplexes) the serial modulated symbols to parallel data to produce N parallel symbol streams where N is the IFFT/FFT size used in BS 102 and UE 116. Size N IFFT block 415 then performs an IFFT operation on the N parallel symbol streams to produce time-domain output signals. Parallel-to-serial block 420 converts (i.e., multiplexes) the parallel time-domain output symbols from Size N IFFT block 415 to produce a serial time-domain signal. Add cyclic prefix block 425 then inserts a cyclic prefix to the time-domain signal. Finally, up-converter 430 modulates (i.e., up-converts) the output of add cyclic prefix block 425 to RF frequency for transmission via a wireless channel. The signal may also be filtered at baseband before conversion to RF frequency.

The transmitted RF signal arrives at the UE 116 after passing through the wireless channel, and reverse operations to those at gNB 102 are performed. Down-converter 455 down-converts the received signal to baseband frequency, and remove cyclic prefix block 460 removes the cyclic prefix to produce the serial time-domain baseband signal. Serial-to-parallel block 465 converts the time-domain baseband signal to parallel time-domain signals. Size N FFT block 470 then performs an FFT algorithm to produce N parallel frequency-domain signals. Parallel-to-serial block 475 converts the parallel frequency-domain signals to a sequence of modulated data symbols. Channel decoding and demodulation block 480 demodulates and then decodes the modulated symbols to recover the original input data stream.

Each of gNBs 101-103 may implement a transmit path that is analogous to transmitting in the downlink to user equipment 111-116 and may implement a receive path that is analogous to receiving in the uplink from user equipment 111-116. Similarly, each one of user equipment 111-116 may implement a transmit path corresponding to the architecture for transmitting in the uplink to gNBs 101-103 and may implement a receive path corresponding to the architecture for receiving in the downlink from gNBs 101-103.

5G communication system use cases have been identified and described. Those use cases can be roughly categorized into three different groups. In one example, enhanced mobile broadband (eMBB) is determined to do with high bits/sec requirement, with less stringent latency and reliability requirements. In another example, ultra reliable and low latency (URLL) is determined with less stringent bits/sec requirement. In yet another example, massive machine type communication (mMTC) is determined that a number of devices can be as many as 100,000 to 1 million per km2, but the reliability/throughput/latency requirement could be less stringent. This scenario may also involve power efficiency requirement as well, in that the battery consumption may be minimized as possible.

A communication system includes a downlink (DL) that conveys signals from transmission points such as base stations (BSs) or NodeBs to user equipments (UEs) and an Uplink (UL) that conveys signals from UEs to reception points such as NodeBs. A UE, also commonly referred to as a terminal or a mobile station, may be fixed or mobile and may be a cellular phone, a personal computer device, or an automated device. An eNodeB, which is generally a fixed station, may also be referred to as an access point or other equivalent terminology. For LTE systems, a NodeB is often referred as an eNodeB.

In a communication system, such as LTE system, DL signals can include data signals conveying information content, control signals conveying DL control information (DCI), and reference signals (RS) that are also known as pilot signals. An eNodeB transmits data information through a physical DL shared channel (PDSCH). An eNodeB transmits DCI through a physical DL control channel (PDCCH) or an enhanced PDCCH (EPDCCH).

An eNodeB transmits acknowledgement information in response to data transport block (TB) transmission from a UE in a physical hybrid ARQ indicator channel (PHICH). An eNodeB transmits one or more of multiple types of RS including a UE-common RS (CRS), a channel state information RS (CSI-RS), or a demodulation RS (DMRS). A CRS is transmitted over a DL system bandwidth (BW) and can be used by UEs to obtain a channel estimate to demodulate data or control information or to perform measurements. To reduce CRS overhead, an eNodeB may transmit a CSI-RS with a smaller density in the time and/or frequency domain than a CRS. DMRS can be transmitted only in the BW of a respective PDSCH or EPDCCH and a UE can use the DMRS to demodulate data or control information in a PDSCH or an EPDCCH, respectively. A transmission time interval for DL channels is referred to as a subframe and can have, for example, duration of 1 millisecond.

DL signals also include transmission of a logical channel that carries system control information. A BCCH is mapped to either a transport channel referred to as a broadcast channel (BCH) when the DL signals convey a master information block (MIB) or to a DL shared channel (DL-SCH) when the DL signals convey a system information block (SIB). Most system information is included in different SIBs that are transmitted using DL-SCH. A presence of system information on a DL-SCH in a subframe can be indicated by a transmission of a corresponding PDCCH conveying a codeword with a cyclic redundancy check (CRC) scrambled with system information RNTI (SI-RNTI). Alternatively, scheduling information for a SIB transmission can be provided in an earlier SIB and scheduling information for the first SIB (SIB-1) can be provided by the MIB.

DL resource allocation is performed in a unit of subframe and a group of physical resource blocks (PRBs). A transmission BW includes frequency resource units referred to as resource blocks (RBs). Each RB includes $N_{sc}^{RB}$ sub-carriers, or resource elements (REs), such as 12 REs. A unit of one RB over one subframe is referred to as a PRB. A UE can be allocated $M_{PDSCH}$ RBs for a total of $M_{sc}^{PDSCH} = M_{PDSCH} \cdot N_{sc}^{RB}$ REs for the PDSCH transmission BW.

UL signals can include data signals conveying data information, control signals conveying UL control information (UCI), and UL RS. UL RS includes DMRS and Sounding RS (SRS). A UE transmits DMRS only in a BW of a respective PUSCH or PUCCH. An eNodeB can use a DMRS to demodulate data signals or UCI signals. A UE transmits SRS to provide an eNodeB with an UL CSI. A UE transmits data information or UCI through a respective physical UL shared channel (PUSCH) or a physical UL control channel (PUCCH). If a UE needs to transmit data information and UCI in a same UL subframe, the UE may multiplex both in a PUSCH. UCI includes hybrid automatic repeat request acknowledgement (HARQ-ACK) information, indicating correct (ACK) or incorrect (NACK) detection for a data TB in a PDSCH or absence of a PDCCH detection (DTX), scheduling request (SR) indicating whether a UE has data in the UE's buffer, rank indicator (RI), and channel state information (CSI) enabling an eNodeB to perform link adaptation for PDSCH transmissions to a UE. HARQ-ACK information is also transmitted by a UE in response to a detection of a PDCCH/EPDCCH indicating a release of semi-persistently scheduled PDSCH.

An UL subframe includes two slots. Each slot includes $N_{sym}^{UL}$ symbols for transmitting data information, UCI, DMRS, or SRS. A frequency resource unit of an UL system BW is a resource block (RB). A UE is allocated $N_{RB}$ RBs for a total of $N_{RB} \cdot N_{sc}^{RB}$ REs for a transmission BW. For a PUCCH, $N_{RB} = 1$. A last subframe symbol can be used to multiplex SRS transmissions from one or more UEs. A number of subframe symbols that are available for data/UCI/DMRS transmission is $N_{symb} = 2 \cdot \left( N_{symb}^{UL} - 1 \right) - N_{SRS}$ ; where $N_{SRS}$ if a last subframe symbol is used to transmit SRS and $N_{SRS}$ = 0 otherwise.

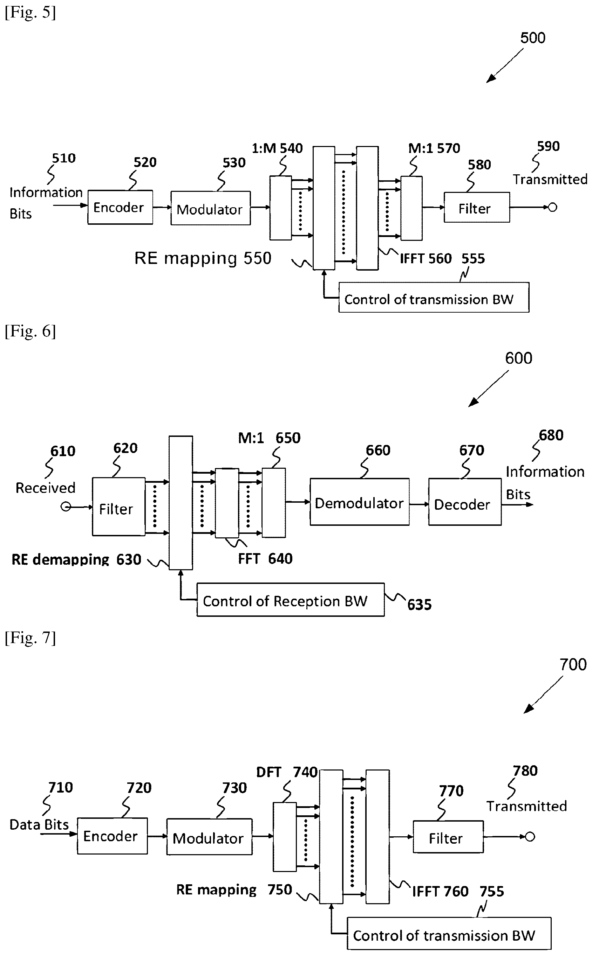

FIGURE 5 illustrates a transmitter block diagram 500 for a PDSCH in a subframe according to embodiments of the present disclosure. The embodiment of the transmitter block diagram 500 illustrated in FIGURE 5 is for illustration only. FIGURE 5 does not limit the scope of the present disclosure to any particular implementation of the transmitter block diagram 500.

As shown in FIGURE 5, information bits 510 are encoded by encoder 520, such as a turbo encoder, and modulated by modulator 530, for example using quadrature phase shift keying (QPSK) modulation. A serial to parallel (S/P) converter 540 generates M modulation symbols that are subsequently provided to a mapper 550 to be mapped to REs selected by a transmission BW selection unit 555 for an assigned PDSCH transmission BW, unit 560 applies an Inverse fast Fourier transform (IFFT), the output is then serialized by a parallel to serial (P/S) converter 570 to create a time domain signal, filtering is applied by filter 580, and a signal transmitted 590. Additional functionalities, such as data scrambling, cyclic prefix insertion, time windowing, interleaving, and others are well known in the art and are not shown for brevity.

FIGURE 6 illustrates a receiver block diagram 600 for a PDSCH in a subframe according to embodiments of the present disclosure. The embodiment of the diagram 600 illustrated in FIGURE 6 is for illustration only. FIGURE 6 does not limit the scope of the present disclosure to any particular implementation of the diagram 600.

As shown in FIGURE 6, a received signal 610 is filtered by filter 620, REs 630 for an assigned reception BW are selected by BW selector 635, unit 640 applies a fast Fourier transform (FFT), and an output is serialized by a parallel-to-serial converter 650. Subsequently, a demodulator 660 coherently demodulates data symbols by applying a channel estimate obtained from a DMRS or a CRS (not shown), and a decoder 670, such as a turbo decoder, decodes the demodulated data to provide an estimate of the information data bits 680. Additional functionalities such as time-windowing, cyclic prefix removal, de-scrambling, channel estimation, and deinterleaving are not shown for brevity.

FIGURE 7 illustrates a transmitter block diagram 700 for a PUSCH in a subframe according to embodiments of the present disclosure. The embodiment of the block diagram 700 illustrated in FIGURE 7 is for illustration only. FIGURE 7 does not limit the scope of the present disclosure to any particular implementation of the block diagram 700.

As shown in FIGURE 7, information data bits 710 are encoded by encoder 720, such as a turbo encoder, and modulated by modulator 730. A discrete Fourier transform (DFT) unit 740 applies a DFT on the modulated data bits, REs 750 corresponding to an assigned PUSCH transmission BW are selected by transmission BW selection unit 755, unit 760 applies an IFFT and, after a cyclic prefix insertion (not shown), filtering is applied by filter 770 and a signal transmitted 780.

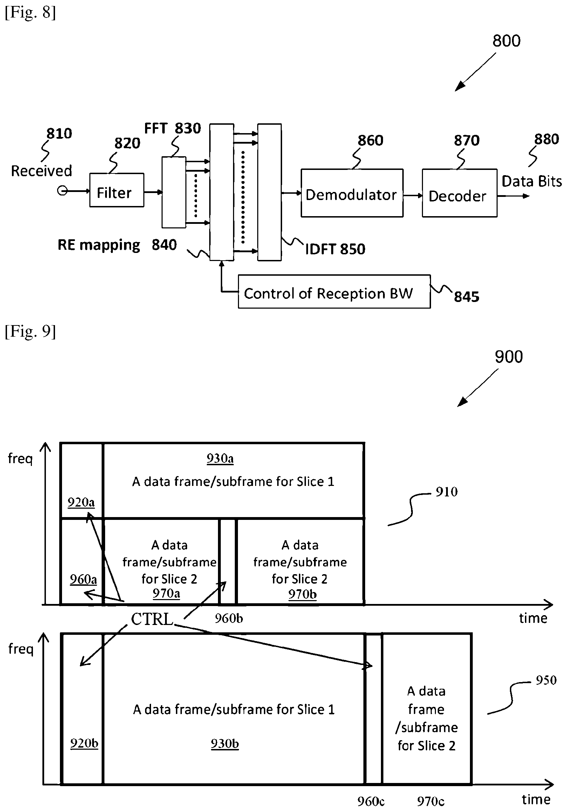

FIGURE 8 illustrates a receiver block diagram 800 for a PUSCH in a subframe according to embodiments of the present disclosure. The embodiment of the block diagram 800 illustrated in FIGURE 8 is for illustration only. FIGURE 8 does not limit the scope of the present disclosure to any particular implementation of the block diagram 800.

As shown in FIGURE 8, a received signal 810 is filtered by filter 820. Subsequently, after a cyclic prefix is removed (not shown), unit 830 applies a FFT, REs 840 corresponding to an assigned PUSCH reception BW are selected by a reception BW selector 845, unit 850 applies an inverse DFT (IDFT), a demodulator 860 coherently demodulates data symbols by applying a channel estimate obtained from a DMRS (not shown), a decoder 870, such as a turbo decoder, decodes the demodulated data to provide an estimate of the information data bits 880.

In next generation cellular systems, various use cases are envisioned beyond the capabilities of LTE system. Termed 5G or the fifth generation cellular system, a system capable of operating at sub-6GHz and above-6 GHz (for example, in mmWave regime) becomes one of the requirements. In 3GPP TR 22.891, 74 5G use cases has been identified and described; those use cases can be roughly categorized into three different groups. A first group is termed "enhanced mobile broadband (eMBB)," targeted to high data rate services with less stringent latency and reliability requirements. A second group is termed "ultra-reliable and low latency (URLL)" targeted for applications with less stringent data rate requirements, but less tolerant to latency. A third group is termed "massive MTC (mMTC)" targeted for large number of low-power device connections such as 1 million per $km^2$ with less stringent the reliability, data rate, and latency requirements.

In order for the 5G network to support such diverse services with different quality of services (QoS), one method has been identified in 3GPP specification, called network slicing. To utilize PHY resources efficiently and multiplex various slices (with different resource allocation schemes, numerologies, and scheduling strategies) in DL-SCH, a flexible and self-contained frame or subframe design is utilized.

FIGURE 9 illustrates an example multiplexing of two slices 900 according to embodiments of the present disclosure. The embodiment of the multiplexing of two slices 900 illustrated in FIGURE 9 is for illustration only. FIGURE 9 does not limit the scope of the present disclosure to any particular implementation of the multiplexing of two slices 900.

Two exemplary instances of multiplexing two slices within a common subframe or frame are depicted in FIGURE 9. In these exemplary embodiments, a slice can be composed of one or two transmission instances where one transmission instance includes a control (CTRL) component (e.g., 920a, 960a, 960b, 920b, or 960c) and a data component (e.g., 930a, 970a, 970b, 930b, or 970c). In embodiment 910, the two slices are multiplexed in frequency domain whereas in embodiment 950, the two slices are multiplexed in time domain. These two slices can be transmitted with different sets of numerology.

3GPP specification supports up to 32 CSI-RS antenna ports which enable an gNB to be equipped with a large number of antenna elements (such as 64 or 128). In this case, a plurality of antenna elements is mapped onto one CSI-RS port. For next generation cellular systems such as 5G, the maximum number of CSI-RS ports can either remain the same or increase.

Extend 5G NR into the unlicensed spectrum is an important component of the NR standard, and one of the most important design considerations for unlicensed operations is the channel access mechanism. The channel access mechanism is essential in meeting regional regulations for listen-before-talk, such as the regulations, as well as achieving fair coexistence between the radio access technologies (RATs) that coexist in the unlicensed band. In LTE-LAA, the channel access mechanism is a required feature in granting downlink/uplink transmissions.

A baseline channel access procedure, which is referred to as a category-4 (CAT-4) channel access procedure, is an LBT mechanism with random backoff with a contention window size (CWS) of variable size.

In addition to the basic channel access procedure, a CWS adaptation mechanism has also been defined in LTE-LAA for alleviating transmission collisions. The CAT-4 LBT process defines 4 different channel access priority class p, with each class having a different minimum and maximum allowed CWS, as well as the corresponding maximum channel occupancy time (MCOT). If the eNB transmits transmissions that are associated with channel access priority class p on a carrier, the eNB maintains the contention window value $CW_p$ and adjusts $CW_p$ before generating the random backoff counter for the channel access procedure of next transmission. Specifically, the following procedures are used: for every priority class $p \in \{1, 2, 3, 4\}$ set $CWp$ as minimum CWS of priority class p; and if at least Z = 80% of HARQ-ACK values corresponding to PDSCH transmission(s) in reference subframe k are determined as NACK, increase $CW_p$ or every priority class $p \in \{1, 2, 3, 4\}$ to the next higher allowed value and remain in step 2; otherwise, go to step 1.

For LTE-LAA, the reference subframe k is the starting subframe of the most recent transmission on the carrier made by the eNB, for which at least some HARQ-ACK feedback is expected to be available. If no HARQ-ACK feedback is detected for a PDSCH transmission by the eNB, or if the eNB detects "DTX," "NACK/DTX" or "any" state, it is counted as NACK.

The CAT-4 LBT procedure similar to that of LTE-LAA can be utilized as the baseline channel access mechanism for NR unlicensed (NR-U), and the NR-U CWS adaptation can also be based on HARQ-ACK feedbacks from the UE. However, different from LTE-LAA wherein the HARQ-ACK feedback timing is fixed by specification and is 4ms in LTE-LAA, NR supports very flexible timing relation from PDSCH transmission to its corresponding HARQ-ACK feedback.

In addition, NR also supports code-block group (CBG)-based HARQ-ACK feedback compared to only the transport block (TB)-based HARQ-ACK feedback for LTE-LAA. Also NR supports wideband operations with each carrier can be up to 100 MHz in sub-7 GHz bands, as opposed to the 20 MHz carrier bandwidth of LTE-LAA. Due to the flexibilities and new features of NR, the CWS adaptation rule for NR-U may also be much more flexible compared to that of LTE-LAA.

The present disclosure focuses on the design aspects to support contention window size adaptation of NR-U, including the HARQ-ACK feedback resource determination for NR-U CWS adaptation, the NR-U CWS adaptation rule, and the NR-U CWS for wide-band operations of NR-U. The present disclosure includes several embodiments, principles, approaches and examples that can be used in conjunction or in combination with another or can operate as standalone.

In the rest of the present disclosure, sub-7 GHz NR-U refers to NR-U that operates in the unlicensed/shared bands below 7 GHz, such as the 5 GHz unlicensed bands or the 6 GHz unlicensed/shared bands; and above-7 GHz NR-U refers to NR-U that operators in the unlicensed/shared bands above 7 GHz, such as the 60 GHz unlicensed bands.

In the present disclosure, the PDSCH transmission of scheduled UE refers to unicast or non-broadcast PDSCH transmissions of the scheduled, which excludes non-unicast transmissions such as SS/PBCH block, NR-U discovery reference signal (DRS), or other broadcast channels including the remaining system information (RMSI), other system information (OSI), and paging. In addition, the scheduled UE refers to the UE with unicast PDSCH transmission scheduled by the gNB.

In one embodiment, HARQ-ACK feedback resource determination for NR-U Contention Window adjustment is provided. In such embodiment, determining the reference time-domain and frequency-domain resources for NR-U contention window (CW) adjustment procedure is provided.

At least when a NR-U gNB starts to perform a new CAT-4 LBT procedure to initialize a DL transmission, e.g., at NR-U slot with index $n$, the gNB identifies a set of HARQ-ACK values corresponding to previous DL transmission(s) in a set of reference time-domain and frequency-domain resources, wherein the set of HARQ-ACK values corresponding to the set of reference time-domain and frequency-domain resources may be used in the rule of determining whether the gNB increases the CW value or resets the CW value.

The determination of the reference time-domain and frequency-domain resources and the determination of the set of HARQ-ACK values corresponding to previous DL transmission(s) that may be used for NR-U CWS adjustment is detailed in this embodiment. The rule of determining whether the gNB increases the CW value or resets the CW value is detailed in following embodiments.

In one example, the reference time-domain and frequency-domain resources for CW adjustment can be a determined set of slot(s) and/or mini-slot(s) and/or partial slot(s) of a determined previous DL transmission burst on the carrier of the gNB.

In one sub-example, a slot, as the reference time domain resource for determining the contention window size adjustment, can refer to a PDSCH scheduled with 14 OFDM symbols and transmitted without puncturing in a time domain; a mini-slot, as the reference time domain resource for determining the contention window size adjustment, can refer to a PDSCH scheduled with smaller than 14 OFDM symbols and transmitted without puncturing in a time domain; and a partial slot, as the reference time domain resource for determining the contention window size adjustment, can refer to a PDSCH scheduled with equal to or smaller than 14 OFDM symbols and transmitted with puncturing in a time domain.

In another sub-example, the mini-slot contains duration of 2/4/7 symbols as in NR standard, while the partial slot can contain duration different from a full slot duration (e.g., the starting partial slot within the channel occupancy time, or the ending partial slot within the channel occupancy time, or a punctured PDSCH, or PDSCH with duration other than 2/4/7/14 symbols).

In one example of the determined set of slot(s) and/or mini-slot(s) and/or partial slot(s), the determined set of slot(s) and/or mini-slot(s) and/or partial slot(s) can be the first K slot(s) and/or mini-slot(s) and/or partial slot(s) of the determined previous DL transmission burst.

In one instance, K can be fixed by specification to a fixed value, or a value that can be scalable with subcarrier spacing (SCS), or dynamically determined based on the starting PDSCH format of the determined previous DL transmission burst. In one sub-example, K can be fixed to be 1, in which case the HARQ-ACK values for transmissions on only the first NR-U slot or mini-slot(s) or partial slot may be used. In another sub-example, K can also be fixed to be 2, e.g., when the determined previous DL transmission burst is starting with a partial slot or mini slot. For instance, the determined set of slot(s) and/or mini-slot(s) and/or partial slot(s) with K=2 can be the initial partial slot plus the following full slot at the beginning of the determined previous DL transmission burst. In another sub-example, a default value of K with a 15 kHz NR-U SCS can be fixed, while the value of K with a 30 kHz NR-U SCS and 60 kHz NR-U SCS can be 2 times and 4 times respectively compared to the value of K with 15 kHz NR-U SCS, wherein the SCS refers to the SCS of downlink transmissions.

In another instance, K can be configurable. In one sub-example, K can be configured through the RRC layer by a higher layer parameter. In another sub-example, K can be configurable through downlink control information (DCI), such as introducing a DCI indicator field to indicate whether or not the corresponding PDSCH scheduled by the DCI can be used as part of the reference time-domain and frequency-domain resources for CW adjustment.

In yet another instance, K can be dynamically changed according to some predefined rule. In one sub-example, K can be dynamically changed according to the number of OFDM symbols in the initial partial slot, such that when the number of OFDM symbols within the initial partial slot is larger than a threshold $\tau 1$ (e.g., $\tau 1 = 7$), K = 1 (i.e., only initial partial slot is used); otherwise K = 2 (i.e., initial partial slot and the next full slot are used). In another sub-example, K can be dynamically changed according to the number of HARQ-ACK feedbacks received or expected to be received by the timing that gNB performs CW, wherein K can be dynamically changed to the value such that at least $\tau 2$ HARQ-ACK feedbacks are received or expected to be received by the timing that gNB performs CW. In another sub-example, K can be dynamically changed according to the number of scheduled UEs of the determined previous DL transmission burst whose HARQ-ACK feedbacks received or expected to be received by the timing that gNB performs CW, wherein K can be dynamically changed to the value such that the HARQ-ACK feedbacks of at least $\tau 3$ scheduled UEs of the determined previous DL transmission burst are received or expected to be received by the timing that gNB performs CW adjust.

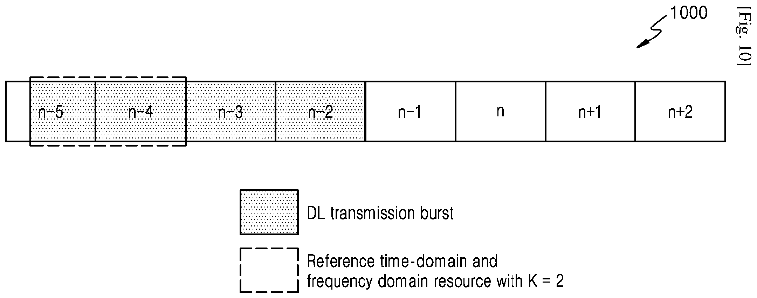

FIGURE 10 illustrates an example set of slots/mini-slots/partial slots 1000 according to embodiments of the present disclosure. The embodiment of the set of slots/mini-slots/partial slots 1000 illustrated in FIGURE 10 is for illustration only and could have the same or similar configuration. FIGURE 10 does not limit the scope of the present disclosure.

An illustration of example of the determined set of slot(s) and/or mini-slot(s) and/or partial slot(s) is provided in FIGURE 10, wherein K = 2, and the first slot and second slot of the determined previous DL transmission burst are a partial slot and a full slot respectively.

In one example of the determined set of slot(s) and/or mini-slot(s) and/or partial slot(s), the determined set of slot(s) and/or mini-slot(s) can be all the slot(s) and/or mini-slot(s) and/or partial slot(s) of the determined previous DL transmission burst.

In one example of the determined set of slot(s) and/or mini-slot(s), the determined set of slot(s) and/or mini-slot(s) and/or partial slot(s) can be the set of the first slot or mini-slot or partial slot of the determined previous DL transmission burst for unicast PDSCH transmission of a scheduled UE in the burst.

In one sub-example, the determined slot/mini-slot/partial slot does not need to be the initial slot/mini-slot/partial slot of the determined previous DL transmission burst, such as when non-unicast channels/signals such as DRS is multiplexed with PDSCH and only DRS is transmitted in the initial slot/mini-slot/partial slot of the determined previous DL transmission burst.

In another sub-example, the determined set of slot(s) and/or mini-slot(s) and/or partial slot(s) can be treated as from the beginning of the determined previous DL transmission burst, until the end of the first slot or mini-slot or partial slot of the determined previous DL transmission burst for unicast PDSCH transmission of a scheduled UE in the burst. This sub-example and the previous sub-example are equivalent when adjusting the CWS based on HARQ-ACK feedbacks corresponding to the unicast PDSCH transmissions from the determined slot or mini-slot or partial slot of the DL transmission burst.

In another sub-example, the determined set of slot(s) and/or mini-slot(s) and/or partial slot(s) can be the first slot with non-punctured PDSCH with a duration of 14 symbols for unicast PDSCH transmission of the determined previous DL transmission burst.

In another sub-example, the determined set of slot(s) and/or mini-slot(s) and/or partial slot(s) can be the first mini-slot with non-punctured PDSCH with a duration of less than 14 symbols for unicast PDSCH transmission of the determined previous DL transmission burst.

In another sub-example, the determined set of slot(s) and/or mini-slot(s) and/or partial slot(s) can be the first partial slot with punctured PDSCH with a duration of less than or equal to 14 symbols for unicast PDSCH transmission of the determined previous DL transmission burst.

In another sub-example, the determined set of slot(s) and/or mini-slot(s) and/or partial slot(s) can be the first slot with non-punctured PDSCH with a duration of 14 symbols; if no such slot is available, the first mini-slot with non-punctured PDSCH with a duration of less than 14 symbols; and if no such slot or mini-slot is available, the first partial slot with punctured PDSCH with a duration of less than or equal to 14 symbols for unicast PDSCH transmission of the determined previous DL transmission burst.

In another sub-example, for this determined slot/mini-slot/partial slot, one or more than one UEs can be scheduled. In another sub-example, this example can be generalized to the determined set of slot(s) and/or mini-slot(s) and/or partial slot(s) can be the set of the first slot or mini-slot or partial slot of the determined previous DL transmission burst wherein some HARQ-ACK feedback is expected.

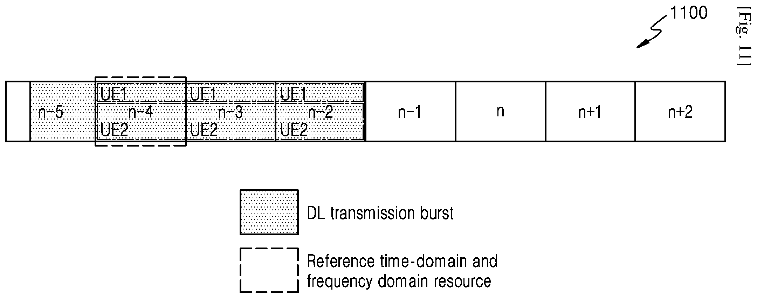

FIGURE 11 illustrates another example set of slots/mini-slots/partial slots 1100 according to embodiments of the present disclosure. The embodiment of the set of slots/mini-slots/partial slots 1100 illustrated in FIGURE 11 is for illustration only and could have the same or similar configuration. FIGURE 11 does not limit the scope of the present disclosure.

FIGURE 11 illustrates an example, wherein slot n-4 is the first slot of the determined previous DL transmission burst for PDSCH transmission of a scheduled UE in the burst.

In one example of the determined set of slot(s) and/or mini-slot(s) and/or partial slot(s), the determined set of slot(s) and/or mini-slot(s) and/or partial slot(s) can be the set of the first slot or mini-slot or partial slot of the determined previous DL transmission burst for unicast PDSCH transmission of a scheduled UE in the burst (or in general slot(s) and/or mini-slot(s) and/or partial slot(s) wherein some HARQ-ACK feedback is expected), wherein the first slot or mini-slot or partial slot is restricted to be within the first L slots and/or mini-slots and/or partial slots of the burst. In one sub-example, L>=1 can be a fixed or a configurable value. In one sub-example, for this determined slot/mini-slot/partial slot, one or more than one UEs can be scheduled.

In one example of the determined set of slot(s) and/or mini-slot(s), the determined set of slot(s) and/or mini-slot(s) and/or partial slot(s) can be the set of the first K >= 1 slots and/or mini-slots and/or partial slots (ordered in time-domain position) of the determined previous DL transmission burst for unicast PDSCH transmissions of one or multiple scheduled UEs in the burst.

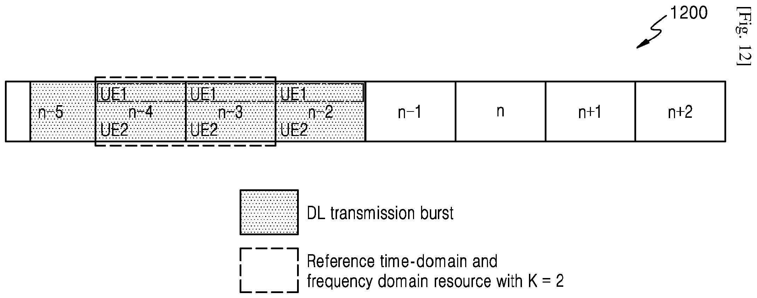

An illustration of this example is provided in FIGURE 12, wherein K =2.

FIGURE 12 illustrates yet another example set of slots/mini-slots/partial slots 1200 according to embodiments of the present disclosure. The embodiment of the set of slots/mini-slots/partial slots 1200 illustrated in FIGURE 12 is for illustration only and could have the same or similar configuration. FIGURE 12 does not limit the scope of the present disclosure.

In one sub-example, this example can be generalized to the determined set of slot(s) and/or mini-slot(s) and/or partial slot(s) can be the first K slots and/or mini-slots and/or partial slots (ordered in time-domain position) of the determined previous DL transmission burst wherein some HARQ-ACK feedback is expected.

In one sub-example, the determined slots/mini-slots/partial slots do not need to be the first K slots/mini-slots/partial slots of the determined previous DL transmission burst and can be potentially non-consecutive K slots/mini-slots/partial slots in the time domain, such as when non-unicast channels/signals such as DRS is time-domain multiplexed with PDSCH(s) of the determined previous DL transmission burst.

In another sub-example, the determined set of slot(s) and/or mini-slot(s) and/or partial slot(s) can be treated as from the beginning of the determined previous DL transmission burst, until the end of the first K >= 1 slots and/or mini-slots and/or partial slots (ordered in time-domain position) of the determined previous DL transmission burst that includes unicast PDSCH transmissions. This sub-example and the previous sub-example are equivalent when adjusting the CWS based on HARQ-ACK feedbacks corresponding to the unicast PDSCH transmissions from the determined slots/mini-slots/partial slots of the DL transmission burst.

In another sub-example, the determined set of slot(s)/mini-slot(s)/partial slot(s) can correspond to PDSCH transmissions from either one scheduled UE or more than one scheduled UEs of the determined previous DL transmission burst.

In another sub-example, the value K>=1 can be fixed or configurable, and can be scalable with subcarrier spacing (SCS). For instance, K can be fixed as n >= 1. In another instance, K can be the total number of slots/mini-slots/partial within the determined previous DL transmission burst that includes unicast PDSCH transmissions.

In another sub-example, the value of K can be dynamically changed according to some predefined rule. In one instance, K can be dynamically changed according to the number of HARQ-ACK feedbacks received or expected to be received by the timing that a gNB performs CW, wherein K can be dynamically changed to the value such that at least $\tau$ 2 HARQ-ACK feedbacks are received or expected to be received by the timing that gNB performs CW.

In another instance, K can be dynamically changed according to the number of scheduled UEs of the determined previous DL transmission burst whose HARQ-ACK feedbacks received or expected to be received by the timing that gNB performs CW, wherein K can be dynamically changed to the value such that the HARQ-ACK feedbacks of at least $\tau$ 3 >= 1 scheduled UEs of the determined previous DL transmission burst are received or expected to be received by the timing that gNB performs CW adjust. In yet another instance, K can be dynamically chosen as the number of slots and/or mini-slots and/or partial slots of the determined previous DL transmission burst that includes all the PDSCH transmissions of one or multiple scheduled UEs in the burst.

In another instance of this example, the determined set of slot(s) and/or mini-slot(s) and/or partial slot(s) can be the first K >= 1 slots with non-punctured PDSCH with a duration of 14 symbols; and/or mini-slot with non-punctured PDSCH with a duration of less than 14 symbols; and/or partial slots with punctured PDSCH with a duration of less than or equal to 14 symbols for unicast PDSCH transmission of the determined previous DL transmission burst.

In one example of the determined set of slot(s) and/or mini-slot(s), the determined set of slot(s) and/or mini-slot(s) and/or partial slot(s) can be the set of the first K slots and/or mini-slots and/or partial slots (ordered in time-domain position) of the determined previous DL transmission burst for unicast PDSCH transmissions of one or multiple scheduled UEs in the burst (or in general slot(s) and/or mini-slot(s) and/or partial slot(s) wherein some HARQ-ACK feedback is expected), wherein the first K slots and/or mini-slots and/or partial slots are restricted to be within the first L slots and/or mini-slots and/or partial slots of the burst.

In one sub-example, the determined slots/mini-slots/partial slots do not need to be the first K slots/mini-slots/partial slots of the determined previous DL transmission burst and can be potentially non-consecutive K slots/mini-slots/partial slots in the time domain, such as when non-unicast channels/signals such as DRS is time-domain multiplexed with PDSCH(s) of the determined previous DL transmission burst.

In another sub-example, the determined set of slot(s) and/or mini-slot(s) and/or partial slot(s) can be treated as from the beginning of the determined previous DL transmission burst, until the end of the first K >= 1 slots and/or mini-slots and/or partial slots (ordered in time-domain position) of the determined previous DL transmission burst that includes unicast PDSCH transmissions. This sub-example and the previous sub-example are equivalent when adjusting the CWS based on HARQ-ACK feedbacks corresponding to the unicast PDSCH transmissions from the determined slots/mini-slots/partial slots of the DL transmission burst.

In another sub-example, the determined set of slot(s)/mini-slot(s)/partial slot(s) can correspond to PDSCH transmissions from either one scheduled UE or more than one scheduled UEs of the determined previous DL transmission burst.

In yet another sub-example, the value K>=1 can be fixed or configurable, and can be scalable with subcarrier spacing (SCS). For instance, K can be fixed as n >= 1. In another instance, K can be the total number of slots/mini-slots/partial within the determined previous DL transmission burst that includes unicast PDSCH transmissions, or equivalently the determined set of slot(s)/mini-slot(s)/partial slot(s) is the entire DL transmission burst. In another sub-example, L>=1 can be a fixed or a configurable value. For instance, L can be fixed as n >= 1. In another instance, L can be the entire DL transmission burst.

In yet another sub-example, the value of K can be dynamically changed according to some predefined rule. In one instance, K can be dynamically changed according to the number of HARQ-ACK feedbacks received or expected to be received by the timing that a gNB performs CW, wherein K can be dynamically changed to the value such that at least $\tau$ 2 HARQ-ACK feedbacks are received or expected to be received by the timing that a gNB performs CW. In another instance, K can be dynamically changed according to the number of scheduled UEs of the determined previous DL transmission burst whose HARQ-ACK feedbacks received or expected to be received by the timing that a gNB performs CW, wherein K can be dynamically changed to the value such that the HARQ-ACK feedbacks of at least $\tau$ 3 > = 1 scheduled UEs of the determined previous DL transmission burst are received or expected to be received by the timing that a gNB performs CW adjust. In yet another instance, K can be dynamically chosen as the number of slots and/or mini-slots and/or partial slots of the determined previous DL transmission burst that includes all the PDSCH transmissions of one or multiple scheduled UE(s) in the burst.

In another instance of this example, the determined set of slot(s) and/or mini-slot(s) and/or partial slot(s) can be the first K >= 1 slots with non-punctured PDSCH with a duration of 14 symbols; and/or mini-slot with non-punctured PDSCH with a duration of less than 14 symbols; and/or partial slots with punctured PDSCH with a duration of less than or equal to 14 symbols for unicast PDSCH transmission of the determined previous DL transmission burst.

In one example of the determined set of slot(s) and/or mini-slot(s) and/or partial slot(s), the determined set of slot(s) and/or mini-slot(s) can be a subset of all the slot(s) and/or mini-slot(s) and/or partial slot(s) of the determined previous DL transmission burst, wherein this subset can be chosen according some predefined rule different from those specified from the examples of the determined set of slot(s) and/or mini-slot(s) and/or partial slot(s).

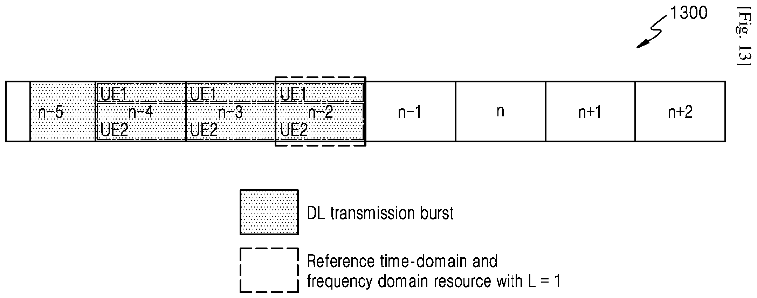

FIGURE 13 illustrates yet another example set of slots/mini-slots/partial slots 1300 according to embodiments of the present disclosure. The embodiment of the set of slots/mini-slots/partial slots 1300 illustrated in FIGURE 13 is for illustration only and could have the same or similar configuration. FIGURE 13 does not limit the scope of the present disclosure.

In one sub-example, the subset can be the L>=1 slots/mini-slots/partial slots of PDSCH transmissions of scheduled UEs (or in general slots/mini-slots/partial slots wherein some HARQ-ACK feedback is expected) of the determined previous DL transmission burst that are closest to the timing that a gNB performs CW adjustment. For instance, these slots/mini-slots/partial slots can reflect the most recent channel collision/congestion conditions by the timing that a gNB performs CW adjustment, especially considering the likelihood for hidden node issue is higher in NR-U with multi-beam operation compared to LTE-LAA. An illustration of this sub-example with L = 1 is illustrated in FIGURE 13.

In one example of the determined set of slot(s) and/or mini-slot(s) and/or partial slot(s), the determined set of slot(s) and/or mini-slot(s) and/or partial slot(s) of the determined previous DL transmission burst can be based on the time-domain position of the expected or received HARQ-ACK feedbacks for PDSCH transmissions of the determined previous DL transmission burst; which may further depend on the minimum UE processing times of the scheduled UEs on this transmission burst and/or the configured PDSCH to HARQ-ACK timing (e.g., K_1) of the scheduled UEs on this transmission burst.

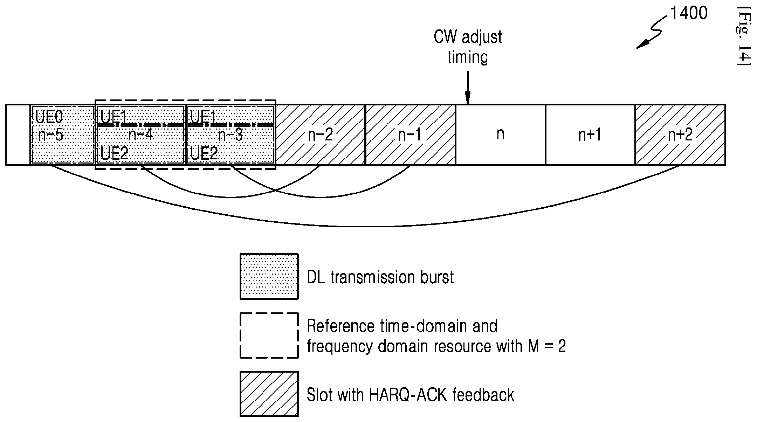

FIGURE 14 illustrates yet another example set of slots/mini-slots/partial slots 1400 according to embodiments of the present disclosure. The embodiment of the set of slots/mini-slots/partial slots 1400 illustrated in FIGURE 14 is for illustration only and could have the same or similar configuration. FIGURE 14 does not limit the scope of the present disclosure.

In one sub-example of the determined set of slot(s) and/or mini-slot(s) and/or partial slot(s), for the first M>=1 HARQ-ACK feedback units (ordered in time-domain position) that are received or expected to be received in response to PDSCH transmissions from the determined previous DL transmission burst, the set of slot(s) and/or mini-slot(s) and/or partial slot(s) that include the PDSCH transmission(s) corresponding to these first M>=1 HARQ-ACK feedback units can be the determined set of slot(s) and/or mini-slot(s) and/or partial slot(s) of the determined previous DL transmission burst. In addition, the HARQ-ACK feedback unit be chosen as the HARQ-ACK codebook or the UL slot(s) and/or mini-slot(s) and/or partial slot(s) containing the HARQ-ACK feedbacks.

An illustration of this sub-example with M=2 is provided in FIGURE 14, wherein a UE1 and a UE2 scheduled on slot n-4 and n-3 are with capability 2 whose HARQ-ACK feedbacks are expected to be reported on slot n-2 and slot n-1 respectively, while a UE0 scheduled on slot n-5 is with capability 1 whose HARQ-ACK feedback is expected to be reported on slot n+2; while slot n-4 and slot n-3 are the reference time-domain and frequency-domain resource of the DL transmission burst according to this sub-example.

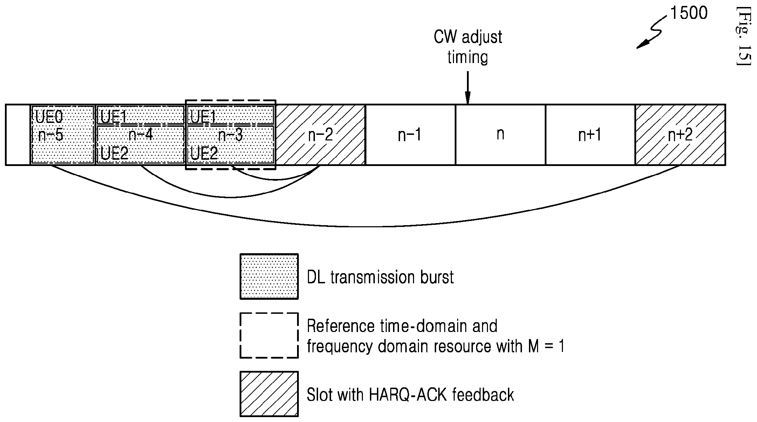

FIGURE 15 illustrates yet another example set of slots/mini-slots/partial slots 1500 according to embodiments of the present disclosure. The embodiment of the set of slots/mini-slots/partial slots 1500 illustrated in FIGURE 15 is for illustration only and could have the same or similar configuration. FIGURE 15 does not limit the scope of the present disclosure.

In another sub-example of the determined set of slot(s) and/or mini-slot(s) and/or partial slot(s), for multiple HARQ-ACK feedback units that are received or expected to be received in the same time-domain resource, the slot(s) and/or mini-slot(s) and/or partial slot(s) corresponding to these HARQ-ACK feedbacks can be prioritized either in the increasing or decreasing order of their time-domain position when being selected as the determined set of slot(s) and/or mini-slot(s) and/or partial slot(s) of the determined previous DL transmission burst.

An instance of this sub-example is provided in FIGURE 15, wherein a UE1 and a UE2 scheduled on slot n-4 and n-3 are with capability 2 whose HARQ-ACK feedbacks are expected to be reported on slot n-2, while UE0 scheduled on slot n-5 is with capability 1 whose HARQ-ACK feedback is expected to be reported on slot n+2; while slot n-3 is the reference time-domain and frequency-domain resource of the DL transmission burst according to this sub-example, when M= 1 and the slot(s) and/or mini-slot(s) and/or partial slot(s) are prioritized in the decreasing order of their time-domain position when being selected as the reference time-domain and frequency-domain resource.

Given the determined set of slot(s) and/or mini-slot(s) and/or partial slot(s) for a previous DL transmission burst, the next design consideration is to determine that by the timing that a gNB performs CW adjust, how to choose the determined previous DL transmission burst in the mentioned embodiments/examples/instances.

In one example of the determined previous DL transmission burst, the determined previous DL transmission burst can be the most recent DL transmission burst that a gNB has transmitted before the timing that the gNB performs CW adjustment, e.g., NR-U slot with index n.

In one example of the determined previous DL transmission burst, the determined previous DL transmission burst can be the most recent DL transmission burst wherein at least some HARQ-ACK feedback corresponding to the determined set of slot(s) and/or mini-slot(s) and/or partial slot(s) of the burst is expected to be available by the timing that a gNB performs CW adjustment, e.g., NR-U slot with index n.

In one example of the determined previous DL transmission burst, the determined previous DL transmission burst can be the most recent DL transmission burst by the gNB, such that at least some HARQ-ACK feedbacks corresponding to the determined set of slot(s) and/or mini-slot(s) and/or partial slot(s) of the burst have been received by the timing that the gNB performs CW adjustment, e.g., NR-U slot with index n.

In one example of the determined previous DL transmission burst, the determined previous DL transmission burst can be the most recent DL transmission burst wherein all HARQ-ACK feedbacks corresponding to the determined set of slot(s) and/or mini-slot(s) and/or partial slot(s) of the burst are expected to be available by the timing that a gNB performs CW adjustment, e.g., NR-U slot with index n.

In one example of the determined previous DL transmission burst, the determined previous DL transmission burst can be the most recent DL transmission burst wherein all HARQ-ACK feedbacks corresponding to the determined set of slot(s) and/or mini-slot(s) and/or partial slot(s) of the burst have been received by the timing that a gNB performs CW adjustment, e.g., NR-U slot with index n.

In one example of the determined previous DL transmission burst, the determined previous DL transmission burst can be the most recent DL transmission burst wherein at least X% of HARQ-ACK feedbacks corresponding to the determined set of slot(s) and/or mini-slot(s) and/or partial slot(s) of the burst is expected to be available by the timing that a gNB performs CW adjustment, e.g., NR-U slot with index n. In one sub-example, X is predefined in the specification. In another sub-example, X is determined by at least one of the UE capability of minimum processing time, or configured PDSCH to HARQ delay, or allowed LBT type and/or priority class of HARQ-ACK feedback transmission. In yet another sub-example, X is configurable by a high layer parameter.

In one example of the determined previous DL transmission burst, the determined previous DL transmission burst can be the most recent DL transmission burst wherein at least X% of HARQ-ACK feedbacks corresponding to the determined set of slot(s) and/or mini-slot(s) and/or partial slot(s) of the burst have been received by the timing that a gNB performs CW adjustment, e.g., NR-U slot with index n. In one sub-example, X is predefined in the specification. In another sub-example, X is determined by at least one of the UE capability of minimum processing time, or configured PDSCH to HARQ delay, or allowed LBT type and/or priority class of HARQ-ACK feedback transmission. In yet another sub-example, X is configurable by a high layer parameter.

In one consideration of the present disclosure, it denotes as "reference HARQ slot(s) and/or mini-slot(s) and/or partial slot(s)" the set of UL (including self-contained) slot(s) and/or mini-slot(s) and/or partial slot(s) that are expected to contain the HARQ-ACK feedback(s) corresponding to the reference time-domain and frequency-domain resources for CW adjustment; then additional HARQ-ACK feedbacks in addition to those corresponding to the reference time-domain and frequency-domain resources can be included in the reference HARQ slot(s) and/or mini-slot(s) and/or partial slot(s).

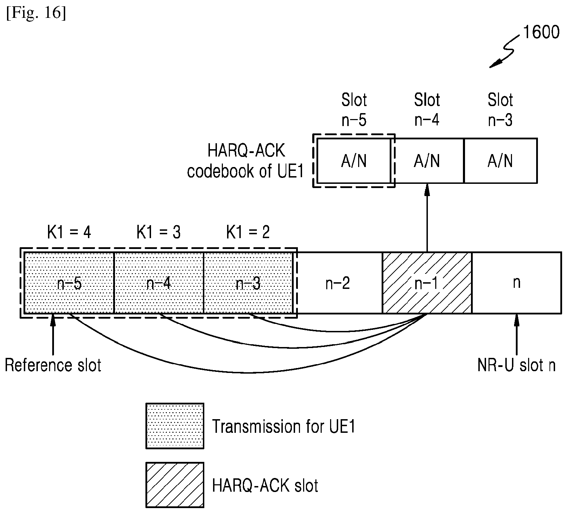

FIGURE 16 illustrates yet another example set of slots/mini-slots/partial slots 1600 according to embodiments of the present disclosure. The embodiment of the set of slots/mini-slots/partial slots 1600 illustrated in FIGURE 16 is for illustration only and could have the same or similar configuration. FIGURE 16 does not limit the scope of the present disclosure.

In one example of the reference HARQ slot(s) and/or mini-slot(s) and/or partial slot(s), only the HARQ-ACK feedback(s) corresponding to the reference time-domain and frequency-domain resources received on the reference HARQ slot(s) and/or mini-slot(s) and/or partial slot(s) by the timing that a gNB performs CW adjustment can be utilized for CW adjustment.

In one example, FIGURE 16 provides an illustration wherein within the determined DL transmission burst from NR-U slot n-5 to n-3, a gNB transmits to a UE1 and the configured K1 values for slot n-5 to n-3 are K1 = 4, 3, 2 respectively, wherein K1 denotes the delay from PDSCH to corresponding HARQ-ACK in the unit of NR-U slot. As a result, a UE transmits a HARQ-ACK codebook in slot n-1 that corresponds to the transmissions from slot n-5 to n-3. If determining slot n-5 (e.g., K=1) as the reference time-domain and frequency-domain resources for CW adjustment, only the HARQ-ACK values for slot n-5 is used in CW adjustment by the gNB, despite HARQ-ACK values for slot n-4 and n-3 are also available.

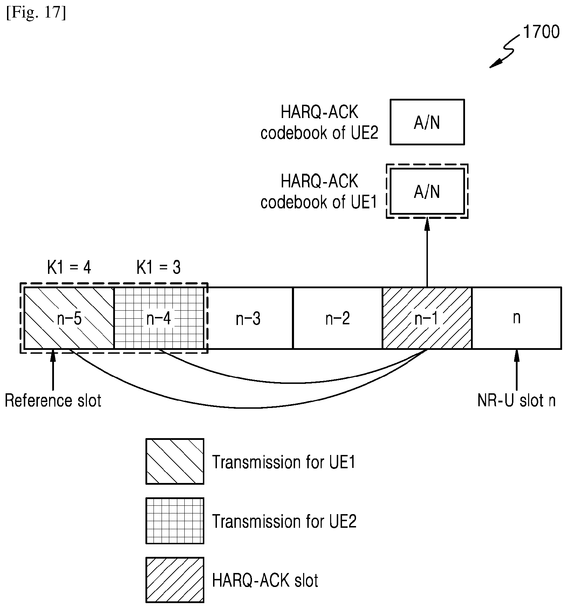

FIGURE 17 illustrates yet another example set of slots/mini-slots/partial slots 1700 according to embodiments of the present disclosure. The embodiment of the set of slots/mini-slots/partial slots 1700 illustrated in FIGURE 17 is for illustration only and could have the same or similar configuration. FIGURE 17 does not limit the scope of the present disclosure.

For another instance, FIGURE 17 provides another illustration wherein within the determined DL transmission burst from NR-U slot n-5 to n-4, the gNB schedules a UE1 and a UE2 at different NR-U slots, while both the UE1 and the UE2 responds HARQ-ACK in HARQ-ACK slot n-1. If determining slot n-5 (e.g., K=1) as the reference time-domain and frequency-domain resources for CW adjustment, only the HARQ-ACK value(s) from the UE1 is used for CW adjustment by the gNB, despite HARQ-ACK value(s) from the UE2 may also be available at NR-U slot n-1.

In one example of the reference HARQ slot(s) and/or mini-slot(s) and/or partial slot(s), for HARQ-ACK feedback(s) that are received on the reference HARQ slot(s) and/or mini-slot(s) and/or partial slot(s) by the timing that a gNB performs CW adjustment, both the HARQ-ACK feedback(s) corresponding to the reference time-domain and frequency-domain resources as well as all the other received HARQ-ACK feedback(s) can be utilized for CW adjustment.

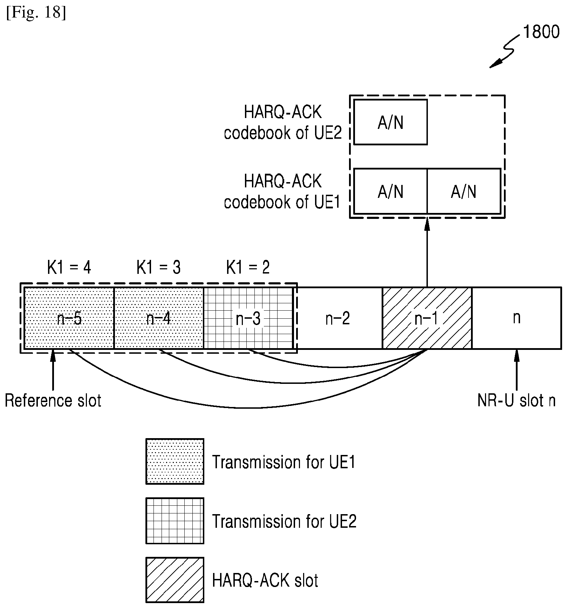

FIGURE 18 illustrates yet another example set of slots/mini-slots/partial slots 1800 according to embodiments of the present disclosure. The embodiment of the set of slots/mini-slots/partial slots 1800 illustrated in FIGURE 18 is for illustration only and could have the same or similar configuration. FIGURE 18 does not limit the scope of the present disclosure.

FIGURE 18 provides an illustration of this example, wherein the determined set of UL slot(s) and/or mini-slot(s) is slot n-1, and the determined previous DL transmission burst is from slot n-5 to n-3. The gNB expects all the HARQ-ACK codebooks available at slot n-1, and CW is adjusted based on all HARQ-ACK values in slot n-1.

In one example of the reference HARQ slot(s) and/or mini-slot(s) and/or partial slot(s), for HARQ-ACK feedback(s) that are received on the reference HARQ slot(s) and/or mini-slot(s) and/or partial slot(s) by the timing that a gNB performs CW adjustment, the HARQ-ACK feedback(s) corresponding to the reference time-domain and frequency-domain resources, and a subset of the remaining received HARQ-ACK feedback(s) that can meet certain constraint can be utilized for CW adjustment.

In one sub-example of the subset of the remaining received HARQ-ACK feedbacks, all of these remaining received HARQ-ACK feedback(s) can be utilized for CW adjustment.

In another sub-example of the subset of the remaining received HARQ-ACK feedbacks, the constraint on the remaining received HARQ-ACK feedback(s) can be that the received HARQ-ACK feedbacks have not been utilized in CW adjust decision before.

In yet another sub-example of the subset of the remaining received HARQ-ACK feedbacks, the constraint on the remaining received HARQ-ACK feedback(s) can be that only ACK or NACK can be utilized as additional information for current CW adjust decision.

In yet another sub-example of the subset of the remaining received HARQ-ACK feedbacks, the constraint on the remaining received HARQ-ACK feedback(s) can be that the received HARQ-ACK feedback corresponds to PDSCH transmission(s) that are within the first L slots and/or mini-slots and/or partial slots of the determined previous DL transmission burst can be utilized for CW adjustment.

In yet another sub-example of the subset of the remaining received HARQ-ACK feedbacks, the constraint on for the remaining received HARQ-ACK feedback(s) to be utilized for CW adjustment is that the received HARQ-ACK feedback corresponds to PDSCH transmission that is from the UE scheduled for PDSCH transmission(s) on the reference time-domain and frequency-domain resources for CW adjustment.

In yet another sub-example of the subset of the remaining received HARQ-ACK feedbacks, the constraint for the remaining received HARQ-ACK feedback(s) to be utilized for CW adjustment is that the received HARQ-ACK feedback(s) corresponds to the PDSCH transmission(s) on the same DL transmission burst as the reference HARQ slot(s) and/or mini-slot(s) and/or partial slot(s).

In yet another sub-example of the subset of the remaining received HARQ-ACK feedbacks, the constraints from the previous sub-examples can be used in combination.

In LTE-LAA, since the delay from PDSCH transmission to corresponding HARQ-ACK feedback delay is deterministic, each eNB may adjust the contention window based on a given reference subframe only once. For NR-U, due to flexible and configurable timing from PDSCH transmission to corresponding HARQ-ACK feedback delay (i.e., K_1), potential LBT failure for a UE to report HARQ-ACK, and potential HARQ-ACK enhancements, another consideration of this approach is the limit on how a gNB utilizes a given reference time-domain and frequency-domain resources for CW adjustment.

In one example of the limit on the utilization a given reference time-domain and frequency-domain resources for CW adjustment, a gNB may adjust the contention window based on a given set of reference time-domain and frequency-domain resources only once; and after the HARQ-ACK feedbacks corresponding to the given reference time-domain and frequency-domain resources have been utilized in adjusting contention window, the gNB may maintain the same contention window size until HARQ-ACK feedbacks corresponding to a new set of reference time-domain and frequency-domain resources become available. In one instance of this example, if any of the HARQ-ACK feedbacks corresponding to the given reference time-domain and frequency-domain resources have been utilized in adjusting contention window of a DL burst, this given reference time-domain and frequency-domain resources may not be utilized for CW adjust of later DL burst(s), similar to LTE-LAA.

In one example of the limit on the utilization a given reference time-domain and frequency-domain resources for CW adjustment, a gNB is allowed to adjust the contention window based on a given set of reference time-domain and frequency-domain resources more than once, if different transmission bursts decide to adjust CW size according to the same given set of reference time-domain and frequency-domain resources of a previous transmission burst, with potential additional constraint can be applied when a given set of reference time-domain and frequency-domain resources is utilized more than once in adjusting the CW size.

In one sub-example of the limit on the utilization a given reference time-domain and frequency-domain resources for CW adjustment, no additional constraint is needed.

In another sub-example of the limit on the utilization a given reference time-domain and frequency-domain resources for CW adjustment, the additional constraint to allow a given set of reference time-domain and frequency-domain resources to be utilized the n-th (n>1) time in adjusting the CW size is that, additional HARQ-ACK feedback (ACK/NACK/DTX) corresponding to the given set of reference time-domain and frequency-domain resources is received or expected to be received by the n-th time it is utilized in adjusting the CW size, compared to the previous n-1 times it has been utilized in adjusting the CW size.

In another sub-example of the limit on the utilization a given reference time-domain and frequency-domain resources for CW adjustment, the additional constraint can be that each received HARQ-ACK feedback (i.e., ACK or NACK) of a transmitted TB/CBG corresponding to the given reference time-domain and frequency-domain resource can only be used in the CW adjust decision at most once.

In one instance of this sub-example, when NR-U supports HARQ-ACK enhancement such that each HARQ-ACK feedback can have multiple opportunities to be transmitted or can be reported with additional opportunity (e.g., a UE initially fails LBT to report HARQ-ACK but requested/triggered by a gNB to report in an additional opportunity), this example can be extended to each opportunity of the HARQ-ACK feedback, such that any received HARQ-ACK feedback value (ACK/NACK/DTX) on each HARQ-ACK feedback opportunity corresponding to the given reference time-domain and frequency-domain resources can only be used in the CW adjust decision once.

In another instance of this example, when NR-U supports HARQ-ACK enhancement such that each HARQ-ACK feedback can have multiple opportunities to be transmitted or can be reported with additional opportunity (e.g., a UE initially fails LBT to report HARQ-ACK but requested/triggered by a gNB to report in an additional opportunity), this example can also allow at most one of the actually received HARQ-ACK feedbacks (i.e., ACK or NACK) of the multiple HARQ-ACK feedback opportunities (that correspond to the HARQ-ACK feedback of the same transmitted TB or CBG) to be used in the CW adjust procedure.

In another sub-example of the limit on the utilization a given reference time-domain and frequency-domain resources for CW adjustment, the additional constraint can be that an NR-U gNB may adjust CW only based on the HARQ-ACK feedback(s) of the given reference time-domain and frequency-domain resource(s) that haven't been utilized for CW adjust before.

In another sub- example of the limit on the utilization a given reference time-domain and frequency-domain resources for CW adjustment, the additional constraint specified above can be used in combination.

In another sub- example of the limit on the utilization a given reference time-domain and frequency-domain resources for CW adjustment, when the additional constraints for a given set of reference time-domain and frequency-domain resources to be utilized more than once in adjusting the CW size are not met, or HARQ-ACK feedbacks satisfying the additional constraints for a given set of reference time-domain and frequency-domain resources to be utilized more than once in adjusting the CW size are not available, the CW size can remain unchanged; otherwise the CW size can be adjusted.

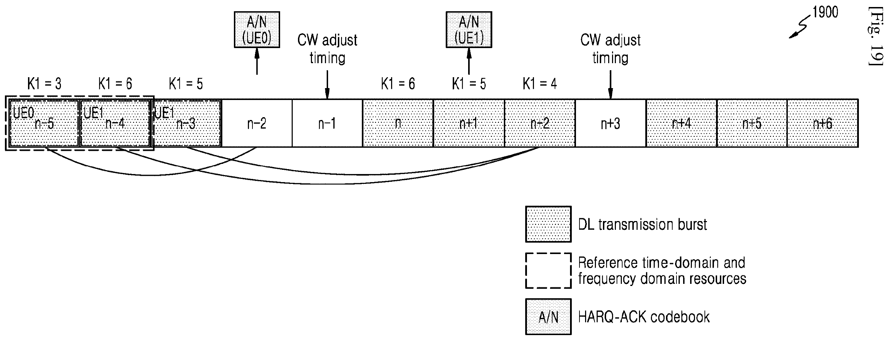

FIGURE 19 illustrates yet another example set of slots/mini-slots/partial slots 1900 according to embodiments of the present disclosure. The embodiment of the set of slots/mini-slots/partial slots 1900 illustrated in FIGURE 19 is for illustration only and could have the same or similar configuration. FIGURE 19 does not limit the scope of the present disclosure.

In one instance of the limit on the utilization a given reference time-domain and frequency-domain resources for CW adjustment, due to the flexible HARQ-ACK feedback timing and potential HARQ-ACK enhancements, a gNB can adjust the contention window based on a given set of reference time-domain and frequency-domain resources more than once, wherein different transmission bursts (e.g., DL burst 1 followed by DL burst 2) can correspond to the same reference time-domain and frequency-domain resources of a previous transmission burst (e.g., DL burst 0), and the available HARQ-ACK values corresponding to the reference time-domain and frequency-domain resources at these transmission bursts (e.g., DL burst 1 followed by DL burst 2) can be different.

An illustration of this instance is provided in FIGURE 19, wherein DL burst 0, 1, and 2 spans from slot n-5 to n-3, slot n to slot n+2, and slot n+4 to slot n+6 respectively, and K1 represents the PDSCH to HARQ delay in terms of number of NR-U slots. In the illustration of FIGURE 19, the CW adjust for DL burst 1 and DL burst 2 all can be based on HARQ-ACK feedback of PDSCH transmission(s) on DL burst 0. As a result, a gNB adjusts the contention window based on the reference time-domain and frequency-domain resources of DL burst 0 twice.

Given the determination of the reference time-domain and frequency-domain resources for CW adjust, another design consideration is the determination of the HARQ-ACK feedback resources that may be utilized for CW adjust by the timing that a gNB performs the CW adjust action.

In one example, by the timing that a gNB performs the CW adjust action (e.g., when an NR-U gNB starts to perform a new CAT-4 LBT procedure to initialize a DL transmission), the CW adjust decision by the gNB may be based on all or a subset of the HARQ-ACK values corresponding to the reference time-domain and frequency-domain resources for CW adjustment, wherein the reference time-domain and frequency-domain resources can be determined, and potentially additional HARQ-ACK values under certain constraints.

In one example, the CW adjust decision by the gNB may only be based on all of the HARQ-ACK values corresponding to the reference time-domain and frequency-domain resources that are expected to be received by the timing that the gNB performs the CW adjust action, wherein each HARQ-ACK value can be ACK, NACK, or DTX.

In one example, the CW adjust decision by a gNB may only be based on all of the HARQ-ACK values corresponding to the reference time-domain and frequency-domain resources that have been received by the timing that the gNB performs the CW adjust action, wherein each HARQ-ACK value can be ACK or NACK. In one sub-example, for the HARQ-ACK feedbacks corresponding to the reference time-domain and frequency-domain resources that are expected to be received but are not received (i.e., DTX) by the time the gNB adjusts a CW size, such HARQ-ACK feedbacks do not contribute to the CW adjust decision.

In one example, the CW adjusting a decision by the gNB may only be based on the subset of the HARQ-ACK values corresponding to the reference time-domain and frequency-domain resources that have been received or expected to be received by the timing that the gNB performs the CW adjust action, and have not yet been utilized in adjusting the CW by the gNB.

In one example, by the time a gNB performs CW adjust decision, the HARQ-ACK feedbacks that correspond to the reference time-domain and frequency-domain resources that are not yet expected to be received (i.e., delayed HARQ-ACK) can be not counted towards the CW adjust decision.

In one example, by the time a gNB performs CW adjust decision, the HARQ-ACK feedbacks that correspond to the reference time-domain and frequency-domain resources that are not yet expected to be received (e.g., delayed HARQ-ACK) can be counted towards the CW adjust decision. In a sub-example of this example, such delayed HARQ-ACK feedbacks can be treated as NACK in the CW adjust decision, wherein the CW adjust rule may be specified in following embodiment. In another sub-example of this example, such delayed HARQ-ACK feedbacks can be treated as DTX in the CW adjust decision, wherein the CW adjust rule may be specified in following embodiment.

In one example, when a gNB is allowed to adjust the contention window based on a given set of reference time-domain and frequency-domain resources more than once, the additional constraint for a given set of reference time-domain and frequency-domain resources to be utilized more than once in adjusting the CW size, which can be chosen according to the example of the limit on the utilization a given reference time-domain and frequency-domain resources for CW adjustment, can be applied to other examples in selecting the subset of the HARQ-ACK values corresponding to the reference time-domain and frequency-domain resources for CW adjustment.

In one example, additional received HARQ-ACK values in addition to the HARQ-ACK values corresponding to the reference time-domain and frequency-domain resources, can be utilized for the current CW adjust decision under certain criteria. Otherwise, a gNB may only be based on all or a subset of the HARQ-ACK values corresponding to the current reference time-domain and frequency-domain resources for CW adjustment.

In one sub-example, the criteria to allow additional HARQ-ACK values to be used for current CW adjust decision can be that the fraction of "DTX" (i.e., missing ACK or NACK) and/or the delayed HARQ/ACK (i.e., HARQ-ACK with large PDSCH to HARQ delay $K1$ so it is not received by the time a gNB adjusts CW size) over the total number of HARQ-ACK values corresponding to the reference time-domain and frequency-domain resources that are expected to be received or have been received by the timing a gNB adjusts CW is larger than or equal to a certain threshold X.

In another sub-example, the criteria to allow additional HARQ-ACK values to be used for current CW adjust decision can be that the fraction of "DTX" (i.e., missing ACK or NACK) and/or the delayed HARQ/ACK (i.e., HARQ-ACK with large PDSCH to HARQ delay $K1$ so HARQ-ACK is not received by the time a gNB adjusts CW size) over the total number of HARQ-ACK values corresponding to the reference time-domain and frequency-domain resources is larger than or equal to a certain threshold X.

In another sub-example, the criteria to allow additional HARQ-ACK values to be used for current CW adjust decision can be that the number of additional HARQ-ACK values, which are HARQ-ACK values belong to a different set of reference time and frequency resources (compared to current set of reference time and frequency resources) but have not yet been utilized for CW adjust decision (e.g., missed ACK/NACK due to previous LBT failure, and/or the delayed HARQ/ACK, or cross-COT ACK/NACK), have exceeded a certain threshold. For instance, the number of HARQ-ACK values for CBG-based TB can be counted on a per-TB basis (e.g., 1 for the whole TB if any CBG-based HARQ-ACK of the TB is received), or on a per-CBG basis (e.g., 1 for every CBG-based HARQ-ACK that has been received).

In another sub-example, the criteria to allow additional HARQ-ACK values to be used for current CW adjust decision can be that the number of additional HARQ-ACK values, which are HARQ-ACK values belong to a different set of reference time and frequency resources (compared to current set of reference time and frequency resources) but have not yet been utilized for CW adjust decision (e.g., missed ACK/NACK due to previous LBT failure, and/or the delayed HARQ/ACK, or cross-COT ACK/NACK), over the total number of HARQ-ACK values of the set of reference time and frequency resources that correspond to the additional HARQ-ACK values, have exceeded a certain threshold. For instance, the number of HARQ-ACK values for CBG-based TB can be counted on a per-TB basis (e.g., 1 for the whole TB if any CBG-based HARQ-ACK of the TB is received), or on a per-CBG basis (e.g., 1 for every CBG-based HARQ-ACK that has been received).

In another sub-example, the additional HARQ-ACK values can be the actually received HARQ-ACK value(s) (i.e., ACK or NACK) corresponding to previous reference time-domain and frequency-domain resource(s), which are associated with the DL transmission burst(s) that come earlier than the determined DL transmission burst of the current reference time-domain and frequency-domain resources, and have been received by the timing that a gNB performs CW adjust. For instance, such ACK/NACK can be reported by the UEs through HARQ-ACK retransmission and/or cross-COT HARQ-ACK reporting.

In another sub-example, the additional HARQ-ACK values can be the actually received HARQ-ACK values (i.e., ACK or NACK) corresponding to PDSCH transmission(s) other than those from the current reference time-domain and frequency-domain resources, but from the same determined DL transmission burst as the current reference time-domain and frequency-domain resources.

In another sub-example, the additional HARQ-ACK values can be the actually received HARQ-ACK value(s) (i.e., ACK or NACK) corresponding to reference time-domain and frequency-domain resource(s), which are associated with the DL transmission burst(s) that come after the determined DL transmission burst of the current reference time-domain and frequency-domain resources, but have been received by the timing that a gNB performs the current CW adjust decision.

In another sub-example, when the criteria that allows additional HARQ-ACK to be used for CW adjust has met, the additional HARQ-ACK values determined from this example (e.g., according to the mentioned examples/embodiments/instances, or combination of the mentioned examples/embodiments/instances) can be used in combination with the HARQ-ACK values corresponding to the reference time-domain and frequency-domain resources for CW adjustment. This sub-example can be triggered depending on the value of X.

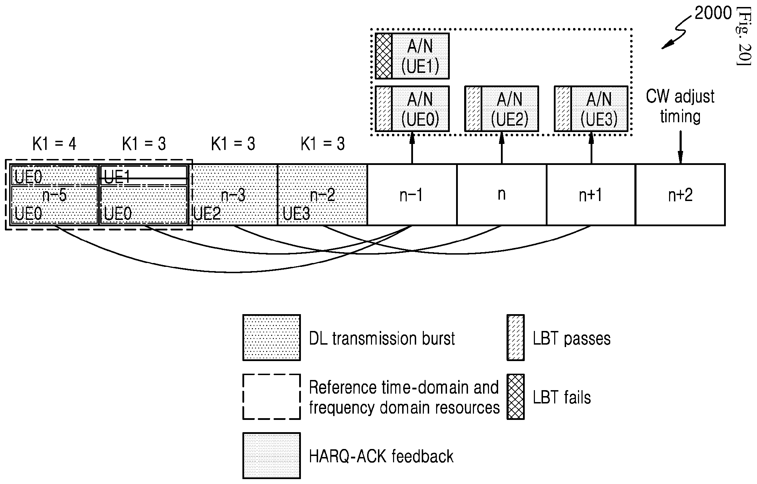

FIGURE 20 illustrates yet another example set of slots/mini-slots/partial slots 2000 according to embodiments of the present disclosure. The embodiment of the set of slots/mini-slots/partial slots 2000 illustrated in FIGURE 20 is for illustration only and could have the same or similar configuration. FIGURE 20 does not limit the scope of the present disclosure.

As illustrated in FIGURE 20, with X = 50%, wherein the fraction of "DTX" over the total number of expected HARQ-ACK values corresponding to the reference time-domain and frequency-domain resources is 50%; thus both the HARQ-ACK feedbacks for the reference time-domain and frequency-domain resources, and additional HARQ-ACK values corresponding to PDSCH transmission(s) other than those from the current reference time-domain and frequency-domain resources, which is chosen according to the sub-example, are utilized for CW adjust.

In one sub-example, when the criteria that allows additional HARQ-ACK to be used for CW adjust has met, CW adjustment can only utilize the additional HARQ-ACK values determined from this example (e.g., according to the mentioned examples), while the HARQ-ACK values corresponding to the reference time-domain and frequency-domain resources may not be utilized. This sub-example can be triggered depending on the value of X. For instance, when X = 1, this sub-example can be utilized.

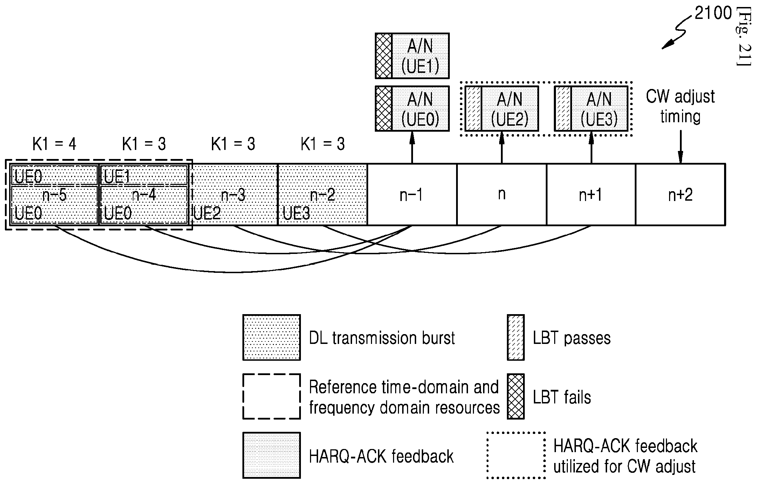

FIGURE 21 illustrates yet another example set of slots/mini-slots/partial slots 2100 according to embodiments of the present disclosure. The embodiment of the set of slots/mini-slots/partial slots 2100 illustrated in FIGURE 21 is for illustration only and could have the same or similar configuration. FIGURE 21 does not limit the scope of the present disclosure.

As illustrated in FIGURE 21, wherein the fraction of "DTX" over the total number of expected HARQ-ACK values corresponding to the reference time-domain and frequency-domain resources is 100%, and X can be any value smaller than or equal to 1. In addition, CW adjust only utilizes the additional HARQ-ACK values corresponding to PDSCH transmission(s) other than those from the current reference time-domain and frequency-domain resources, which is chosen according to the sub-example, are utilized for CW adjust.

In one sub-example, additional constraints can be applied when down-selecting the additional received HARQ-ACK values that can be used for CW adjust decision. In one instance, the additional received HARQ-ACK values that have not yet been utilized for any previous CW adjust decisions by the timing that gNB performs the current CW size adjust decision are able to be utilized for current CW adjust decision.

In one instance, when the threshold is X = 0, then the additional HARQ-ACK values (if any), i.e., the received ACK/NACK corresponding to previous reference time-domain and frequency-domain resources and those have not yet been utilized in adjusting CW, may always be utilized for the current CW adjust decision.

In another instance, when the threshold X is a very small positive number (e.g., 1e-10), then the additional HARQ-ACK values (if any) may be utilized for CW adjust whenever there is a DTX received (i.e., ACK/NACK is missed) by the timing that gNB performs CW adjust, wherein the DTX corresponds to the reference time domain and frequency domain resources for CW adjust.

In another instance, when the threshold X is 1, then the additional HARQ-ACK values (if any) may be utilized for CW adjust when all the HARQ-ACK values corresponding to the reference time-domain and frequency-domain resources that are expected to be received by the timing gNB adjust CW are "DTX."

In another instance, when the threshold X is larger than 1, then the additional HARQ-ACK values may always not be utilized for CW adjust.

In another instance, additional HARQ-ACK can be used for current CW adjust decision if the initial transmission(s) of such HARQ-ACK has failed (e.g., due to LBT failure) and/or such HARQ-ACK was delayed to be reported in a later time, and such HARQ-ACK feedback has been received in a later time-domain instance before the current timing for CW adjust decision.

In one example, a gNB is able to dynamically switch the HARQ-ACK feedback resources that may be utilized for CW adjust by the timing that gNB performs the CW adjust action, wherein the switching decision can be based on the received HARQ-ACK feedback values corresponding to the current reference time-domain and frequency-domain resources.

In one sub-example, under the scenario that the fraction of "DTX" (i.e., missing ACK or NACK) and/or the delayed HARQ/ACK (i.e., HARQ-ACK with large PDSCH to HARQ delay K1 so HARQ-ACK is not received by the time gNB adjusts CW size) over the total number of HARQ-ACK values corresponding to the reference time-domain and frequency-domain resources that are expected to be received or have been received by the timing gNB adjust CW is larger than or equal to a certain threshold X, CW adjustment can only utilize the additional HARQ-ACK values determined (e.g., according to the mentioned embodiments/examples/instances), while the HARQ-ACK values corresponding to the reference time-domain and frequency-domain resources may not be utilized.

This sub-example can be equivalent to when there are missing ACK/NACK from the current reference time-domain and frequency-domain resources, the gNB is able to dynamically change the reference time-domain and frequency-domain resources for the CW adjust decision. In another sub-example, under the scenario that the fraction of "DTX" (i.e., missing ACK or NACK) and/or the delayed HARQ/ACK (i.e., HARQ-ACK with large PDSCH to HARQ delay K1 so HARQ-ACK is not received by the time gNB adjusts CW size) over the total number of HARQ-ACK values corresponding to the reference time-domain and frequency-domain resources is larger than or equal to a certain threshold X, CW adjustment can only utilize the additional HARQ-ACK values determined (e.g., according to the mentioned embodiments/examples/instances), while the HARQ-ACK values corresponding to the reference time-domain and frequency-domain resources may not be utilized.

This sub-example can be equivalent to when there are missing ACK/NACK from the current reference time-domain and frequency-domain resources, the gNB is able to dynamically change the reference time-domain and frequency-domain resources for the CW adjust decision.

In another sub-example, under the scenario that the total number of HARQ-ACK values corresponding to the reference time-domain and frequency-domain resources that are expected to be received by the timing gNB adjusts CW is smaller than a threshold X, CW adjustment can only utilize the HARQ-ACK values corresponding to the current reference time-domain and frequency-domain resources, which can be determined from the mentioned embodiments/examples/instances.

In another sub-example, the CW adjustment can only utilize the additional HARQ-ACK values determined from the mentioned embodiments/examples/instances while the HARQ-ACK values corresponding to the reference time-domain and frequency-domain resources may not be utilized under the following scenario that: the number of additional HARQ-ACK values, which are HARQ-ACK values belong to a different set of reference time and frequency resources (compared to current set of reference time and frequency resources) but have not yet been utilized for CW adjust decision (e.g., missed ACK/NACK due to previous LBT failure, and/or the delayed HARQ/ACK, or cross-COT ACK/NACK) have exceeded a certain threshold.

For instance, the number of HARQ-ACK values for CBG-based TB can be counted on a per-TB basis (e.g., 1 for the whole TB if any CBG-based HARQ-ACK of the TB is received), or on a per-CBG basis (e.g., 1 for every CBG-based HARQ-ACK that has been received). This sub-example can be equivalent to when there are ACKs/NACKs from reference time-domain and frequency-domain resources that are different from current reference time-domain and frequency-domain resources, and such ACKs/NACKs have not yet been utilized in adjusting the CWS, the gNB is able to dynamically change the reference time-domain and frequency-domain resources for the CW adjust decision.

In another sub-example, the CW adjustment can only utilize the additional HARQ-ACK values determined from the mentioned embodiments/examples/instances while the HARQ-ACK values corresponding to the reference time-domain and frequency-domain resources may not be utilized under the following scenario that: the fraction between the number of additional HARQ-ACK values, which are HARQ-ACK values belonging to a different set of reference time and frequency resources (compared to current set of reference time and frequency resources) but have not yet been utilized for CW adjust decision (e.g., missed ACK/NACK due to previous LBT failure, and/or the delayed HARQ/ACK, or cross-COT ACK/NACK), over the total number of HARQ-ACK values of the set of reference time and frequency resources that correspond to the additional HARQ-ACK values, have exceeded a certain threshold.

For instance, the number of HARQ-ACK values for CBG-based TB can be counted on a per-TB basis (e.g., 1 for the whole TB if any CBG-based HARQ-ACK of the TB is received), or on a per-CBG basis (e.g., 1 for every CBG-based HARQ-ACK that has been received). This sub-example can be equivalent to when there are ACKs/NACKs from reference time-domain and frequency-domain resources that are different from current reference time-domain and frequency-domain resources, and such ACKs/NACKs have not yet been utilized in adjusting the CWS, the gNB is able to dynamically change the reference time-domain and frequency-domain resources for the CW adjust decision.

In one example, determining the HARQ-ACK feedback resources may be utilized for CW adjust by the timing that gNB performs the CW adjust action.

Given the determination of the reference time-domain and frequency-domain resources for CW adjust, and the determination of the HARQ-ACK feedback resources that may be utilized for CW adjust by the timing that gNB performs the CW adjust action, another design consideration is the timing wherein the gNB may perform the CW adjust action.

The baseline timing wherein the gNB may perform the CW adjust action, which can be the same as that of LTE-LAA, is before gNB generates the random back-off counter for the new CAT-4 LBT procedure to initialize a DL transmission. By the baseline timing, the gNB may determine and collect the HARQ-ACK feedbacks that may be utilized for the CWS adjust decision, and perform the CWS adjust decision according to the embodiments/examples/instances.

Due to the flexible PDSCH to HARQ-ACK delay and potential HARQ-ACK enhancements for NR-U, it is possible for the NR-U gNB to receive ACK/NACK feedbacks during the CAT-4 LBT process, which is reported either from a different carrier or the same carrier of the gNB. As a result, additional timing for a gNB to perform CW adjust action can be supported for NR-U, compared to the baseline timing.

In one example, in addition to supporting CW adjust to be performed before gNB generates the random back-off counter for a new CAT-4 LBT procedure to initialize a DL transmission, additional CW adjust timing(s) for NR-U can be supported during the CAT-4 LBT process when certain condition is met.

In one example, only CW adjust performed before gNB generates the random back-off counter for a CAT-4 LBT procedure to initialize a DL transmission can be allowed; while the ACK/NACK feedbacks received during the current CAT-4 LBT process can potentially be utilized for CW adjust decision before the next CAT-4 LBT process.

In one example, the condition for allowing additional CW adjust timing(s) can be that after the most recent baseline timing for CW adjust (e.g., during the CAT-4 LBT process), additional ACK/NACK values are received during the CAT-4 LBT process.

In one example, the condition for allowing additional CW adjust timing(s) can be that additional ACK/NACK values are received after the most recent baseline timing for CW adjust (e.g., during the CAT-4 LBT process), and that CW size was maintained (e.g., due to missed ACK/NACK or maximum CW size is reached) for the CW adjust decision before a gNB generates the random back-off counter for the current CAT-4 LBT process.

In one example, the condition for allowing additional CW adjust timing(s) can be that after the most recent baseline timing for CW adjust (e.g., during the CAT-4 LBT process), additional ACK/NACK values are received during the CAT-4 LBT process, and that CW size was increased for the CW adjust decision before a gNB generates the random back-off counter for the current CAT-4 LBT process.

In one example, the condition for allowing additional CW adjust timing(s) can be that after the most recent baseline timing for CW adjust (e.g., during the CAT-4 LBT process), additional ACK/NACK values are received during the CAT-4 LBT process; and that among the HARQ-ACK feedbacks which correspond to the reference time-domain and frequency-domain resources utilized in updating the CW size for current LBT process and are expected to be received by the timing that a gNB adjusts CW before the gNB generates the random back-off counter for the current CAT-4 LBT process, the fraction of DTX received over all the expected HARQ-ACK feedbacks exceed certain threshold X. For instance, when $X = 1$, this means no new HARQ-ACK information was available when updating the CW size at the start of the CAT-4 LBT process.

In one example, which can be utilized in combination with the mentioned example/embodiments/instances, the condition for allowing additional CW adjust timing(s) can be that after the most recent baseline timing for CW adjust (e.g., during the CAT-4 LBT process), the number of additional ACK/NACK bits that are received exceed a certain threshold T, and/or that the number of scheduled UEs that these additionally received ACK/NACK bits correspond to exceed another threshold N.

In one sub-example, the gNB can receive ACK/NACK values at multiple time-domain positions during the current CAT-4 LBT process, and CW adjust is allowed when the accumulated number of ACK/NACK values exceed threshold T and/or the number of scheduled UEs these ACK/NACK values correspond to exceed threshold N.

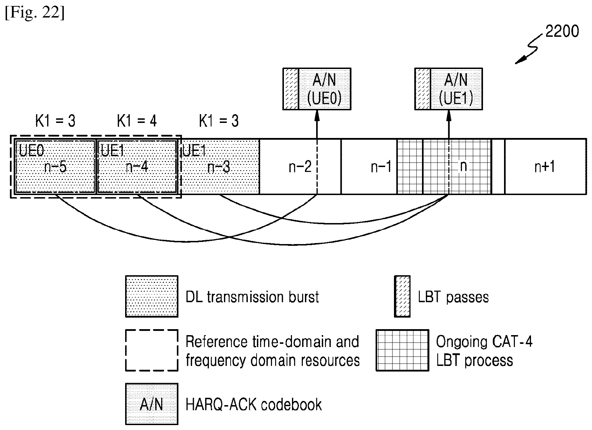

FIGURE 22 illustrates yet another example set of slots/mini-slots/partial slots 2200 according to embodiments of the present disclosure. The embodiment of the set of slots/mini-slots/partial slots 2200 illustrated in FIGURE 22 is for illustration only and could have the same or similar configuration. FIGURE 22 does not limit the scope of the present disclosure.

In one example, the additional ACK/NACK values received after the most recent baseline timing for CW adjust (e.g., during the CAT-4 LBT process), which correspond to the reference time-domain and frequency-domain resources that are utilized in adjusting the CW of current CAT-4 LBT process, can be utilized for the additional CW adjust of this approach.

Ans illustrated in FIGURE 22, wherein under the mentioned example, the CW can be adjusted based on ACK/NACK from UE1 during the ongoing CAT-4 LBT process if the respective condition for each example is met.

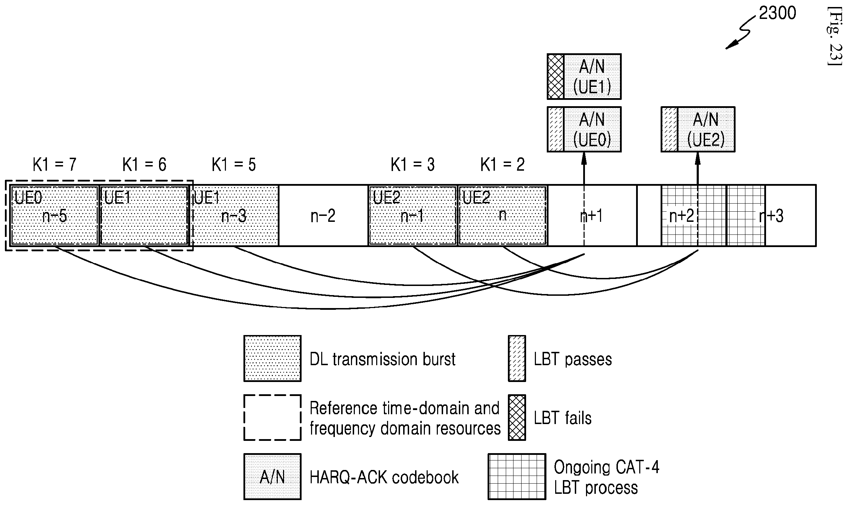

FIGURE 23 illustrates yet another example set of slots/mini-slots/partial slots 2300 according to embodiments of the present disclosure. The embodiment of the set of slots/mini-slots/partial slots 2300 illustrated in FIGURE 23 is for illustration only and could have the same or similar configuration. FIGURE 23 does not limit the scope of the present disclosure.

In one example, the additional ACK/NACK values received after the most recent baseline timing for CW adjust (e.g., during the CAT-4 LBT process), which correspond to a new reference time-domain and frequency-domain resources and whose corresponding determined DL transmission burst comes later than that of the reference time-domain and frequency-domain resources that are utilized in adjusting the CW of current CAT-4 LBT process, can be utilized for the additional CW adjust of this approach.

As illustrated in FIGURE 23, wherein for the current CAT-4 LBT process that starts from slot n+2, the CW size for initiating the CAT-4 LBT is based on the HARQ-ACK feedbacks corresponding to the DL burst from slot n-5 to slot n-3; while additional ACK/NACK values corresponding to the DL burst from slot n-1 to slot n are received during the current CAT-4 LBT process. Under the mentioned examples, the CW can be adjusted based on ACK/NACK received during the ongoing CAT-4 LBT process if the respective condition for each example is met.

In one example, the additional ACK/NACK values received after the most recent baseline timing for CW adjust (e.g., during the CAT-4 LBT process), which correspond to the reference time-domain and frequency-domain resources whose corresponding determined DL transmission burst comes earlier than that of the reference time-domain and frequency-domain resources that are utilized in adjusting the CW of current CAT-4 LBT process, can be utilized for the additional CW adjust of this approach.

In one example, an example may be utilized in a combination of one or more the mentioned examples/instances/embodiments.

In one example, the CW can be adjusted based on the minimum UE processing timing (e.g., HARQ processing time) and correspondingly the UE capability for the UE(s) scheduled on the reference time-domain and frequency-domain resources.

In one sub-example, when a single UE is scheduled on the reference time-domain and frequency-domain resources, the CW can remain unchanged within the minimum UE processing timing, and the CW is allowed to be updated outside the minimum processing timing.

In another sub-example, when multiple UEs are scheduled on the reference time-domain and frequency-domain resources, the UE minimum processing timing for the reference time-domain and frequency-domain resources can be determined as the maximum of the UE minimum processing time for each of the UE scheduled on the reference time-domain and frequency-domain resources; and the CW can remain unchanged within the minimum UE processing timing for the reference time-domain and frequency-domain resources, and the CW is allowed to be updated outside the UE minimum processing timing for the reference time-domain and frequency-domain resources.

In yet another sub-example, when multiple UEs are scheduled on the reference time-domain and frequency-domain resources, the UE minimum processing timing for the reference time-domain and frequency-domain resources can be determined as the minimum of the UE minimum processing time for each of the UE scheduled on the reference time-domain and frequency-domain resources; and the CW can remain unchanged within the minimum UE processing timing for the reference time-domain and frequency-domain resources, and the CW is allowed to be updated outside the UE minimum processing timing for the reference time-domain and frequency-domain resources.

In yet another sub-example, one example can be utilized in a combination of the mentioned embodiments/examples/instances.

In one example, the CW can be adjusted based on the configured PDSCH to HARQ delay (i.e., K1) values for the UE(s) scheduled on the reference time-domain and frequency-domain resources.

In one sub-example, when a single UE is scheduled on the reference time-domain and frequency-domain resources, the CW can remain unchanged within configured K1 of the UE, and the CW is allowed to be updated outside configured K1 of the UE.

In another sub-example, when multiple UEs are scheduled on the reference time-domain and frequency-domain resources, the configured K1 for the reference time-domain and frequency-domain resources can be determined as the *maximum* of the K1 configured for each of the UE scheduled on the reference time-domain and frequency-domain resources; and the CW can remain unchanged within the configured K1 for the reference time-domain and frequency-domain resources, and the CW is allowed to be updated outside the configured K1 for the reference time-domain and frequency-domain resources.

In yet another sub-example, when multiple UEs are scheduled on the reference time-domain and frequency-domain resources, the configured K1 for the reference time-domain and frequency-domain resources can be determined as the *minimum* of the K1 configured for each of the UE scheduled on the reference time-domain and frequency-domain resources; and the CW can remain unchanged within the configured K1 for the reference time-domain and frequency-domain resources, and the CW is allowed to be updated outside the configured K1 for the reference time-domain and frequency-domain resources.

In one example, in additional to the baseline CW adjust timing, the CW can be adjusted when after the most recent baseline timing for CW adjust (e.g., during the CAT-4 LBT process), the fraction of actually received HARQ-ACK feedbacks (i.e., ACK or NACK) of a reference time-domain and frequency-domain resource, over the total number of expected HARQ-ACK values corresponding to this reference time-domain and frequency-domain resources for the most recent CW adjust baseline timing exceed a certain threshold Y%.

In one example, there can exist a constraint on the maximum number of allowed CW adjust timing(s) during the CAT-4 LBT process. For instance, the constraint can be at most 1 CW adjust timing is allowed during the ongoing CAT-4 LBT process.

Based on the determination of the timing and the reference time-domain and frequency-domain resources for CW adjust, and the determination of the corresponding HARQ-ACK feedback resources that may be utilized for CW adjust, the actual CW adjust rule is specified in the next embodiment.

In one embodiment, a contention window adjust rule based on received HARQ-ACK feedbacks is provided.

In such embodiment, the approaches and examples in the CWS adaptation rule for a gNB are provided, based on the HARQ-ACK feedbacks determined according to the mentioned embodiment.

In addition, it is possible for a gNB to perform parallel LBTs over multiple frequency units within its wideband carrier and that multiple CWSs are maintained by the gNB, with each CWS being maintained corresponding to HARQ-ACK feedbacks on a different set of frequency unit(s). In this case, the CWS adaptation rules in this example can be applied independently for each of such CWSs, with each CWS being maintained according to the HARQ-ACK feedbacks determined from the mentioned embodiment, on the set of frequency unit(s) that this CWS depends on.

By the timing that a gNB performs CW adjust (e.g., at NR-U slot n), the gNB may collect a set of HARQ-ACK feedback resources as determined from the mentioned embodiment 1 for the current CW adjust decision, which can be denoted by $H = \{HARQ_1; ... , HARQ_m\}$; wherein HARQ_i ($1 \leq i \leq m$) represents the HARQ-ACK feedback(s) that correspond to the transport block (TB) transmitted to a scheduled UE, which is a set of HARQ-ACK information bits, whose size is 1 when TB-based HARQ-ACK feedback is used, and the size of HARQ_i ($1 \leq i \leq m$) is larger than 1 when CBG-based HARQ-ACK feedback is used. The value for each element of HARQ_i ($1 \leq i \leq m$) can correspond to ACK, NACK, or DTX (i.e., ACK or NACK is not received).

In one example of the set of HARQ-ACK feedbacks H, when a (re)transmitted TB is CBG-based, corresponding set HARQ_i ($1 \leq i \leq m$) can only contain the ACK/NACK bits for the actually transmitted CBGs (e.g., determined through CBG transmission information (CBGTI) equals 1 in DCI) while the HARQ-ACK of CBG(s) with CBGTI = 0 can be ignored, since these are the HARQ-ACK information bits that are useful in determining if the TB is transmitted successful or not.

In one example of the set of HARQ-ACK feedbacks H, when a (re)transmitted TB is CBG-based, corresponding set HARQ_i ($1 \leq i \leq m$) can contain the ACK/NACK bits for the actually transmitted CBGs (e.g., determined through CBG transmission information (CBGTI) equals 1 in DCI), and the HARQ-ACK of CBG(s) with CBGTI = 0 can be treated as receiving ACK, since these CBG(s) are not scheduled for re-transmission by the gNB.

In one instance, the CW size is incremented to the next available value of the corresponding channel access priority class if the fraction of NACK'ed received TBs exceeds a certain threshold $\eta$ ($0 \leq \eta < 1$), otherwise the CW size is set to the minimum CW size of the corresponding channel access priority class; wherein when a TB is grouped into multiple CBGs, whether or not this TB is ACK'ed or NACK'ed can be defined according to a predefined rule.

In one example, the threshold fraction of NACK'ed TBs can be $\eta = 80\%$.

Before a gNB performs the CW adjust decision, it needs to determine how "DTX" received in the set of HARQ-ACK feedback resources H may be utilized for CW adjust.

In one example, for the missed ACK/NACK or equivalently received DTX in each set of HARQ-ACK resources HARQ_i ($1 \leq i \leq m$) that may be utilized in adjusting the CW, each DTX can be treated as NACK and the CW adjust rule(s) specified in the mentioned examples/instances/embodiments can be used.

In one example, for the missed ACK/NACK or equivalently received DTX in each set of HARQ-ACK resources HARQ_i ($1 \leq i \leq m$) that may be utilized in adjusting the CW, each DTX can be not counted and therefore not contributed into the CW adjust rule specified in the mentioned examples/instances/embodiments.
In addition, DTX not counted and therefore not contributed into the CW adjust rule means within the set of HARQ-ACK feedback resources for CW adjust, i.e., $H = \{HARQ\_1, ... , HARQ\_m\}$, the element(s) with value of "DTX" may be excluded from the set H for the CW adjust decision. For instance, if the i-th element of H is HARQ_i = {"DTX"}, then HARQ_i may be treated as an empty set for the CW adjust decision. The same rule applies to the rest of these embodiments/examples/instances.

In one example, for the missed ACK/NACK or equivalently received DTX in each set of HARQ-ACK resources HARQ_i ($1 \leq i \leq m$) that may be utilized in adjusting the CW, whether DTX is treated as NACK or DTX is not counted for CW adjust, when applying to the CW adjust rule specified in the mentioned embodiments/examples/instances, can be configurable and/or dynamically changed. In one sub-example, this can be dependent on whether or not HARQ-ACK enhancements are supported such that the missing ACK/NACK (i.e., DTX) can be either triggered (either by gNB or UE) to report in a later COT or have opportunities to be reported in other time/frequency resources; wherein the missing ACK/NACK can be not counted for CW adjustment if such enhancements are supported, otherwise the missing ACK/NACK can be treated as NACK.

After the gNB has determined how to treat missed ACK/NACK (i.e., DTX) for the CW adjust decision, the actual CW adjust rule can be as follows.

In one example, the predefined rule in determining if the CBG-based TB may be ACK'ed or NACK'ed can be based on that for the set of HARQ-ACK feedbacks for this TB, denoted by HARQ_i (1<=i<=m), the fraction of ACK'ed CBGs; wherein this CBG-based TB is NACK'ed if the ratio of the number of NACK'ed CBGs over the number of HARQ-ACK bits (i.e., the cardinality) of HARQ_i is larger than certain threshold , with 0 <= < 1.

In one sub-example, the actually transmitted CBGs of this TB can be determined from DCI parameter CBG transmission information (CBGTI). In another sub-example, the threshold can be 0, which means the TB is NACK'ed as long as any one of the transmitted CBGs is NACK'ed. In another sub-example, the threshold can be smaller than but very close to 1, e.g., 0.99999, such that the TB is NACK'ed only if all the transmitted CBGs are NACK'ed, or equivalently the TB is ACK'ed if any CBG is ACK'ed.

In one example, the predefined rule in determining if the CBG-based TB may be ACK'ed or NACK'ed can be based on the ACK/NACK information for a determined reference CBG(s) among the actually transmitted CBGs of this TB.

In one sub-example, the reference CBG(s) can be the first K >=1 CBGs among the actual transmitted CBGs of this TB, which are transmitted earlier than the remaining CBGs among the actually transmitted CBGs of this TB. In another sub-example, the CBG-based TB is NACK'ed if (number of reference CBGs NACK'ed/number of total reference CBGs of this TB) is larger than a certain threshold , with 0 <= < 1. In one instance of this sub-example, the threshold can be 0, which means the TB is NACK'ed as long as any one of the reference CBGs is NACK'ed. In another instance of this sub-example, the threshold can be smaller than but very close to 1, e.g.,0.99999, such that the TB is NACK'ed only if all the reference CBGs are NACK'ed, or equivalently TB is ACK'ed if any reference CBG is ACK'ed.

In one example, by the timing that a gNB performs CW adjust (e.g., at NR-U slot n), the HARQ-ACK feedback resources that gNB uses for current CW adjust decision are determined and collected according to the mentioned examples/instances/embodiments. In one sub-example, the NACK'ed received TBs in this approach is computed among the selected HARQ-ACK feedback resources that may be utilized for current CW adjust decision.

In one example, the CW size is incremented to the next available value of the corresponding channel access priority class if the weighted average fraction of NACK bits that the gNB receives from H = {HARQ_1, ..., HARQ_m} exceeds a certain threshold $\eta$ (0 <= $\eta$ < 1), otherwise the CW size is set to the minimum CW size of the corresponding channel access priority class; wherein when a TB is grouped into multiple CBGs, the HARQ-ACK bit for each CBG (when configured) can be treated independently in determining the weighted average fraction of NACKs.

In one example, the CWS is increased to the next available value if after the gNB has determined how to treat missed ACK/NACK (i.e., DTX) for the CW adjust decision by updating H, the following condition for the weighted average fraction of NACK bits is met:

$$\frac{\sum_{i=1}^{m} \sum_{AN_j \in HARQ\_i} w_j^i \times f(AN_j^i)}{\sum_{i=1}^{m} |HARQ\_i|} > \eta \quad (0 <= \eta < 1),$$

wherein $w_j^i$ is the weight that corresponds to the j-th ACK/NACK bit $AN_j^i$ of HARQ_i (1<=i<=m), and $f(AN_j^i) = 1$ if $AN_j^i$ is NACK, and 0 otherwise.

In one example, the CWS is increased to the next available value if after the gNB has determined how to treat missed ACK/NACK (i.e., DTX) for the CW adjust decision by updating H, the following condition for the weighted average fraction of NACK bits is met:

$$\frac{\sum_{i=1}^{m} \sum_{AN_j \in HARQ\_i} w_j^i \times f(AN_j^i)}{\sum_{i=1}^{m} \sum_{AN_j \in HARQ\_i} w_j^i} > \eta \quad (0 <= \eta < 1),$$

wherein $w_j^i$ is the weight that corresponds to the j-th ACK/NACK bit $AN_j^i$ of HARQ_i (1<=i<=m), and $f(AN_j^i) = 1$ if $AN_j^i$ is NACK, and 0 otherwise.

Before the gNB performs the CW adjust decision, gNB needs to determine how "DTX" received in the set of HARQ-ACK feedback resources *H* may be utilized for CW adjust.

In one example, for the missed ACK/NACK or equivalently received DTX in each set of HARQ-ACK resources HARQ_i (1<=i<=m) that may be utilized in adjusting the CW, each DTX can be treated as NACK and the CW adjust rule(s) specified in the mentioned embodiments/examples/instances.

In one example, for the missed ACK/NACK or equivalently received DTX in each set of HARQ-ACK resources HARQ_i (1<=i<=m) that may be utilized in adjusting the CW, each DTX can be not counted and therefore not contributed into the CW adjust rule specified in the mentioned embodiments/examples/instances. In addition, DTX not counted and therefore not contributed into the CW adjust rule means that within the set of HARQ-ACK feedback resources for CW adjust, i.e., H = {HARQ_1, ... , HARQ_m}, the element(s) with value of "DTX" may be excluded from the set H for the CW adjust decision. For instance, if the i-th element of H is HARQ_i = {"DTX"}, then HARQ_i may be treated as an empty set for the CW adjust decision as detailed in the mentioned embodiments/examples/instances.

In one example, for the missed ACK/NACK or equivalently received DTX in each set of HARQ-ACK resources HARQ_i (1<=i<=m) that may be utilized in adjusting the CW, whether DTX is treated as NACK or DTX is not counted for CW adjust, when applying to the CW adjust rule specified in the mentioned embodiments/examples/instances, can be configurable and/or dynamically changed.

In one sub-example, this can be dependent on whether or not HARQ-ACK enhancements are supported such that the missing ACK/NACK (i.e., DTX) can be either triggered (either by gNB or UE) to report in a later COT or have multiple opportunities to be reported such as in other time/frequency resources; wherein the missing ACK/NACK can be not counted for CW adjustment if such enhancements are supported, otherwise the missing ACK/NACK can be treated as NACK.

After the gNB has determined how to treat missed ACK/NACK (i.e., DTX) for the CW adjust decision, the actual CW adjust rule can be as follows.

In one example, the weight can be equal for each HARQ-ACK bit, regardless of whether the HARQ-ACK bit corresponds to a TB, or the HARQ-ACK bit corresponds to a CBG. This means $w_j^i = 1$. In one sub-example, the mentioned embodiments/examples/instances can be applied to each other or in a combination of the mentioned embodiments/examples/instances.

In one example, for CBG-based TB, the weight for each CBG can scale with the number of actually transmitted CBGs of this TB.

In one sub-example, $w_j^i = \dfrac{1}{|HARQ\_i|}$ if $|HARQ_i| \neq 0$, and 0 otherwise; wherein the cardinality $|HARQ_i|$ has taken into account the potentially excluding of "DTX" as detailed in the mentioned examples. This sub-example means for CBG-based TB, the HARQ-ACK bit for each CBG of this TB is averaged by the number of actually transmitted CBGs in this TB.

In another sub-example, the mentioned embodiments/examples/instances can be applied to each other or in a combination of the mentioned embodiments/examples/instances.

In one example, the threshold fraction of weighted average fraction of NACK's $\eta$ can be 80%.

In one example, by the timing that gNB performs CW adjust (e.g., at NR-U slot n), the HARQ-ACK feedback resources that gNB uses for current CW adjust decision are determined and collected according to the mentioned embodiment/examples/instances. In one sub-example, the NACK'ed received TBs in this approach is computed among the selected HARQ-ACK feedback resources that may be utilized for current CW adjust decision.

In one instance, depending on the reception status of "DTX" in the set of HARQ-ACK feedback resources for the current CW adjust decision (i.e., H = {HARQ_1, ... , HARQ_m}); the CW size is also allowed to remain unchanged in addition to be allowed to be increased to the next available value or reset to the minimum value of the corresponding channel access priority class.

In one example, if the weighted average fraction of "DTX" among the set of HARQ-ACK feedbacks for the current CW adjust decision (i.e., set H) exceeds certain threshold $\tau$, the CW size can be remained.

In one sub-example, this mean if:

$$\frac{\sum_{i=1}^{m} \sum_{AN_j \in HARQ\_i} w_j^i \times f(AN_j^i)}{\sum_{i=1}^{m} |HARQ\_i|} > \tau$$

$(0 \leq \tau < 1)$, wherein $f(AN_j^i) = 1$ if $AN_j^i$ is 'DTX' and $f(AN_j^i) = 0$ otherwise, the CW size can be remained.

In another sub-example, this means if:

$$\frac{\sum_{i=1}^{m} \sum_{AN_j \in HARQ\_i} w_j^i \times f(AN_j^i)}{\sum_{i=1}^{m} \sum_{AN_j \in HARQ\_i} w_j^i} > \tau$$

$$( 0 <= \tau < 1),$$

wherein $f(AN_j^i) = 1$ if $AN_j^i$ is 'DTX' and $f(AN_j^i) = 0$ otherwise, the CW size can be remained.

In one example, if the fraction of received TBs with DTX among the TBs in the set of HARQ-ACK feedback resources for current CW adjust decision exceeds a certain threshold $\eta$ (0 <= $\eta$ < 1) the CW size can be remained.

In one sub-example, when a TB is grouped into multiple CBGs, the TB can be treated as DTX if the fraction of CBGs of this TB that are DTX exceeds another threshold $\eta 2$ ((0 <= $\eta 2$ < 1), or all the CBGs of this TB are DTX.

In another sub-example, when a TB is grouped into multiple CBGs, the TB can be treated as DTX if a reference CBG of the TB is DTX. For instance, the reference CBG can be the first CBG of the TB.

In another sub-example, when a TB is grouped into multiple CBGs, the TB can be treated as DTX if that multiple reference CBGs are chosen, and the faction of the CBGs within the reference CBGs that are DTX exceeds certain threshold $\eta$. For instance, the multiple reference CBGs can be chosen as the first two CBGs, and the threshold can be chosen as 49.999%.

In one example, allowing the CW to remain unchanged can be utilized when the UE(s) are subject to LBT when transmitting the HARQ-ACK feedbacks.

In one example, if the condition to allow the CW to remain unchanged is not met, the CW can be adjusted according to either the mentioned embodiments/examples/instances.

In one example, by the timing that gNB performs CW adjust (e.g., at NR-U slot n), the HARQ-ACK feedback resources that gNB uses for current CW adjust decision are determined and collected according to the mentioned embodiments/examples/instances. In one sub-example, the NACK'ed received TBs in this approach is computed among the selected HARQ-ACK feedback resources that may be utilized for current CW adjust decision.

In one example, if CW adjust during after the most recent baseline timing for CW adjust (e.g., during the CAT-4 LBT process) is supported, which is detailed in the mentioned embodiments/examples/instances, then additional enhancements to update the CW size and/or the backoff counter of the ongoing CAT-4 LBT can be allowed.

In one example, for a CW adjust action after the most recent baseline timing for CW adjust (e.g., during the CAT-4 LBT process), if the CW size is determined to be incremented according to the mentioned embodiments/examples/instances, then gNB can increment the CW size to the next available value, if the current CW size has not been incremented by the CW adjust decision at the beginning of the ongoing CAT-4 LBT process.

In one sub-example, a new backoff counter can be generated according to the newly incremented CW size, which is uniformly distributed between 0 and the new CW size, and can replace the current backoff counter. In another sub-example, a new backoff counter can be generated according to the newly incremented CW size as uniformly distributed between 0 and the new CW size, and subtracting the number of backoff slots have been counted down for the ongoing CAT-4 LBT process. For instance, the new backoff counter can be max(N1-N2,0), wherein N1 is uniformly distributed between 0 and the new CW size, while N2 is the number of backoff slots that have already been counted down for the ongoing CAT-4 LBT process.

In one example, for a CW adjust action after the most recent baseline timing for CW adjust (e.g., during the CAT-4 LBT process), if the CW size is determined to be reset to the minimum CW size according to the mentioned embodiments/examples/instances, then gNB can reset the CW size accordingly, and gNB can regenerate a temporary backoff counter according to the minimum CW size, which can replace the current backoff counter under certain scenario. For instance, if the newly generated temporary backoff counter is smaller than the current backoff counter, the newly generated temporary backoff counter can replace the current backoff counter and resume the CAT-4 LBT process; otherwise the CAT-4 LBT process can reuse the current backoff counter.

In one embodiment, CWS Adaptation for LBT of NR-U on Wideband Carrier is provided. In such embodiment, NR-U CWS adaptation rules when gNB performs multiple parallel LBT operations on a wideband NR-U carrier are detailed.

When the NR-U gNB operates on a wideband carrier, multiple parallel LBT operations can be performed over different frequency units simultaneously, such that more channel access opportunities can be achieved. When multiple parallel LBTs are performed, the multi-carrier LBT procedure of LTE-LAA can be used as baseline to apply to the parallel LBT over different frequency units of NR-U.

Specifically, type A LBT is where CAT-4 LBT is performed on different frequency units independently, with potential self-deferral to align transmissions over multiple frequency units. Furthermore, type A1 is when the back-off counter is generated independently for each frequency unit; and type A2 is when the same counter for all carriers as counter generated by carrier with largest CWS. In addition, type B LBT is where CAT-4 LBT is performed on a reference frequency unit, and single-shot LBT of PIFS duration is performed on the other frequency units right before the Cat-4 LBT completes.

Furthermore, type B1 is when a single CWS for all carriers, and CWS is updated according to HARQ-ACK across all carriers; while type B2 is when CWS is maintained independently for each carrier. Given the type A and type B LBT procedures, an important design consideration is the frequency unit over which the LBT is performed.

In one instance, referred to as a BWP-specific LBT, the LBT operations are performed over different bandwidth parts (BWPs) in a carrier in parallel, and HARQ-ACK feedbacks for each BWP can be TB-based or CBG-based. For instance, the BWP-specific LBT can be applied to when a gNB configures multiple BWPs to be the active BWP for different UEs, and that the gNB attempts BWP-specific LBT to UEs scheduled on these BWPs.

In another instance, this can be applied to when a gNB performs LBT over the up to 4 configured BWPs of a UE, such that the gNB can increase the probability to transmit to the UE, although a BWP switching indication may be needed if the LBT fails on current active DL BWP.

In one example, since LBT is always performed at least with the granularity of a BWP, both type-A LBT and type-B LBT can be applied in maintaining the CWS for the BWP-specific LBT; with the CWS adaptation rule obtained according to the mentioned embodiments.

In one example, referred to as sub-band LBT, the LBT operations can further be performed over a sub-band basis for NR-U. For instance, the sub-band can be of fixed 20 MHz, or a number of PRBs with close to 20 MHz bandwidth, for sub-7 GHz NR-U.

Despite sub-band LBT can increase the probability for the gNB to succeed in LBT over at least partial bandwidth of the carrier, it also needs a few design changes from existing NR specification.

In one example, the code-block allocation for a TB with sub-band LBT of NR-U can be enhanced from NR specification, such that code-blocks can be allocated with a granularity of the LBT sub-band in the frequency domain, and the frequency position of a CB can be aligned with sub-band boundary. In one sub-example, the CBs of a TB can be allocated first in increasing subcarriers of a sub-band, then in increasing order of symbols within the scheduled symbols of current transmission time interval (TTI), and then in increasing order of sub-bands within scheduled PRBs.

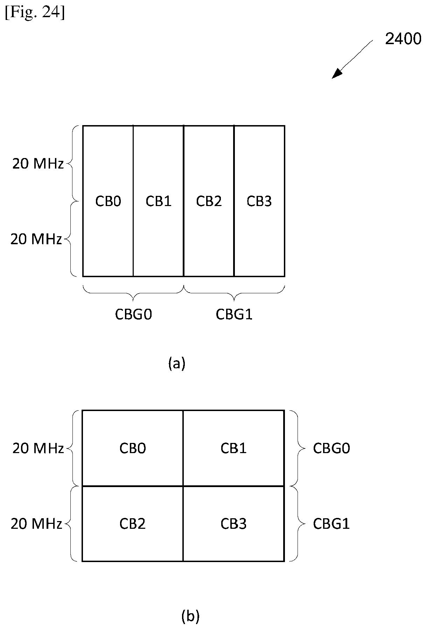

FIGURE 24 illustrates an example CB mapping 2400 according to embodiments of the present disclosure. The embodiment of the CB mapping 2400 illustrated in FIGURE 24 is for illustration only and could have the same or similar configuration. FIGURE 24 does not limit the scope of the present disclosure.

As illustrated in FIGURE 24, with sub-band LBT, where the scheduled bandwidth for a UE is 40 MHz, and CB0 and CB1 are grouped into CBG 0, while CB2 and CB3 are grouped into CBG 1. In (a) of FIGURE 24, the CB mapping follows that of NR specification, and both CBG0 and CBG1 may span over 40 MHz scheduled bandwidth, and if any of the sub-band LBT of 20 MHz fails, both CBG0 and CBG1 may be punctured and NACK may be reported.

As illustrated in (b) of FIGURE 24, the case with CB mapping is enhanced to be aligned with sub-band boundary, and in this case, CBG0 and CBG1 may occupy different sub-band of 20 MHz; and thus if any of the sub-band LBT passes, CBG0 and/or CBG1 may be ACK'ed.

In one example, the CBG allocation for the TB can be enhanced such that the CBG can be aligned with the sub-band boundary. In one sub-example, this can be achieved by the mentioned examples/embodiments/instances, as well as through properly choosing the number of configured CBGs for the TB.

In one example, the PDCCH or the control resource set (CORESET) allocation can also be enhanced to support the sub-band LBT, wherein the PDCCH or the CORESET can be allocated on a per sub-band basis, such that a UE may be able to detect the downlink control information if only one or few sub-bands within the scheduled bandwidth pass LBT. Without the enhancement for PDCCH allocation, the CORESET is configured per BWP in NR specification, thus DCI may be transmitted through only one or few sub-band that pass LBT, which can cause only partial DCI/PDCCH to be transmitted and thus UE is subject to PDCCH reception failure.

In one example, for sub-band LBT, the CBG-based transmission and HARQ-ACK feedback can be utilized, or at least prioritized over the TB-based transmission and HARQ-ACK feedback, when the LBT sub-band bandwidth is less than the scheduled bandwidth of the UE. This is because if TB-based transmission is utilized with LBT sub-band less than the scheduled bandwidth of the UE, then the TB may always be NACK'ed when one or more sub-band within the scheduled bandwidth of the UE fails the LBT, which offsets the benefits of sub-band LBT.

In one sub-example, this example can be extended to the scenario that for sub-band LBT, the CBG-based transmission and HARQ-ACK feedback may be utilized when the LBT sub-band bandwidth is less than the BWP bandwidth over which the sub-band LBT is performed.

In one example, for sub-band LBT, the NR-U gNB can also schedule UEs only on an LBT sub-band basis, and each sub-band can be configured to be either TB-based HARQ-ACK feedback, or CBG-based HARQ-ACK feedback.

In one sub-example, each UE can be scheduled on multiple LBT sub-bands; and when more than one of scheduled sub-band pass LBT, these sub-bands can be aggregated and acknowledged together, such as through dynamic or semi-static HARQ-ACK codebook, similar to when multiple carriers are scheduled for a UE (e.g., intra-band carrier aggregation). For instance, since each scheduled sub-band of the UE is configured to be acknowledged as TB-based feedback or CBG-based feedback, thus the ACK/NACK information for each scheduled sub-band can be determined by the gNB for adjusting and maintaining the CWS.

In another sub-example, each UE can be scheduled on multiple LBT sub-bands; and when more than one of scheduled sub-band pass LBT, these sub-bands can be acknowledged independently, such as through dynamic or semi-static HARQ-ACK codebook, similar to when multiple carriers are scheduled for a UE (e.g., intra-band carrier aggregation). For instance, since each scheduled sub-band of the UE is configured to be acknowledged as TB-based feedback or CBG-based feedback, thus the ACK/NACK information for each scheduled sub-band can be determined by the gNB for adjusting and maintaining the CWS.

In one example, one or multiple of the following sub-examples can be applied in maintaining the CWS for the sub-band LBT; with the CWS adaptation rule obtained according to the mentioned embodiments.

In one sub-example, the CAT-4 LBT is performed over every sub-band of the entire the carrier, and that the CWS for each sub-band is maintained independently. For instance, the CWS for a sub-band of the carrier can be maintained by choosing the reference time-domain and frequency-domain resources according to the mentioned embodiment, wherein the reference time-domain and frequency-domain resources are a determined set of slot(s)/mini-slot(s)/partial slot(s) of a determined previous DL transmission burst of the gNB on the current sub-band.

In another instance, the back-off counter can be generated independently for each sub-band, or the same back-off counter is used for all sub-bands which is the counter generated by the sub-band with largest CWS, or the same back-off counter is used for all sub-bands which is the largest back-off counter among all the back-off counters generated on each sub-band according to the CWS corresponding to the sub-band.

In one sub-example, the CAT-4 LBT is performed over every sub-band within a configured BWP, and that the CWS for each sub-band of the BWP is maintained independently.

For instance, the CWS for a sub-band of the carrier can be maintained by choosing the reference time-domain and frequency-domain resources according to the mentioned embodiment, wherein the reference time-domain and frequency-domain resources are a determined set of slot(s)/mini-slot(s)/partial slot(s) of a determined previous DL transmission burst of the gNB on the current sub-band.

In another instance, the back-off counter can be generated independently for each sub-band, or the same back-off counter is used for all sub-bands which is the counter generated by the sub-band with largest CWS, or the same back-off counter is used for all sub-bands which is the largest back-off counter among all the back-off counters generated on each sub-band according to the CWS corresponding to the sub-band.

In one sub-example, the CAT-4 LBT is performed over a reference sub-band of the entire the carrier, and a single-shot LBT (e.g., of PIFS duration) is performed on the other sub-bands of the carrier right before the Cat-4 LBT completes; and a single CWS for all sub-bands of the carrier is maintained.

For instance, the single CWS of all sub-bands of the carrier can be maintained by choosing the reference time-domain and frequency-domain resources according to the mentioned embodiment, wherein the reference time-domain and frequency-domain resources are a determined set of slot(s)/mini-slot(s)/partial slot(s) of a determined previous DL transmission burst of the gNB across all the sub-bands of the carrier.

In one sub-example, the CAT-4 LBT is performed over a reference sub-band of the entire the carrier, and a single-shot LBT (e.g., of PIFS duration) is performed on the other sub-bands of the carrier right before the Cat-4 LBT completes; and the CWS for each sub-band is maintained independently.

For instance, the CWS for a sub-band of the carrier can be maintained by choosing the reference time-domain and frequency-domain resources according to the mentioned embodiment, wherein the reference time-domain and frequency-domain resources are a determined set of slot(s)/mini-slot(s)/partial slot(s) of a determined previous DL transmission burst of the gNB on the current sub-band.

In another instance, the back-off counter can be generated independently for each sub-band, or the same back-off counter is used for all sub-bands which is the counter generated by the sub-band with largest CWS, or the same back-off counter is used for all sub-bands which is the largest back-off counter among all the back-off counters generated on each sub-band according to the CWS corresponding to the sub-band.

In one sub-example, CAT-4 LBT is performed over a reference sub-band of the sub-bands within a configured BWP, and a single-shot LBT (e.g., of PIFS duration) is performed on the other sub-bands of the BWP right before the Cat-4 LBT completes; and a single CWS for all sub-bands of the BWP is maintained.

For instance, the single CWS of all sub-bands of the BWP can be maintained by choosing the reference time-domain and frequency-domain resources according to the mentioned embodiment, wherein the reference time-domain and frequency-domain resources are a determined set of slot(s)/mini-slot(s)/partial slot(s) of a determined previous DL transmission burst of the gNB across all the sub-bands of the BWP.

In one sub-example, CAT-4 LBT is performed over a reference sub-band of the sub-bands within a configured BWP, and a single-shot LBT (e.g., of PIFS duration) is performed on the other sub-bands of the BWP right before the Cat-4 LBT completes; and the CWS for each sub-band of the BWP is maintained independently.

For instance, the CWS for a sub-band of the carrier can be maintained by choosing the reference time-domain and frequency-domain resources according to the mentioned embodiment, wherein the reference time-domain and frequency-domain resources are a determined set of slot(s)/mini-slot(s)/partial slot(s) of a determined previous DL transmission burst of the gNB on the current sub-band.

In another instance, the back-off counter can be generated independently for each sub-band, or the same back-off counter is used for all sub-bands which is the counter generated by the sub-band with largest CWS, or the same back-off counter is used for all sub-bands which is the largest back-off counter among all the back-off counters generated on each sub-band according to the CWS corresponding to the sub-band.

In one sub-example, CAT-4 LBT is performed over every sub-band of the entire the carrier, and a single CWS for all sub-bands of the carrier is maintained.

For instance, the single CWS of all sub-bands of the carrier can be maintained by choosing the reference time-domain and frequency-domain resources according to the mentioned embodiment, wherein the reference time-domain and frequency-domain resources are a determined set of slot(s)/mini-slot(s)/partial slot(s) of a determined previous DL transmission burst of the gNB across all the sub-bands of the carrier.

In another instance, the back-off counter can be generated independently for each sub-band, or the same back-off counter is used for all sub-bands which is the counter generated by the sub-band with largest CWS, or the same back-off counter is used for all sub-bands which is the largest back-off counter among all the back-off counters generated on each sub-band according to the CWS corresponding to the sub-band.

In one sub-example, CAT-4 LBT is performed over every sub-band of a configured BWP, and a single CWS is maintained for all sub-bands over the BWP.

For instance, the single CWS of all sub-bands of the carrier can be maintained by choosing the reference time-domain and frequency-domain resources according to the mentioned embodiment, wherein the reference time-domain and frequency-domain resources are a determined set of slot(s)/mini-slot(s)/partial slot(s) of a determined previous DL transmission burst of the gNB across all the sub-bands of the BWP.

In another instance, the back-off counter can be generated independently for each sub-band, or the same back-off counter is used for all sub-bands which is the counter generated by the sub-band with largest CWS, or the same back-off counter is used for all sub-bands which is the largest back-off counter among all the back-off counters generated on each sub-band according to the CWS corresponding to the sub-band.

In one sub-example, CAT-4 LBT is performed over every sub-band of the entire the carrier, and all the sub-bands of the carrier can be divided into more than one groups, with a single CWS for each group of sub-bands of the carrier is maintained.

For instance, the single CWS of all sub-bands of the carrier can be maintained by choosing the reference time-domain and frequency-domain resources according to the mentioned embodiment, wherein the reference time-domain and frequency-domain resources are a determined set of slot(s)/mini-slot(s)/partial slot(s) of a determined previous DL transmission burst of the gNB across all the sub-bands of the carrier.

In another instance, the back-off counter can be generated independently for each sub-band, or generated independently for each sub-band group, or the same back-off counter is used for all sub-bands which is the counter generated by the sub-band with largest CWS, or the same back-off counter is used for all sub-bands which is the largest back-off counter among all the back-off counters generated on each sub-band according to the CWS corresponding to the sub-band.

In one sub-example, the CAT-4 LBT is performed over a reference sub-band of the entire the carrier, and a single-shot LBT (e.g., of PIFS duration) is performed on the other sub-bands of the carrier right before the Cat-4 LBT completes; and all the sub-bands of the carrier can be divided into more than one groups, with a single CWS for each group of sub-bands of the carrier is maintained.

For instance, the CWS for a sub-band of the carrier can be maintained by choosing the reference time-domain and frequency-domain resources according to the mentioned embodiment, wherein the reference time-domain and frequency-domain resources are a determined set of slot(s)/mini-slot(s)/partial slot(s) of a determined previous DL transmission burst of the gNB on the current sub-band.

In another instance, the back-off counter can be generated independently for each sub-band, or generated independently for each sub-band group, or the same back-off counter is used for all sub-bands which is the counter generated by the sub-band with largest CWS, or the same back-off counter is used for all sub-bands which is the largest back-off counter among all the back-off counters generated on each sub-band according to the CWS corresponding to the sub-band.

In another sub-example, when the CWS is maintained for all sub-bands on a per-BWP basis according to one of the mentioned embodiments/examples/instances, it can be up to gNB implementation to decide the sub-band LBT type across different BWPs, and it is not precluded for gNB to use different sub-band LBT type on different BWPs according to one of the mentioned sub-examples. For instance, the gNB can configure each BWP to use the mentioned sub-examples, wherein for each BWP, a single CWS across the sub-bands within the BWP is maintained.

In another sub-example, it can be up to gNB implementation to decide the sub-band LBT type across different carriers, and it is not precluded for gNB to use different sub-band LBT type according to one of the mentioned embodiments/examples/instances on different carriers.

In one example, if the scheduled PDSCH of a UE spans over more than one sub-bands, then for a sub-band that overlaps with the TB (when TB-based HARQ-ACK is configured for the scheduled PDSCH) or the CBG (when CBG-based HARQ-ACK is configured for the scheduled PDSCH) of the scheduled PDSCH, the HARQ-ACK corresponding that TB or CBG can be utilized in maintaining and updating the CWS corresponding to that sub-band.

In one embodiment, CW adjustment based on dynamic thresholding is provided. In such embodiment, a contention window size could be adjusted based on a dynamic thresholding rule of HARQ feedback values corresponding to a selected set of reference time and frequency domain resources, wherein the selection of the set of reference time and frequency domain resources can be specified in the mentioned embodiment and the thresholding rule of HARQ feedback values can be specified in mentioned embodiment.

For example, $P\_1$ can be denoted as the threshold (e.g., a percentage) to increase CW to the next possible value specified in the mentioned embodiment.

In another example, $P\_2$ can be denoted as the that among the selected HARQ-ACK values corresponding to the selected set of reference time and frequency domain resources specified in the mentioned embodiment, the ratio (e.g., a percentage) between the number of expected to be received HARQ values up to the timing performing CW adjustment, and the total number of expected to be received HARQ values.

In one sub-example, when the CBG-based HARQ-ACK is used for a TB, the HARQ value can be counted on a per-TB basis. Thus, the number of HARQ-ACK value for a TB is counted as 1, and the number of HARQ-ACK value for a CBG-based TB is also counted as 1 for the whole TB.

In another sub-example, when the CBG-based HARQ-ACK is used for a TB, the HARQ value can be counted on a per-CBG basis; while the HARQ-ACK value for TB-based HARQ-ACK is counted on a per TB basis. Thus, the number of HARQ-ACK value for a TB with TB-based HARQ-ACK is counted as 1; the number of HARQ-ACK value for a TB with CBG-based HARQ-ACK is the number of actual CBGs in the TB.

In another example, $P\_2$ can be denoted as that among the selected HARQ-ACK values corresponding to the selected set of reference time and frequency domain resources specified in the mentioned embodiment, the ratio (e.g., a percentage) between the actual number of received HARQ values (e.g., ACK/NACK) up to the timing performing CW adjustment, and the total number of expected to be received HARQ values.

In one sub-example, when the CBG-based HARQ-ACK is used for a TB, the HARQ value can be counted on a per-TB basis. Thus, the number of HARQ-ACK value for a TB is counted as 1, and the number of HARQ-ACK value for a CBG-based TB is also counted as 1 for the whole TB.

In another sub-example, when the CBG-based HARQ-ACK is used for a TB, the HARQ value can be counted on a per-CBG basis; while the HARQ-ACK value for TB-based HARQ-ACK is counted on a per TB basis. Thus, the number of HARQ-ACK value for a TB with TB-based HARQ-ACK is counted as 1; the number of HARQ-ACK value for a TB with CBG-based HARQ-ACK is the number of actual CBGs in the TB.

In another example, $P\_2$ can be denoted as that among the selected HARQ-ACK values corresponding to the selected set of reference time and frequency domain resources specified in the mentioned embodiment, the ratio (e.g., a percentage) between the number of actual received HARQ values (ACK/NACK) up to the timing performing CW adjustment, and the total number of expected to be received HARQ values up to the timing performing CW adjustment.

In one sub-example, when the CBG-based HARQ-ACK is used for a TB, the HARQ value can be counted on a per-TB basis. Thus, the number of HARQ-ACK value for a TB is counted as 1, and the number of HARQ-ACK value for a CBG-based TB is also counted as 1 for the whole TB.

In another sub-example, when the CBG-based HARQ-ACK is used for a TB, the HARQ value can be counted on a per-CBG basis; while the HARQ-ACK value for TB-based HARQ-ACK is counted on a per TB basis. Thus, the number of HARQ-ACK value for a TB with TB-based HARQ-ACK is counted as 1; the number of HARQ-ACK value for a TB with CBG-based HARQ-ACK is the number of actual CBGs in the TB.

The ratio between $P\_1$ and $P\_2$ can be determined using at least one of the following approaches.

In one approach, $P\_1$ and $P\_2$ are predefined in the spec, e.g., $P\_1 = 80\%$ and $P\_2 = 100\%$, e.g., a gNB has to wait for the last expected slot for receiving HARQ values corresponding to the selected set of reference time and frequency domain resources in order to perform CW update.

In another approach, $P\_1$ and $P\_2$ can be dynamically determined, up to gNB's implementation, such that when $P\_1$ takes a smaller value, $P\_2$ takes a smaller value correspondingly.

In one example, $P\_1 = P\_2 \cdot c\_1$, where $c\_1$ is a predefined value, e.g., $c\_1 = 0.8$. For another example, $P\_1 = \max(P\_2 - c\_2, 0)$, where $c\_2$ is a predefined value, e.g., $c\_2 = 0.2$. For yet another example, $P\_1 = c\_3 \cdot P\_2 - c\_4$, where $c\_3$ and $c\_4$ are predefined values. For yet another example, $P\_1$ and $P\_2$ are selected from a predefined table, e.g., an illustration of such a table is in TABLE 1.

TABLE 1. Example of dynamic determination of P_1 and P_2.

| Index | P_2 | P_1 |
|---|---|---|
| 1 | 100% | 80% |
| 2 | 80% | 60% |
| 3 | 60% | 40% |
| 4 | 40% | 20% |
| 5 | ≤ 20% | 0% |

In yet another approach, the relation between P_1 and P_2 can be defined through a function such that P_2 is non-decreasing with respect to P_1; wherein the function can be defined by the specification.

The federal communications commission (FCC) defined unlicensed carriers to provide cost-free public access spectrum. Use of unlicensed carriers by a UE is allowed only under the provisions that the UE does not generate noticeable interference to communications in licensed carriers and that communications in unlicensed carriers are not protected from interference. For example, unlicensed carriers include the industrial, scientific and medical (ISM) carriers and the unlicensed national information infrastructure (UNII) carriers that can be used by IEEE 802.11 devices. It may be possible to deploy LTE radio access technology (RAT) on an unlicensed frequency spectrum, which is also known as LTE-Unlicensed or LTE-U or licensed assisted access (LAA).

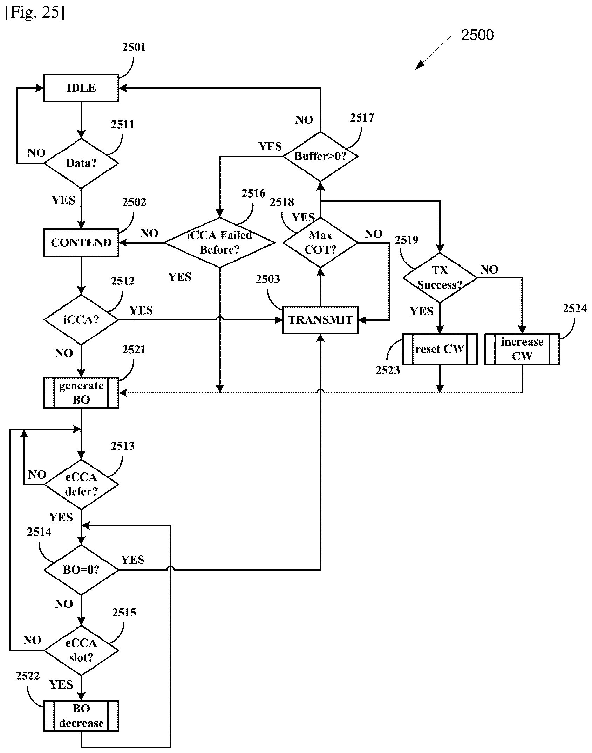

FIGURE 25 illustrates a flowchart 2500 for listen-before-talk based channel access procedure in LAA. The embodiment of the flowchart 2500 illustrated in FIGURE 25 is for illustration only and could have the same or similar configuration. FIGURE 25 does not limit the scope of the present disclosure.

In LTE specification, an eNB may transmit a transmission including physical downlink shared channel (PDSCH), or physical downlink control channel (PDCCH), or enhanced physical downlink control channel (EPDCCH) a carrier on which LAA Scell(s) transmission(s) are performed, after sensing the channel to be idle during the slot durations of a defer duration (112); and after the backoff counter (BO) is zero (114) in step 4. An example of this channel access procedure as illustrated in FIGURE 25 (e.g., it is also referred to as Cat4 LBT for this type of channel access procedure).

The backoff counter is adjusted by sensing the channel for additional slot duration(s) according to the steps below: set the counter as a random number (121) uniformly distributed between 0 and contention window (CW) value, and go to step 4; if the counter is greater than 0, and the eNB chooses to decrement the counter, decrease the counter by 1 (122); sense the channel for an additional slot duration, and if the additional slot duration is idle, go to step 4); else, go to step 5); if the counter is 0, stop; else, go to step 2), sense the channel until either a busy slot is detected within an additional defer duration or all the slots of the additional defer duration are detected to be idle; and if the channel is sensed to be idle during all the slot durations of the additional defer duration, go to step 4); else, go to step 5).

Moreover, the eNB maintains the contention window value and adjusts the contention window before setting a backoff counter, for each of the supported channel access priority class. The adjustment of the contention window value is based on the HARQ-ACK/NACK values corresponding to PDSCH transmission(s) in a reference subframe, wherein the reference subframe is the starting of the most recent transmission on the carrier made by the eNB, for which at least some HARQ-ACK/NACK feedback is expected to be available.

Also, in LTE specification, an eNB may transmit a transmission including discovery signal but not including PDSCH on a carrier on which LAA Scell(s) transmission(s) are performed immediately after sensing the channel to be idle for at least a sensing interval of 25 us and if the duration of the transmission is less than 1 ms. It's also referred to as Cat2 LBT for this type of channel access procedure.

In one NR scenario, a discovery signal may contain the signals and channels for cell acquisition and system information delivery, such that physical broadcast channel (PBCH), as well as PDCCH and the scheduled PDSCH (such as for at least one of remaining minimum system information (RMSI), other system information (OSI), or paging) can be part of a discovery signal. Meanwhile, multiple locations for synchronization signals and PBCH block (SS/PBCH block or SSB) are predefined within a unit of half frame, and each SSB can be quasi co-located (QCLed) with an associated physical downlink control channel (PDCCH) and physical downlink shared channel (PDSCH) of RMSI. Then, the transmission duration of the discovery signals may not be always confined within 1 ms in time domain, and the channel access procedure may need to be defined.

In another NR scenario, SSBs or PDSCH/PDCCH of RMSI/OSI/paging can be transmitted separately from DRS, and the transmission duration of SSBs or PDSCH/PDCCH of RMSI/OSI/paging may not be always confined within 1 ms, and there is no hybrid automatic repeat request - acknowledge/negative acknowledge (HARQ-ACK/NACK) feedback available for their transmissions, hence, the channel access may need to be defined.

In yet another NR scenario, there can be transmissions of other signals and channels on the uplink or sidelink without HARQ-ACK/NACK feedback as well, and the channel access may need to be defined as well.

The methods of the present disclosure can be at least applicable to a communication system operated subject to an LBT procedure, such as an unlicensed spectrum (e.g., NR unlicensed spectrum) or shared spectrum (e.g., NR shared spectrum, or NR vehicle-to-everything communication on sidelink).

The present disclosure focuses on a new type of contention window adjustment scheme when there is no associated HARQ-ACK/NACK available for the transmission. The following aspects are provided by the present disclosure: application scenario; adjustment approach for based on sensing at the transmitter, fixed/Maintained from previous value, based on reception of PRACH, based on RRM measurement, based on reception of Msg2 in 4-step random access, based on reception of the second message in 2-step random access, based on reception of Msg3 in 4-step random access, based on reception of Msg4 in 4-step random access, based on detection of DCI format carried by PDCCH, and based on the results of previous LBT.

The present disclosure provides several embodiments which can be used in conjunction or in combination with other embodiments or can operate as standalone schemes. The approaches, aspects, and examples in the present disclosure may not be limited to the application of NR unlicensed spectrum (NR-U) or vehicle-to-everything (NR-V2X) communication only.

In one embodiment, at least one approach or at least one example of an approach defined in the present disclosure can be applicable to at least one of the following scenarios.

A first scenario (e.g., denoted as S1 in the present disclosure) includes the transmission burst of a set of synchronization signals and physical broadcast channel blocks (SS/PBCH blocks).

A second scenario (e.g., denoted as S2 in the present disclosure) includes the transmission burst of a NR unlicensed spectrum discovery reference signal (NRU-DRS), wherein the NRU-DRS may contain at least a set of SS/PBCH blocks and the PDCCH and/or PDSCH of at least one of their associated RMSI or OSI or paging.

A third scenario (e.g., denoted as S3 in the present disclosure) includes the transmission burst of PDCCH and/or PDSCH of at least one of RMSI or OSI or paging, which are not included in the NRU-DRS.

A fourth scenario (e.g., denoted as S4 in the present disclosure) includes the transmission burst of physical ransom access channel (PRACH) in a 4-step random access procedure or the first step transmission in a 2-step random access procedure, wherein there is no HARQ-ACK/NACK associated to the transmission.

A fifth scenario (e.g., denoted as S5 in the present disclosure) includes the transmission burst of PUCCH and/or PUSCH wherein there is no feedback on indicating whether the transmission of PUCCH and/or PUSCH is successful or not. For one example, the transmission can be for Msg3 in a 4-step random access procedure. For another example, the transmission can be the second step transmission in a 2-step random access procedure.

A sixth scenario (e.g., denoted as S6 in the present disclosure) includes the transmission burst of Msg2 in a 4-step random access procedure.

A seventh scenario (e.g., denoted as S7 in the present disclosure) includes the transmission burst of Msg4 in a 4-step random access procedure.

An eighth scenario (e.g., denoted as S8 in the present disclosure) includes the transmission burst of sidelink signals and/or channels wherein there is no feedback on indicating whether the transmission of the sidelink signals and/or channels is successful or not.

A ninth scenario (e.g., denoted as S9 in the present disclosure) includes the transmission burst of multiplexed signal/channels from above scenarios (e.g., multiplexed S1, S2, and S3).

A tenth scenario (e.g., denoted as S10 in the present disclosure) includes the transmission of signal/channels from all above scenarios multiplexed with other PDSCH or PUSCH with feedback information.

In one embodiment, contention window size (CWS) adjustment approach is defined in the present disclosure, wherein the CWS is associated to an LBT procedure for generating a backoff counter determining the sensing duration.

In one approach, a CWS can be adjusted based on a sensing result performed at the transmitter side (e.g., a gNB in DL or a UE in UL or SL). An exemplified application scenario for the examples can be either one from the scenarios defined in the present disclosure, e.g., including at least one of S1, S2, S3, S4, S5, S6, S7, S8, S9, or S10.

In one example, a CWS can be increased to a selected value if the result of sensing, performed at the transmitter side, is higher than a predefined threshold TH_1. For instance, the selected value can be the next larger value from a predefined set, comparing to current value of CWS. For another instance, the threshold TH_1 can be scalable to the sensing bandwidth.

In one example, a CWS can be decreased to a selected value if the result of sensing, performed at the transmitter side, is lower than a predefined threshold TH_2. For instance, the selected value can be the next smaller value from a predefined set, comparing to current value of CWS. For another instance, the threshold TH_2 can be scalable to the sensing bandwidth. In one consideration, TH_2 can be the same as TH_1.

In one example, a CWS can be set to a selected value if the result of sensing, performed at the transmitter side, is lower than a predefined threshold TH_3. For instance, the selected value can be the smallest value from a predefined set. For another instance, the threshold TH_3 can be scalable to the sensing bandwidth. In one consideration, TH_3 can be the same as TH_1.

The result of sensing in the mentioned examples can include at least one from the following components. In one component, the result of sensing can include the energy detected on a target carrier over the whole carrier bandwidth. In another component, the result of sensing can include the energy detected on the bandwidth over which the associated signals/channels are transmitted. In yet another component, the result of sensing can include the energy detected on the bandwidth of bandwidth part determined or configured for the transmission of the associated signals/channels. In yet another component, the result of sensing can include a ratio between time-duration wherein energy detected above a predefined threshold and time-duration wherein energy detection is performed.

In one example, a CWS can be fixed and there is no CWS adjustment. An exemplified application scenario for the mentioned example can be either one from the scenarios defined in the present disclosure, e.g., including at least one of S1, S2, S3, S4, S5, S6, S7, S8, or S9.

In one example, there can be a fixed CWS for each of the application scenarios.

In another example, there can be a fixed CWS associated to each predefined maximum transmission duration (or maximum channel occupancy time), and some instances of this example are illustrated in TBALE 2 (e.g., the CWS is determined as the minimum value among all possible CWS for Cat4 LBT for each associated MCOT).

TABLE 2. Examples of fixed CWS based on maximum transmission duration.

| Maximum transmission duration | CWS |
|---|---|
| 2 ms | 3 |
| 3 ms | 7 |
| 8 ms or 10 ms | 15 |

In one example, a CWS can be adjusted based on the reception of PRACH transmission in the associated ROs configured by the gNB. An exemplified application scenario for the mentioned example can be either one from the scenarios defined in the present disclosure for DL broadcast transmission before the reception of PRACH, e.g., including at least one of S1, S2, S3, or the multiplexing of them (e.g., a special scenario of S9).

In one example, each actually transmitted SS/PBCH block can be associated with at least one RO monitored by the gNB for the transmission of Msg1, and if the gNB successfully detects Msg1 from at least one of the union of the configured RO(s) for all actually transmitted SS/PBCH blocks, the CWS can be reset to the smallest value from a predefined set.

In one example, each actually transmitted SS/PBCH block can be associated with at least one RO monitored by the gNB for the transmission of Msg1, and if the gNB successfully detects Msg1 from at least one of the configured RO(s) for each of the actually transmitted SS/PBCH blocks, the CWS can be reset to the smallest value from a predefined set.

In one example, each actually transmitted SS/PBCH block can be associated with at least one RO monitored by the gNB for the transmission of Msg1, and if the gNB cannot detect any Msg1 from all of the configured RO(s) for all actually transmitted SS/PBCH blocks, the CWS can be increased to the next larger value from a predefined set.

In one example, each actually transmitted SS/PBCH block can be associated with at least one RO monitored by the gNB for the transmission of Msg1, and if the gNB successfully detects Msg1 from at least one of the configured RO(s) associated to at least one SS/PBCH block from a set of reference SS/PBCH blocks, the CWS can be reset to the smallest value from a predefined set.

In one sub-example, the reference SS/PBCH blocks can be the first actually transmitted SS/PBCH block (e.g., actually transmitted SS/PBCH block with smallest SS/PBCH block index). In another sub-example, the reference SS/PBCH blocks can be the actually transmitted SS/PBCH blocks contained in the first slot for transmission (e.g., can be either 1 or 2 actually transmitted SS/PBCH blocks).

In one example, each actually transmitted SS/PBCH block can be associated with at least one RO monitored by the gNB for the transmission of Msg1, and if the gNB successfully detects Msg1 from at least one of the configured RO(s) associated to each of the SS/PBCH block from a set of reference SS/PBCH blocks, the CWS can be reset to the smallest value from a predefined set.

In one sub-example, the reference SS/PBCH blocks can be the first actually transmitted SS/PBCH block (e.g., actually transmitted SS/PBCH block with smallest SS/PBCH block index). In another sub-example, the reference SS/PBCH blocks can be the actually transmitted SS/PBCH blocks contained in the first slot for transmission (e.g., can be either 1 or 2 actually transmitted SS/PBCH blocks).

In one example, each actually transmitted SS/PBCH block can be associated with at least one RO monitored by the gNB for the transmission of Msg1, and if the gNB fails to detect any Msg1 from all the configured RO(s) associated to a set of reference SS/PBCH blocks, the CWS can be increased to the next larger value from a predefined set. In one sub-example, the reference SS/PBCH blocks can be the first actually transmitted SS/PBCH block (e.g., actually transmitted SS/PBCH block with smallest SS/PBCH block index). In another sub-example, the reference SS/PBCH blocks can be the actually transmitted SS/PBCH blocks contained in the first slot for transmission (e.g., can be either 1 or 2 actually transmitted SS/PBCH blocks).

In one example, each actually transmitted SS/PBCH block can be associated with at least one RO monitored by the gNB for the transmission of Msg1, and if the gNB fails to detect any Msg1 from a predefined percentage of all the configured RO(s) associated to a set of reference SS/PBCH blocks, the CWS can be increased to the next larger value from a predefined set. In one sub-example, the reference SS/PBCH blocks can be the first actually transmitted SS/PBCH block (e.g., actually transmitted SS/PBCH block with smallest SS/PBCH block index). In another sub-example, the reference SS/PBCH blocks can be the actually transmitted SS/PBCH blocks contained in the first slot for transmission (e.g., can be either 1 or 2 actually transmitted SS/PBCH blocks).

In one example, a CWS can be adjusted based on an RRM measurement report received from the receiver. An exemplified application scenario for the mentioned example can be either one from the scenarios defined in the present disclosure for DL transmission, e.g., including at least one of S1, S2, S3, S6, S7, or S9. Another exemplified application scenario for the mentioned example can be S8, wherein RRM measurement is supported for sidelink.

In one example, a CWS can be adjusted at least based on one of SS-RSRP, and/or SS-RSRQ in a measurement report. In one sub-example, the SS-RSRP, and/or SS-RSRQ can correspond to the first actually transmitted SS/PBCH block. In another sub-example, the SS-RSRP, and/or SS-RSRQ can correspond to the first actually transmitted SS/PBCH block what is also measured by the UE. In yet another sub-example, the SS-RSRP, and/or SS-RSRQ can correspond to all the actually transmitted SS/PBCH blocks. In yet another sub-example, the SS-RSRP, and/or SS-RSRQ can correspond to all the actually transmitted SS/PBCH blocks that are also measured by the UE (e.g., intersection between actually transmitted SS/PBCH blocks and measured SS/PBCH blocks).

In one example, a CWS can be adjusted at least based on one of CSI-RSRP and/or CSI-RSRQ. In one sub-example, the CSI-RSRP and/or CSI-RSRQ can be combined with SS-RSRP, and/or SS-RSRQ to adjust the CWS.

In one example, a CWS can be adjusted at least based on RSSI and/or channel occupancy reported by the UE.

In one example, a CWS can be adjusted at least based on a measurement quantity associated to a wake-up-signal (or COT indication signal), wherein the wake-up-signal is associated to the previous transmission after a successful LBT using the CWS.

The CWS adjustment method in the above examples can include at least one from the following components.

In one component, a CWS can be increased to a selected value if a measurement quantity is higher than a predefined threshold TH_A. For instance, the selected value can be the next larger value from a predefined set, comparing to current value of CWS.

In one component, a CWS can be decreased to a selected value if a measurement quantity is lower than a predefined threshold TH_B. For instance, the selected value can be the next smaller value from a predefined set, comparing to current value of CWS. In one consideration, TH_B can be the same as TH_A.

In one component, a CWS can be set to a selected value if a measurement quantity is lower than a predefined threshold TH_C. For instance, the selected value can be the smallest value from a predefined set. In one consideration, TH_C can be the same as TH_A.

In one example, a CWS can be adjusted based on the reception of Msg2 in a 4-step random access procedure. An exemplified application scenario for this approach can be the transmission of Msg1 in a 4-step random access, e.g., S4 as defined in the present disclosure.

In one example, a CWS can be adjusted based on the reception of the second message in a 2-step random access procedure. An exemplified application scenario for this approach can be the transmission of the first message in a 2-step random access, e.g., S4 as defined in the present disclosure.

In one example, a CWS can be adjusted based on the reception of Msg3 in a 4-step random access procedure. An exemplified application scenario for this approach can be the transmission of Msg2 in a 4-step random access, e.g., S6 as defined in the present disclosure.

In one example, a CWS can be adjusted based on the reception of Msg4 in a 4-step random access procedure. An exemplified application scenario for this approach can be the transmission of Msg3 in a 4-step random access, e.g., S5 as defined in the present disclosure.

In one example, a CWS can be adjusted based on the detection of DCI format carried in a PDCCH. An exemplified application scenario for this approach can be the transmission of Msg4 in a 4-step random access, e.g., S7 as defined in the present disclosure.

In one example, a CWS can be adjusted based on the previous LBT results. An exemplified application scenario for this approach can be the transmission of Msg1 in a 4-step random access or the transmission of the first message in a 2-step random access, e.g., S4 as defined in the present disclosure.

For instance, a CWS can be reduced to the next available smaller value from a predefined set (until reaching the smallest value) if all LBTs associated to the previous RO configuration period fail. For another instance, a CWS can be reduced to the smallest value within a predefined set if all LBTs associated to the previous RO configuration period fail. For yet another instance, a CWS can be reduced to the next available smaller value from a predefined set (until reaching the smallest value) if the previous K consecutive LBT attempts for RACH occasions associated to the UE have all failed, wherein K can be either a configured integer from higher layer or a predefined constant integer. For yet another instance, a CWS can be reduced to the smallest value within a predefined set if the previous K consecutive LBT attempts for RACH occasions associated to the UE have all failed, wherein K can be either a configured integer from higher layer or a predefined constant integer.

In one example, a CWS can be maintained the same from the previous CWS value and there is no CWS adjustment for the current transmission. An exemplified application scenario for the mentioned example can be at least one of S1, S2, S3, S4, S5, S6, S7, S8, or S9.

In one example, a CWS can be updated based on the HARQ ACK/NACK feedback of a set of reference time-frequency domain resources, wherein the set of reference time-frequency domain resources is determined to exclude the resources mapped for the transmission of at least one of SS/PBCH block, NRU-DRS, or broadcast channels (e.g., RMSI, OSI, paging). An exemplified application scenario for the mentioned example can be at least S10.

A special case of this approach is the set of reference time-frequency domain resources is an empty set (e.g., for a transmission burst with SS/PBCH block, NRU-DRS, or broadcast channels (e.g., RMSI, OSI, paging) only), then the CWS can be maintained the same from the previous CWS value and no CWS adjustment is performed for the current transmission.

In one example, the set of reference time-frequency domain resources can be the first slot (or subframe), containing at least one unicast PDSCH, of the most recent transmission burst on the carrier, for which at least one HARQ ACK/NACK feedback is expected to be available.

In one example, a CWS can be updated based on the HARQ ACK/NACK feedback of a set of reference time-frequency domain resources, wherein the CWS is increased to the next larger value from a predefined set if X% of the HARQ ACK/NACKs corresponding to the set of reference time-frequency domain resources are NACK.

In one example, X can be adaptable based on the contend of the transmission. If the transmission contains unicast signals/channels only, set $X = X\_1$; and if the transmission contains broadcast signals/channels (e.g., at least one of SS/PBCH block, NRU-DRS, RMSI, OSI, paging, RAR), set $X = X\_2$.

In one embodiment, the approach for CWS adjustment can be selected based on UE's RRC state. For example, the CWS can be adjusted according to one approach defined in the present disclosure for a UE in at least one of RRC_IDLE or RRC_INACTIVE state, and the CWS can be adjusted according to another example in the present disclosure for the UE in RRC_CONNECTED state.

In one sub-example, the CWS can be adjusted according to the mentioned examples (e.g., fixed and no adjustment) for a UE in at least one of RRC_IDLE or RRC_INACTIVE state, and the CWS can be adjusted according to the fourth approach in the present disclosure for the UE in RRC_CONNECTED state.

In one sub-example, the CWS can be adjusted according to the mentioned example for a UE in at least one of RRC_IDLE or RRC_INACTIVE state, and the CWS can be adjusted according to the mentioned example in the disclosure for the UE in RRC_CONNECTED state.

In one example, the CWS can be adjusted according to one approach defined in the present disclosure configured by network for a UE in RRC_CONNECTED state.

In one example, the backoff counter and/or the LBT type can be adaptable. In one consideration, the adaptation of backoff counter and/or the LBT type can be combined with the adjustment of CWS. In another consideration, the adaptation of backoff counter and/or the LBT type can be combined with a fixed/maintained CWS (e.g., CWS adjustment in the present disclosure).

In one example, which can be applied to an exemplified application scenario as the transmission of Msg1 in a 4-step random access or the transmission of the first message in a 2-step random access, e.g., S4 as defined in the present disclosure, a backoff counter can be decreased, e.g., by 1, (until achieving the minimum value in a predefined set, e.g., 0) for LBT(s) in a RO configuration period, if all the LBT attempt(s) in the previous RO configuration period fail. In one sub-example, this adaptation approach is applicable only when the configured periodicity for RO is large, e.g., larger than 10 ms.

In one example, which can be applied to an exemplified application scenario as the transmission of Msg1 in a 4-step random access or the transmission of the first message in a 2-step random access, e.g., S4 as defined in the present disclosure, a backoff counter can be decreased, e.g., by 1, (until achieving the minimum value in a predefined set, e.g., 0) for the LBT associated with a RO, if the LBT associated with the previous RO fails.

In one example, which can be applied to an exemplified application scenario as the transmission of Msg1 in a 4-step random access or the transmission of the first message in a 2-step random access, e.g., S4 as defined in the present disclosure, a backoff counter can be set as 0 for LBT(s) in a RO configuration period, if all the LBT attempt(s) in the previous RO configuration period fail. In one sub-example, this adaptation approach is applicable only when the configured periodicity for RO is large, e.g., larger than 10 ms.

In one example, which can be applied to an exemplified application scenario as the transmission of Msg1 in a 4-step random access or the transmission of the first message in a 2-step random access, e.g., S4 as defined in the present disclosure, a backoff counter can be set as 0 for the LBT associated with a RO, if the LBT associated with the previous RO fails.

In one example, which can be applied to an exemplified application scenario as the transmission of Msg1 in a 4-step random access or the transmission of the first message in a 2-step random access, e.g., S4 as defined in the present disclosure, the LBT can be adapted to a one-shot detection based LBT (e.g., CAT2 LBT) for a RO configuration period, if all the LBT attempt(s) in the previous RO configuration period fail. In one sub-example, this adaptation approach is applicable only when the configured periodicity for RO is large, e.g., larger than 10 ms.

In one example, which can be applied to an exemplified application scenario as the transmission of Msg1 in a 4-step random access or the transmission of the first message in a 2-step random access, e.g., S4 as defined in the present disclosure, the LBT can be adapted to a one-shot detection based LBT (e.g., CAT2 LBT) for the LBT associated with a RO, if the LBT associated with the previous RO fails.

FIGURE 26 illustrates a flowchart of a method 2600 for multi-beam operation according to embodiments of the present disclosure, as performed by a BS (e.g., 101-103 as illustrated in FIGURE 1). The embodiment of the method 2600 illustrated in FIGURE 26 is for illustration only and could have the same or similar configuration. FIGURE 26 does not limit the scope of the present disclosure.

As illustrated in FIGURE 26, the method 2600 begins at step 2602. In step 2602, the BS receives, from at least one user equipment (UE) via an uplink channel, a set of hybrid automatic repeat request-acknowledge/negative acknowledge (HARQ-ACK/NACK) responses corresponding to downlink transmissions transmitted to the at least one UE.

In one embodiment, the set of time and frequency domain resources comprise, based on the downlink transmission burst, at least one of a set of slots, a set of mini-slots, or a set of partial slots. In such embodiment, a slot of the set of slots is determined on a non-punctured PDSCH with a duration of 14 orthogonal frequency division multiplexing (OFDM) symbols; a mini-slot of the set of mini-slots is determined on a non-punctured PDSCH with a duration smaller than the duration of 14 OFDM symbols; and a partial slot of the set of partial slots is determined on a punctured PDSCH with a scheduled duration equal to or smaller than the duration of 14 OFDM symbols.

In one embodiment, the set of time and frequency domain resources is determined from a beginning of the downlink transmission burst that is previously transmitted until end of a set of first K >= 1 slots or mini-slots that includes at least one unicast PDSCH transmission of at least one scheduled UE in the downlink transmission burst that is previously transmitted.

In one embodiment, the BS of Claim 1, wherein the set of time and frequency domain resources is determined from a beginning of the downlink transmission burst that is previously transmitted until end of a set of first K >= 1 mini-slots or partial slots of the downlink transmission burst that includes unicast PDSCH transmissions.

In one embodiment, each ACK/NACK feedback bit of the set of HARQ-ACK/NACK feedback resources is provided to adjust the CWS in at most onetime instance.

Next, in step 2604, the BS determines a set of time and frequency domain resources that contains unicast physical downlink shared channel (PDSCH) transmissions in a downlink transmission burst that is previously transmitted to the at least one UE.

In one embodiment, the downlink transmission burst that is previously transmitted is a latest transmission burst when the BS performs a CWS adjust decision, and wherein the set of HARQ-ACK/NACK feedback resources corresponding to the determined set of time and frequency domain resources is expected to be available or have been received.

Subsequently, in step 2606, the BS adjusts a contention window size (CWS) based on a subset of the set of HARQ-ACK/NACK responses, the subset of HARQ-ACK/NACK responses corresponding to the unicast PDSCH transmissions on the determined set of time and frequency domain resources.

In one embodiment, the BS further configured to adjust the CWS based on: a fraction of NACK'ed transport block (TB), a TB with code block group (CBG) based HARQ-ACK being NACK'ed when a fraction of NACK'ed CBG exceeds a predetermined threshold; or a weighted average fraction of NACK bits. In such embodiment, the CWS is increased to a next available value when the fraction of NACK'ed CBG exceeds the predetermined threshold; and the CWS is reset to a minimum value when the fraction of NACK'ed CBG is less than or equal to the predetermined threshold.

In one embodiment, the predetermined threshold is a non-decreasing threshold in accordance with a ratio between a number of expected HARQ-ACK values received up to a timing in which the BS performs a CWS adjust operation and a number of HARQ-ACK values corresponding to the set of HARQ-ACK/NACK feedback resources to adjust the CWS.

Subsequently, in step 2608, the BS performs a listen-before-talk (LBT) operation with a configurable sensing duration based on the adjusted CWS.

Finally, in step 2610, the BS transmits via a downlink channel a downlink transmission based on the LBT operation.

In one embodiment, the BS is configured to maintain the CWS without adjustment based on a predetermined maximum channel occupancy time (COT) when the set of HARQ-ACK/NACK feedback resources is not available, and wherein the set of HARQ-ACK/NACK feedback resources corresponds to the set of time and frequency domain resources of the downlink transmission burst that is previously transmitted.

In one embodiment, the BS is configured to receive, from the at least one UE, a radio resource measurement (RRM) report including at least one of a signal strength indicator, a channel occupancy report, or a measurement report associated with a new radio unlicensed (NR-U) wake-up signal.

In one embodiment, the BS is configured to adjust the CWS based on the RRM report and a threshold associated with a measurement quantity.

FIGURE 27 is a block diagram illustrating the structure of a gNB according to an embodiment of the present disclosure.

The gNBs, eNBs or BSs described above may correspond to the gNB 2700. For example, the gNB 102 illustrated in FIGURE 2 may correspond to the gNB 2700.

Referring to the FIGURE 27, the gNB 2700 may include a processor 2710, a transceiver 2720 and a memory 2730. However, all of the illustrated components are not essential. The gNB 2700 may be implemented by more or less components than those illustrated in FIGURE 27. In addition, the processor 2710 and the transceiver 2720 and the memory 2730 may be implemented as a single chip according to another embodiment.

The aforementioned components will now be described in detail.

The processor 2710 may include one or more processors or other processing devices that control the proposed function, process, and/or method. Operation of the gNB 2700 may be implemented by the processor 2710.

The processor 2710 may determine a set of time and frequency domain resources that contains unicast physical downlink shared channel (PDSCH) transmissions in a downlink transmission burst that is previously transmitted to the at least one UE, adjust a contention window size (CWS) based on a subset of the set of HARQ-ACK/NACK responses, the subset of HARQ-ACK/NACK responses corresponding to the unicast PDSCH transmissions on the determined set of time and frequency domain resources and perform a listen-before-talk (LBT) operation with a configurable sensing duration based on the adjusted CWS.

In one embodiment, the processor 2710 may maintain the CWS without adjustment based on a predetermined maximum channel occupancy time (COT) when the set of HARQ-ACK/NACK feedback resources is not available, and wherein the set of HARQ-ACK/NACK feedback resources corresponds to the set of time and frequency domain resources of the downlink transmission burst that is previously transmitted.

The transceiver 2720 may include a RF transmitter for up-converting and amplifying a transmitted signal, and a RF receiver for down-converting a frequency of a received signal. However, according to another embodiment, the transceiver 2720 may be implemented by more or less components than those illustrated in component.

The transceiver 2720 may be connected to the processor 2710 and transmit and/or receive a signal. The signal may include control information and data. In addition, the transceiver 2720 may receive the signal through a wireless channel and output the signal to the processor 2710. The transceiver 2720 may transmit a signal output from the processor 2710 through the wireless channel.

In one embodiment, the transceiver 2720 may receive, from the at least one UE, a radio resource measurement (RRM) report including at least one of a signal strength indicator, a channel occupancy report, or a measurement report associated with a new radio unlicensed (NR-U) wake-up signal.

In one embodiment, the transceiver 2720 may receive, from at least one user equipment (UE) via an uplink channel, a set of hybrid automatic repeat request-acknowledge/negative acknowledge (HARQ-ACK/NACK) responses corresponding to downlink transmissions transmitted to the at least one UE. The transceiver 2720 may transmit, via a downlink channel, a downlink transmission based on the LBT operation.

The memory 2730 may store the control information or the data included in a signal obtained by the gNB 2700. The memory 2730 may be connected to the processor 2710 and store at least one instruction or a protocol or a parameter for the proposed function, process, and/or method. The memory 2730 may include read-only memory (ROM) and/or random access memory (RAM) and/or hard disk and/or CD-ROM and/or DVD and/or other storage devices.

FIGURE 28 is a block diagram illustrating the structure of a user equipment (UE) according to an embodiment of the present disclosure.

Referring to the FIGURE 28, the UE 2800 may include a processor 2810, a transceiver 2820 and a memory 2830. However, all of the illustrated components are not essential. The UE 2800 may be implemented by more or less components than those illustrated in FIGURE 28. In addition, the processor 2810 and the transceiver 2820 and the memory 2830 may be implemented as a single chip according to another embodiment.

The aforementioned components will now be described in detail.

The processor 2810 may include one or more processors or other processing devices that control the proposed function, process, and/or method. Operation of the UE 2800 may be implemented by the processor 2810.

In one embodiment, the processor 2810 may transmit, to a base station (BS) via an uplink channel, a set of hybrid automatic repeat request-acknowledge/negative acknowledge (HARQ-ACK/NACK) responses corresponding to downlink transmissions received from the BS, wherein a set of HARQ-ACK/NACK feedback resources corresponds to the downlink transmissions on a set of time and frequency domain resources based on a downlink transmission burst that is previously received from the BS. The processor 2810 may receive, from the BS via a downlink channel, the downlink transmissions based on an listen-before-talk (LBT) operation at the BS, wherein the LBT operation with a configurable sensing duration is determined based on a contention window size (CWS) that is adjusted based on the set of HARQ-ACK/NACK feedback resources.

The processor 2810 may detect a PDCCH on a configured control resource set. The processor 2810 determines a method for dividing CBs and a method for rate matching of a PDSCH according to the PDCCH. The processor 2810 may control the transceiver 2820 to receive the PDSCH according to the PDCCH. The processor 2810 may generate HARQ-ACK information according to the PDSCH. The processor 3310 may control the transceiver 2820 to transmit the HARQ-ACK information.

The transceiver 2820 may include a RF transmitter for up-converting and amplifying a transmitted signal, and a RF receiver for down-converting a frequency of a received signal. However, according to another embodiment, the transceiver 2820 may be implemented by more or less components than those illustrated in components.

The transceiver 2820 may be connected to the processor 2810 and transmit and/or receive a signal. The signal may include control information and data. In addition, the transceiver 2820 may receive the signal through a wireless channel and output the signal to the processor 2810. The transceiver 2820 may transmit a signal output from the processor 2810 through the wireless channel.

The memory 2830 may store the control information or the data included in a signal obtained by the UE 2800. The memory 2830 may be connected to the processor 2810 and store at least one instruction or a protocol or a parameter for the proposed function, process, and/or method. The memory 2830 may include read-only memory (ROM) and/or random access memory (RAM) and/or hard disk and/or CD-ROM and/or DVD and/or other storage devices.

**Claims**

1. A method of a base station, BS in a wireless communication system, the method comprising:

   determining reference time domain resources including at least one unicast physical downlink shared channel, PDSCH, transmission transmitted to a user equipment, UE;
   identifying a set of hybrid automatic repeat request-acknowledge/negative acknowledge, HARQ-ACK/NACK, feedbacks received from the UE for adjusting a contention window size, CWS, wherein the set of HARQ-ACK/NACK feedbacks corresponds to the at least one unicast PDSCH transmission in the reference time domain resources;
   adjusting a CWS based on the identified set of HARQ-ACK/NACK feedbacks;
   performing a channel access operation based on the adjusted CWS, and
   transmitting, via a downlink channel, a downlink transmission based on the channel access operation,
   wherein the reference time domain resources is determined from a beginning of a previous downlink transmission burst, until end of a set of first K slots or mini-slots including the at least one unicast PDSCH transmission in the previous downlink transmission burst.

2. The method of claim 1,

   wherein the previous downlink transmission burst is a latest transmission burst when the BS performs a CWS adjustment, and
   wherein at least some of HARQ-ACK/NACK feedback corresponding to the at least one unicast PDSCH transmission in the reference time domain resources of the previous downlink transmission burst is available when the BS performs the CWS adjustment.

3. The method of claim 1, wherein the adjusting of the CWS comprises adjusting the CWS based on a fraction of NACK'ed transport block, TB, in the identified set of HARQ-ACK/NACK feedbacks.

4. The method of claim 3, wherein the adjusting of the CWS comprises:

   increasing the CWS to a next available value for a channel access priority class, when the fraction of NACK'ed TB in the identified set of HARQ-ACK/NACK feedbacks exceeds a predetermined threshold; and

resetting the CWS to a minimum value for the channel access priority class, when the fraction of NACK'ed TB in the identified set of HARQ-ACK/NACK feedbacks does not exceed the predetermined threshold.

5. The method of claim 1, wherein the adjusting of the CWS comprises maintaining the CWS as a current value when the set of HARQ-ACK/NACK feedbacks is not available.

6. A base station, BS, in a wireless communication system, the BS comprising:

a transceiver; and
at least one processor operably connected to the transceiver, the at least one processor configured to:

determine reference time domain resources including at least one unicast physical downlink shared channel, PDSCH, transmission transmitted to a user equipment, UE;
identify a set of hybrid automatic repeat request-acknowledge/negative acknowledge, HARQ-ACK/NACK, feedbacks received from the UE for adjusting a contention window size, CWS, wherein the set of HARQ-ACK/NACK feedbacks corresponding to the at least one unicast PDSCH transmission in the reference time domain resources,
adjust a CWS based on the identified set of HARQ-ACK/NACK feedbacks;
perform a channel access operation based on the adjusted CWS; and
control the transceiver to transmit, via a downlink channel, a downlink transmission based on the channel access operation,
wherein the reference time domain resources is determined from a beginning of a previous downlink transmission burst, until end of a set of first K slots or mini-slots including the at least one unicast PDSCH transmission in the previous downlink transmission burst.

7. The BS of claim 6,

wherein the previous downlink transmission burst is a latest transmission burst when the BS performs a CWS adjustment, and
wherein at least some of HARQ-ACK/NACK feedback corresponding to the at least one unicast PDSCH transmission in the reference time domain resources of the previous downlink transmission burst is available when the BS performs the CWS adjustment.

8. The BS of claim 6, wherein the at least one processor is configured to adjust the CWS based on a fraction of NACK'ed transport block, TB, in the identified set of HARQ-ACK/NACK feedbacks.

9. The BS of claim 8, wherein the at least one processor is configured to:

increase the CWS to a next available value for a channel access priority class, when the fraction of NACK'ed TB in the identified set of HARQ-ACK/NACK feedbacks exceeds a predetermined threshold; and
reset the CWS to a minimum value for the channel access priority class, when the fraction of NACK'ed TB in the identified set of HARQ-ACK/NACK feedbacks does not exceed the predetermined threshold.

10. The BS of claim 6, wherein the at least one processor is configured to maintain the CWS as a current value when the set of HARQ-ACK/NACK feedbacks is not available.

**Patentansprüche**

1. Verfahren einer Basisstation, BS, in einem drahtlosen Kommunikationssystem, wobei das Verfahren umfasst:

Bestimmen von Referenzzeitbereichsressourcen, die mindestens eine an ein Benutzergerät, UE, übertragene Übertragung eines gemeinsam genutzten physikalischen Unicast-Downlink-Kanals, PDSCH, aufweisen;
Identifizieren eines Satzes von hybriden automatischen Wiederholungsanforderungs-Bestätigungs-/Negativbestätigungs-, HARQ-ACK/NACK,-Rückmeldungen, die von dem UE empfangen wurden, um eine Konfliktfenstergröße, CWS, einzustellen, wobei der Satz von HARQ-ACK/NACK-Rückmeldungen der mindestens einen Unicast-PDSCH-Übertragung in den Referenzzeitbereichsressourcen entspricht;
Einstellen eines CWS auf der Grundlage der identifizierten HARQ-ACK/NACK-Rückmeldungen;

Durchführen eines Kanalzugriffsvorgangs auf der Grundlage der eingestellten CWS, und

Übertragen einer Downlink-Übertragung über einen Downlink-Kanal auf der Grundlage der Kanalzugriffsoperation,

wobei die Referenzzeitbereichsressourcen von einem Beginn eines vorherigen Downlink-Übertragungsbursts bis zum Ende eines Satzes von ersten K-Schlitzen oder Minischlitzen bestimmt werden, die die mindestens eine Unicast-PDSCH-Übertragung in dem vorherigen Downlink-Übertragungsburst enthalten.

2. Verfahren nach Anspruch 1,

wobei der vorherige Downlink-Übertragungsburst ein letzter Übertragungsburst ist, wenn die BS eine CWS-Einstellung durchführt, und

wobei mindestens ein Teil der HARQ-ACK/NACK-Rückmeldungen, die der mindestens einen Unicast-PDSCH-Übertragung in den Referenzzeitbereichsressourcen des vorherigen Downlink-Übertragungsbursts entsprechen, verfügbar ist, wenn die BS die CWS-Einstellung durchführt.

3. Verfahren nach Anspruch 1, wobei das Einstellen des CWS das Einstellen des CWS auf der Grundlage eines Anteils von NACK'ten Transportblöcken, TB, im identifizierten Satz von HARQ-ACK/NACK-Rückmeldungen umfasst.

4. Verfahren nach Anspruch 3, wobei das Einstellen des CWS umfasst:

Erhöhen des CWS auf einen nächsten verfügbaren Wert für eine Kanalzugriffsprioritätsklasse, wenn der Anteil von NACK'ten TB in dem identifizierten Satz von HARQ-ACK/NACK-Rückmeldungen einen vorbestimmten Schwellenwert überschreitet; und

Zurücksetzen des CWS auf einen Mindestwert für die Kanalzugangs-Prioritätsklasse, wenn der Anteil der NACK'ten TB im identifizierten Satz von HARQ-ACK/NACK-Rückmeldungen den vorgegebenen Schwellenwert nicht überschreitet.

5. Verfahren nach Anspruch 1, wobei das Einstellen des CWS das Beibehalten des CWS als aktuellen Wert umfasst, wenn der Satz von HARQ-ACK/NACK-Rückmeldungen nicht verfügbar ist.

6. Basisstation, BS, in einem drahtlosen Kommunikationssystem, wobei die BS Folgendes umfasst:

einen Transceiver; und

mindestens einen Prozessor, der mit dem Transceiver betriebsfähig verbunden ist, wobei der mindestens eine Prozessor konfiguriert ist zum:

Bestimmen von Referenzzeitbereichsressourcen, die mindestens eine an ein Benutzergerät, UE, übertragene Übertragung eines gemeinsam genutzten physikalischen Unicast-Downlink-Kanals, PDSCH, aufweisen;

Identifizieren eines Satzes von hybriden automatischen Wiederholungsanforderungs-Bestätigungs-/Negativbestätigungs-, HARQ-ACK/NACK,-Rückmeldungen, die von dem UE empfangen werden, um eine Konfliktfenstergröße, CWS, einzustellen, wobei der Satz von HARQ-ACK/NACK-Rückmeldungen der mindestens einen Unicast-PDSCH-Übertragung in den Referenzzeitbereichsressourcen entspricht,

Einstellen eines CWS auf der Grundlage der identifizierten HARQ-ACK/NACK-Rückmeldungen;

Durchführen einer Kanalzugriffsoperation auf der Grundlage des eingestellten CWS; und

Steuern des Transceivers, um über einen Downlink-Kanal eine Downlink-Übertragung auf der Grundlage des Kanalzugriffsvorgangs zu übertragen,

wobei die Referenzzeitbereichsressourcen von einem Beginn eines vorherigen Downlink-Übertragungsbursts bis zum Ende eines Satzes von ersten K-Schlitzen oder Minischlitzen bestimmt werden, die die mindestens eine Unicast-PDSCH-Übertragung in dem vorherigen Downlink-Übertragungsburst enthalten.

7. BS nach Anspruch 6,

wobei der vorherige Downlink-Übertragungsburst ein letzter Übertragungsburst ist, wenn die BS eine CWS-Einstellung durchführt, und

wobei mindestens ein Teil der HARQ-ACK/NACK-Rückmeldungen, die der mindestens einen Unicast-PDSCH-Übertragung in den Referenzzeitbereichsressourcen des vorherigen Downlink-Übertragungsbursts entsprechen, verfügbar ist, wenn die BS die CWS-Einstellung durchführt.

**8.** BS nach Anspruch 6, wobei der mindestens eine Prozessor so konfiguriert ist, dass er das CWS auf der Grundlage eines Anteils von NACK'ten Transportblöcken, TB, im identifizierten Satz von HARQ-ACK/NACK-Rückmeldungen einstellt.

**9.** BS nach Anspruch 8, wobei der mindestens eine Prozessor konfiguriert ist, um:

das CWS auf einen nächsten verfügbaren Wert für eine Kanalzugriffsprioritätsklasse zu erhöhen, wenn der Anteil der NACK'ten TB im identifizierten Satz von HARQ-ACK/NACK-Rückmeldungen einen vorbestimmten Schwellenwert überschreitet; und
das CWS auf einen Mindestwert für die Kanalzugriffsprioritätsklasse zurückzusetzen, wenn der Anteil der NACK'ten TB im identifizierten Satz von HARQ-ACK/NACK-Rückmeldungen den vorgegebenen Schwellenwert nicht überschreitet.

**10.** BS nach Anspruch 6, wobei der mindestens eine Prozessor so konfiguriert ist, dass er das CWS als aktuellen Wert beibehält, wenn der Satz von HARQ-ACK/NACK-Rückmeldungen nicht verfügbar ist.

**Revendications**

**1.** Procédé d'une station de base, BS dans un système de communication sans fil, le procédé comprenant :

déterminer des ressources de domaine temporel de référence comprenant au moins une transmission de canal physique partagé de liaison descendante, PDSCH, unicast transmise à un équipement utilisateur, UE ;
identifier un ensemble de retours de demande de répétition automatique hybride, d'accusé de réception et d'accusé négatif, HARQ-ACK/NACK, reçus depuis l'UE pour ajuster une taille de fenêtre de contention, CWS, l'ensemble de retours HARQ-ACK/NACK correspondant à au moins une transmission PDSCH unicast dans les ressources de domaine temporel de référence ;
ajuster un CWS sur la base de l'ensemble identifié de retours HARQ-ACK/NACK ;
effectuer une opération d'accès au canal sur la base du CWS ajusté, et
émettre, via un canal de liaison descendante, une transmission de liaison descendante sur la base de l'opération d'accès au canal,
dans lequel les ressources temporelles de référence sont déterminées à partir du début d'une salve de transmission de liaison descendante précédente, jusqu'à la fin d'un ensemble de premiers K créneaux ou mini-créneaux comprenant au moins une transmission PDSCH unicast dans la salve de transmission de liaison descendante précédente.

**2.** Procédé de la revendication 1,

dans lequel la précédente salve de transmission de liaison descendante est une dernière salve de transmission lorsque la station de base effectue un ajustement CWS, et
dans lequel au moins une partie de retours HARQ-ACK/NACK correspondant à l'au moins une transmission PDSCH unicast dans les ressources de domaine temporel de référence de la salve de transmission descendante précédente est disponible lorsque la station de base effectue l'ajustement CWS.

**3.** Procédé de la revendication 1, dans lequel l'ajustement du CWS comprend l'ajustement du CWS sur la base d'une fraction de bloc de transport, TB, NACKés, dans l'ensemble identifié de retours HARQ-ACK/NACK.

**4.** Procédé de la revendication 3, dans lequel l'ajustement du CWS comprend :

augmenter le CWS à une valeur disponible suivante pour une classe de priorité d'accès au canal, lorsque la fraction de TB NACKés dans l'ensemble identifié de retours HARQ-ACK/NACK dépasse un seuil prédéterminé ; et
réinitialiser le CWS à une valeur minimale pour la classe de priorité d'accès au canal, lorsque la fraction de TB NACKés dans l'ensemble identifié de retours HARQ-ACK/NACK ne dépasse pas le seuil prédéterminé.

**5.** Procédé de la revendication 1, dans lequel l'ajustement du CWS comprend le maintien du CWS en tant que valeur courante lorsque l'ensemble de retours HARQ-ACK/NACK n'est pas disponible.

**6.** Station de base, BS, dans un système de communication sans fil, la BS comprenant :

un émetteur-récepteur ; et
au moins un processeur connecté de manière opérationnelle à l'émetteur-récepteur, l'au moins un processeur configuré pour :

déterminer les ressources de domaine temporel de référence comprenant au moins une transmission de canal physique partagé de liaison descendante, PDSCH, unicast transmise à un équipement utilisateur, UE ;
identifier un ensemble de retours de demandes de répétition automatiques hybrides, HARQ-ACK/NACK, reçus depuis l'UE pour ajuster une taille de fenêtre de contention, CWS, l'ensemble de retours HARQ-ACK/NACK correspondant à l'au moins une transmission PDSCH unicast dans les ressources de domaine temporel de référence,
ajuster un CWS sur la base de l'ensemble identifié de retours HARQ-ACK/NACK ;
effectuer une opération d'accès au canal sur la base du CWS ajusté ; et
commander l'émetteur-récepteur pour qu'il émette, via un canal de liaison descendante, une transmission de liaison descendante sur la base de l'opération d'accès au canal,
les ressources temporelles de référence étant déterminées à partir du début d'une salve de transmission de liaison descendante précédente, jusqu'à la fin d'un ensemble de premiers K créneaux ou mini-créneaux comprenant au moins une transmission PDSCH unicast dans la salve de transmission de liaison descendante précédente.

**7.** BS de la revendication 6,

dans laquelle la précédente salve de transmission de liaison descendante est une dernière salve de transmission lorsque la station de base effectue un ajustement CWS, et
dans laquelle au moins une partie de retours HARQ-ACK/NACK correspondant à l'au moins une transmission PDSCH unicast dans les ressources de domaine temporel de référence de la salve de transmission descendante précédente est disponible lorsque la station de base effectue l'ajustement CWS.

**8.** Station de base de la revendication 6, dans laquelle l'au moins un processeur est configuré pour ajuster le CWS sur la base d'une fraction de bloc de transport, TB, NACKés dans l'ensemble identifié de retours HARQ-ACK/NACK.

**9.** BS de la revendication 8, dans laquelle l'au moins un processeur est configuré pour:

augmenter le CWS à une prochaine valeur disponible pour la classe de priorité d'accès au canal, lorsque la fraction de TB NACKés dans l'ensemble identifié de retours HARQ-ACK/NACK dépasse un seuil prédéterminé ; et
réinitialiser le CWS à une valeur minimale pour la classe de priorité d'accès au canal, lorsque la fraction de TB NACKés dans l'ensemble identifié de retours HARQ-ACK/NACK ne dépasse pas le seuil prédéterminé.

**10.** Station de base de la revendication 6, dans laquelle l'au moins un processeur est configuré pour maintenir le CWS comme valeur courante lorsque l'ensemble de retours HARQ-ACK/NACK n'est pas disponible.

[Fig. 1]

[Fig. 2]

[Fig. 3]

[Fig. 4A]

Fig. 4A — 400: A transmitter block diagram. Data In → channel coding and modulation (405) → Serial-to-parallel (410) → Size N IFFT (415) → Parallel-to-serial (420) → Add Cyclic Prefix (425) → up-converter (430) → To Channel.

EP 3 831 153 B1

[Fig. 4B]

[Fig. 5]

500

510 Information Bits → Encoder 520 → Modulator 530 → RE mapping 550 (1:M 540) → IFFT 560 → M:1 570 → Filter 580 → Transmitted 590

555 Control of transmission BW

[Fig. 6]

600

610 Received → Filter 620 → RE demapping 630 → FFT 640 (M:1 650) → Demodulator 660 → Decoder 670 → Information Bits 680

635 Control of Reception BW

[Fig. 7]

700

710 Data Bits → Encoder 720 → Modulator 730 → RE mapping 750 (DFT 740) → IFFT 760 → Filter 770 → Transmitted 780

755 Control of transmission BW

[Fig. 8]

800

810
Received

820 Filter

FFT 830

RE mapping 840

IDFT 850

860 Demodulator

870 Decoder

880 Data Bits

Control of Reception BW    845

[Fig. 9]

900

freq

930a
A data frame/subframe for Slice 1

920a

960a

A data frame/subframe for Slice 2
970a

A data frame/subframe for Slice 2
970b

910

CTRL    960b    time

freq

A data frame/subframe for Slice 1

920b    930b

A data frame /subframe for Slice 2

950

960c    970c    time

[Fig. 10]

1000

| n−5 | n−4 | n−3 | n−2 | n−1 | n | n+1 | n+2 |

DL transmission burst

Reference time-domain and
frequency domain resource with K = 2

[Fig. 11]

EP 3 831 153 B1

[Fig. 12]

1200

| UE1 n-2 | n-1 | n | n+1 | n+2 |
| UE2 | | | | |

UE1 n-3 / UE2
UE1 n-4 / UE2
n-5

DL transmission burst

Reference time-domain and frequency domain resource with K = 2

54

[Fig. 13]

[Fig. 14]

CW adjust timing

| UE0 n-5 | UE1 n-4 UE2 | UE1 n-3 UE2 | n-2 | n-1 | n | n+1 | n+2 |

DL transmission burst

Reference time-domain and frequency domain resource with M = 2

Slot with HARQ-ACK feedback

1400

EP 3 831 153 B1

[Fig. 15]

[Fig. 16]

[Fig. 17]

1700

HARQ-ACK
codebook of UE2 | A/N |

HARQ-ACK
codebook of UE1 | A/N |

K1 = 4      K1 = 3

| n-5 | n-4 | n-3 | n-2 | n-1 | n |

Reference slot

NR-U slot n

Transmission for UE1

Transmission for UE2

HARQ-ACK slot

[Fig. 18]

[Fig. 19]

1900

CW adjust timing

CW adjust timing

A/N (UE0)

A/N (UE1)

K1 = 3    K1 = 6    K1 = 5    K1 = 6    K1 = 5    K1 = 4

n-5    n-4    n-3    n-2    n-1    n    n+1    n-2    n+3    n+4    n+5    n+6

UE0    UE1    UE1

DL transmission burst

Reference time-domain and frequency domain resources

HARQ-ACK codebook

A/N

[Fig. 20]

2000

A/N (UE1)

A/N (UE0)   A/N (UE2)   A/N (UE3)

CW adjust timing

K1 = 4    K1 = 3    K1 = 3    K1 = 3

| UE0 | UE1 | n−3 | n−2 | n−1 | n | n+1 | n+2 |
| n−5 | | | | | | | |
| UE0 | UE0 | UE2 | UE3 | | | | |

DL transmission burst

Reference time-domain and frequency domain resources

HARQ-ACK feedback

LBT passes

LBT fails

EP 3 831 153 B1

[Fig. 21]

2100

A/N (UE1)

A/N (UE0)    A/N (UE2)    A/N (UE3)    CW adjust timing

K1 = 4       K1 = 3       K1 = 3       K1 = 3

| UE0 n-5 UE0 | UE1 n-4 UE0 | n-3 UE2 | n-2 UE3 | n-1 | n | n+1 | n+2 |

DL transmission burst

Reference time-domain and frequency domain resources

HARQ-ACK feedback

LBT passes

LBT fails

HARQ-ACK feedback utilized for CW adjust

EP 3 831 153 B1

63

[Fig. 22]

[Fig. 23]

EP 3 831 153 B1

[Fig. 24]

2400

20 MHz

| CB0 | CB1 | CB2 | CB3 |

20 MHz

CBG0  CBG1

(a)

20 MHz

| CB0 | CB1 |

CBG0

20 MHz

| CB2 | CB3 |

CBG1

(b)

[Fig. 25]

2500

[Fig. 26]

2600

START

Receiving a set of HARQ-ACK/NACK responses
2602

Determining a set of time and frequency domain resources
2604

Adjusting a CWS
2606

Performing an LBT operation
2608

Transmitting a downlink transmission based on the LBT operation
2610

[Fig. 27]

2700

2710

Processor

2720

Transceiver

2730

Memory

[Fig. 28]

<u>2800</u>

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018160447 A1
- US 2018242360 A1
- WO 2017164647 A1

**Non-patent literature cited in the description**

- E-UTRA, Physical channels and modulation;. *3GPP TS 36.211 v13.2.0*
- E-UTRA, Multiplexing and Channel coding;. *3GPP TS 36.212 v13.2.0*
- E-UTRA, Physical Layer Procedures;. *3GPP TS 36.213 v13.2.1*
- E-UTRA, Medium Access Control (MAC) protocol specification;. *3GPP TS 36.321 v13.2.0*
- E-UTRA, Radio Resource Control (RRC) Protocol Specification. *3GPP TS 36.331 v13.2.0*
- 5 GHz RLAN; Harmonized Standard covering the essential requirements of article 3.2 of Directive 2014/53/EU. *ETSI EN 301 893 V2.1.1*
- Multiple-Gigabit/s radio equipment operating in the 60 GHz band; Harmonized Standard covering the essential requirements of article 3.2 of Directive 2014/53/EU. *ETSI EN 302 567 V2.1.1,* 2017
- Study on Licensed-Assisted Access to Unlicensed Spectrum. *3GPP TR 36.889 V13.0.0,* 2017
- Evolved Universal Terrestrial Radio Access (E-UTRA); Physical layer procedures (Release 15). *3GPP TS 36.213 V15.0.0,* 2015
- Part 11: Wireless LAN Medium Access Control (MAC) and Physical Layer (PHY) Specifications. *IEEE Std 802.11-2016,* 2017
- NR, Physical channels and modulation;. *3GPP TS 38.211 v15.2.0,* 2016
- NR, Multiplexing and Channel coding;. *3GPP TS 38.212 v15.2.0*
- NR, Physical Layer Procedures for Control;. *3GPP TS 38.213 v15.2.0*
- NR, Physical Layer Procedures For Data;. *3GPP TS 38.214 v15.2.0*
- NR, Medium Access Control (MAC) protocol specification;. *3GPP TS 38.321 v15.2.0*
- NR, Radio Resource Control (RRC) Protocol Specification. *3GPP TS 38.331 v15.2.0*